(19) Europäisches Patentamt
European Patent Office
Office européen des brevets

(11) **EP 3 500 411 B1**

(12) **EUROPÄISCHE PATENTSCHRIFT**

(45) Veröffentlichungstag und Bekanntmachung des Hinweises auf die Patenterteilung:
**28.12.2022 Patentblatt 2022/52**

(21) Anmeldenummer: **17751387.6**

(22) Anmeldetag: **10.08.2017**

(51) Internationale Patentklassifikation (IPC):
**B27B 5/32** *(2006.01)*    **B23D 61/02** *(2006.01)*
**B24B 45/00** *(2006.01)*    **B24D 5/16** *(2006.01)*
**B23B 51/04** *(2006.01)*

(52) Gemeinsame Patentklassifikation (CPC):
**B27B 5/32; B23B 51/0473; B23D 61/025; B24B 45/00; B24B 45/006; B24D 5/16**

(86) Internationale Anmeldenummer:
**PCT/EP2017/070310**

(87) Internationale Veröffentlichungsnummer:
**WO 2018/036830 (01.03.2018 Gazette 2018/09)**

(54) **WERKZEUGEINRICHTUNG FÜR EINE HANDWERKZEUGMASCHINE**

TOOL DEVICE FOR A HAND-HELD POWER TOOL

DISPOSITIF OUTIL POUR UNE MACHINE-OUTIL PORTATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2016 DE 102016215702**
         **31.01.2017 DE 102017201501**
         **07.08.2017 DE 102017213669**

(43) Veröffentlichungstag der Anmeldung:
**26.06.2019 Patentblatt 2019/26**

(60) Teilanmeldung:
**22208733.0**

(73) Patentinhaber: **Robert Bosch GmbH**
**70442 Stuttgart (DE)**

(72) Erfinder:
• **FELLMANN, Willi**
**4500 Solothurn / Schweiz (CH)**
• **LUESCHER, Bruno**
**4800 Zofingen (CH)**
• **ZURBRUEGG, Andreas**
**4573 Lohn-Ammansegg (CH)**
• **DI NICOLANTONIO, Aldo**
**4565 Recherswil (CH)**
• **SINZIG, Bruno**
**4538 Oberbipp (CH)**
• **QUEBATTE, Laurent**
**3930 Visp (CH)**
• **SCHULLER, Marcus**
**72135 Dettenhausen (DE)**

(56) Entgegenhaltungen:
EP-A1- 1 745 889    EP-A2- 0 904 896
WO-A1-2013/113523    CA-A- 1 015 246
GB-A- 2 336 991    US-A- 4 657 428
US-A- 5 799 558    US-A- 6 035 758
US-A1- 2005 085 174

EP 3 500 411 B1

**Beschreibung**

Die Erfindung bezieht sich auf eine Werkzeugeinrichtung nach dem Oberbegriff des Anspruchs 1.

Stand der Technik

In der DE 29605728 U1 ist eine ein Sägeblatt umfassendes Schneidblatt mit einer zentralen Befestigungsöffnung zur formschlüssigen Befestigung an einer Abtriebswelle, die um ihre Längsachse oszillierend angetrieben ist, offenbart, wobei das Schneidblatt kreisförmig ausgebildet ist.

Die EP1745889 offenbart eine Werkzeugeinrichtung nach dem Oberbegriff des Anspruchs 1.

Offenbarung der Erfindung

Der Erfindung liegt die Aufgabe zugrunde, mit einfachen konstruktiven Maßnahmen eine Werkzeugeinrichtung für eine Werkzeugmaschine, insbesondere eine Handwerkzeugmaschine, zu verbessern.

Die Aufgabe wird gelöst mit einer Werkzeugeinrichtung mit der Kombination von Merkmalen des Anspruchs 1.

Die Erfindung wird nachfolgend vorwiegend am Beispiel einer Werkzeugeinrichtung, insbesondere zur Verwendung, mit einer, insbesondere handgeführten, Werkzeugmaschine, insbesondere mit einer Handwerkzeugmaschine, beschrieben, die eine sich um eine Abtriebsachse rotatorisch bewegende Werkzeugaufnahmeeinrichtung aufweist. Diese Einschränkung der Darstellung ist aber nicht als Einschränkung der Anwendungsmöglichkeiten einer solchen Werkzeugeinrichtung zu verstehen. Eine Werkzeugmaschine, insbesondere eine Handwerkzeugmaschine, ist eine Vorrichtung, die einen oder mehrere Antriebsmotoren und ggf. eine oder mehrere Getriebeeinrichtungen sowie wenigstens eine Abtriebswelle mit einer - im geometrischen Sinn zu verstehenden - Abtriebsachse aufweist. An der Abtriebswelle ist mittelbar oder unmittelbar die Werkzeugaufnahmeeinrichtung angeordnet. Die Werkzeugaufnahmeeinrichtung ist das Bauteil bzw. sind die Bauteile, mit dem bzw. denen das Drehmoment auf das Werkzeug, insbesondere die Werkzeugeinrichtung, aufgebracht wird, wobei die

Werkzeugaufnahmeeinrichtung das Werkzeug vorzugsweise, insbesondere bei einer handgeführten Werkzeugmaschine, insbesondere einer Handwerkzeugmaschine, auch festhält, so dass das Werkzeug, insbesondere die Werkzeugeinrichtung, allein durch die Werkzeugaufnahmeeinrichtung sowohl festgehalten als auch mit dem Abtriebsdrehmoment beaufschlagt wird. Der Begriff Abtriebsdrehmoment und die mit Abtrieb gebildeten Begriffe meinen das von der Werkzeugmaschine, insbesondere von der Handwerkzeugmaschine, auf das Werkzeug, insbesondere auf die Werkzeugeinrichtung, übertragene Moment bzw. die entsprechenden Bauteile der Werkzeugmaschine, insbesondere der Handwerkzeugmaschine, der Begriff Antriebsmoment bezeichnet das vom Werkzeug, insbesondere von der Werkzeugeinrichtung, aufgenommene Moment.

Eine handgeführte Werkzeugmaschine, insbesondere Handwerkzeugmaschine, weist eine Trageeinrichtung, insbesondere Griffe und dergleichen auf, mit denen die Werkzeugmaschine, insbesondere die Handwerkzeugmaschine, mit dem daran befestigten Werkzeug, insbesondere der daran befestigten Werkzeugeinrichtung, von einer Bedienungskraft geführt werden kann. Typischerweise sind handgeführte Werkzeugmaschinen, insbesondere Handwerkzeugmaschinen, mit einem elektrischen Antriebsmotor versehen, es sind aber auch andere Bauarten, wie z. B. mittels eines Verbrennungsmotors, hydraulisch oder pneumatisch betriebene Werkzeugmaschinen, insbesondere Handwerkzeugmaschinen, bekannt und im Rahmen der Erfindung verwendbar.

Die Werkzeugmaschine, insbesondere die Handwerkzeugmaschine, ermöglicht es Werkzeugeinrichtungen, insbesondere für hochdrehende Anwendungen, werkzeuglos aufzunehmen bzw. zu spannen, sodass vorzugsweise kein zusätzliches, insbesondere abnehmbares, Sicherungselement, wie beispielsweise eine Befestigungsschraube, zur Befestigung der Werkzeugeinrichtung an der Werkzeugaufnahmeeinrichtung erforderlich ist. Die Werkzeugmaschine, insbesondere die Handwerkzeugmaschine, ist dazu vorgesehen, eine Werkzeugeinrichtung auf besonders schnelle und komfortable Weise mit der Werkzeugaufnahmeeinrichtung zu verbinden bzw. zu spannen, sodass ein Bediener bei einer derartigen Werkzeugmaschine einen besonders schnellen Werkzeugwechsel vornehmen kann. Auch ist dadurch die Verwendung eines Zusatzwerkzeugs, wie beispielsweise eines Schraubenschlüssels oder eines Schraubenziehers, nicht mehr erforderlich um die Werkzeugeinrichtung mit der Werkzeugmaschine zu verbinden.

Die erfindungsgemäße Werkzeugeinrichtung ist besonders vorteilhaft, da der zumindest eine Klemmflügel derart ausgestaltet ist, dass die Werkzeugeinrichtung schwingungsminimierend mit der Handwerkzeugmaschine betreibbar ist, sodass sich der zumindest eine in radialer Richtung erstreckende Klemmflügel nicht nur eine besonders vorteilhafte Übertragung des Drehmoments von der Abtriebswelle der Werkzeugaufnahmeeinrichtung auf die Werkzeugeinrichtung bewirkt, sondern auch eine besonders schwingungsminimiertes Betreiben der Werkzeugeinrichtung in einem eingespannten Zustand mit der Werkzeugaufnahmeeinrichtung ermöglicht. Hierdurch können beim Betreiben der Werkzeugeinrichtung entstehende Schwingungen besser aufgenommen werden, welche mit zunehmender Vorspannung im eingeklemmten Zustand verstärkt werden kann.

Die Anschlusseinrichtung ist dazu vorgesehen, mit herkömmlichen sich auf dem Markt befindlichen Werkzeugmaschinen, insbesondere Handwerkzeugmaschinen, lösbar verbunden zu werden, sodass eine Rückwärtskompatibilität der Werkzeugeinrichtung gewährleistet wird. Die Rückwärtskompatibilität wird dabei insbesondere dadurch erreicht, dass die ersten Begrenzungskanten des Klemmflügels auf einem ersten Begrenzungskreis liegen der einem minimalen Durchmesser von herkömmlichen sich auf dem Markt befindlichen Werkzeugeinrichtungen entspricht, sodass eine Zentrierung der Werkzeugeinrichtung an herkömmlichen Werkzeugaufnahmeeinrichtungen ermöglicht wird.

Unter "lösbar" soll in diesem Zusammenhang insbesondere "zerstörungsfrei trennbar" verstanden werden.

Die erste Begrenzungskante kann die Ausnehmung der Werkzeugeinrichtung zumindest abschnittsweise begrenzen. Insbesondere der zumindest eine Klemmflügel kann die Ausnehmung der Werkzeugeinrichtung zumindest abschnittsweise begrenzen.

Die Werkzeugeinrichtung kann sich im Wesentlichen in einer Ebene orthogonal der Werkzeugdrehachse erstrecken.

Insbesondere kann die Ausnehmung dazu vorgesehen sein, die Werkzeugaufnahmeeinrichtung der Handwerkzeugmaschine zumindest teilweise, insbesondere vollständig, zu umgeben.

Unter "umgeben" soll in diesem Zusammenhang insbesondere in zumindest einer Ebene, wie beispielsweise einer Orthogonalebene der Werkzeugdrehachse oder der Abtriebsachse, um 360° um eine Abtriebswelle, insbesondere um eine Werkzeugaufnahmeeinrichtung, vorzugsweise um eine Klemmeinrichtung und eine Mitnahmeeinrichtung der Werkzeugaufnahme, der Werkzeugmaschine, insbesondere der Handwerkzeugmaschine, umgeben, verstanden werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Orthogonalebene" soll in diesem Zusammenhang eine Ebene verstanden werden, die aus zumindest zwei orthogonal zur Werkzeugdrehachse weisenden Richtungen aufgespannt wird. Dabei sollen geringfügige Abweichungen, wie beispielsweise einer Winkelabweichung von bis zu 5%, insbesondere bis zu 4%, vorzugsweise bis zu 3%, bevorzugt bis zu 2%, besonders bevorzugt bis zu 1%, der Richtungen, die die Orthogonalebene aufspannen, im Rahmen eines technischen Wissens und Könnens eines Fachmanns liegen.

Der Begriff "Abtriebsachse" und "Werkzeugdrehachse" bezeichnet dabei die fiktive geometrische Drehachse der Werkzeugmaschine, insbesondere der Abtriebswelle der Handwerkzeugmaschine, bzw. der Werkzeugeinrichtung.

Bevorzugt kann der Klemmflügel ein radiales Formschlusselement aufweisen, welches insbesondere dazu vorgesehen ist, eine formschlüssige Verbindung zum Antrieb der Werkzeugeinrichtung in Umfangsrichtung um die Werkzeugdrehachse der Werkzeugeinrichtung zu bilden. Der Klemmflügel kann dabei als ein radialer Fortsatz oder als eine radiale Zunge ausgeführt sein.

Insbesondere kann die Ausnehmung, insbesondere eine Ausnehmungskontur der Ausnehmung, eine n-zählige, insbesondere eine 2-zählige, vorzugsweise eine 4-zählige, bevorzugt eine 6-zählige, Drehsymmetrie aufweisen, wobei n eine natürliche Zahl von zwei bis unendlich ist.

Unter einer "Drehsymmetrie" soll in diesem Zusammenhang eine Symmetrie einer Ausnehmungskontur einer Ausnehmung einer Werkzeugeinrichtung verstanden werden, welche, insbesondere bei einer relativen Drehung der Werkzeugeinrichtung um einen Mittelpunkt bzw. um eine Werkzeugdrehachse der Werkzeugeinrichtung gegenüber einer feststehenden Kopie der Werkzeugeinrichtung um 360°, n-mal aufeinander abgebildet wird bzw. zur Deckung kommt. Die Zahl n soll dabei eine natürliche Zahl in einem Bereich von zwei bis unendlich sein.

Die Unteransprüche geben zweckmäßige Weiterbildungen der erfindungsgemäßen Werkzeugeinrichtung an.

Es kann zweckmäßig sein, dass der Klemmflügel als ein Federflügel ausgebildet ist. Der Klemmflügel kann dazu vorgesehen sein, die Werkzeugeinrichtung mit der Werkzeugaufnahmeeinrichtung derart zu verbinden, dass die Werkzeugeinrichtung Belastungen in axialer Richtung der Werkzeugdrehachse zumindest teilweise durch eine elastische Verformung bzw. eine elastische Biegung aufnimmt. Bevorzugt weist der Klemmflügel eine maximale einer Federrate entsprechende Richtgröße D von weniger als 400.000 N/mm auf. Bevorzugt weist der Klemmflügel eine maximale einer Federrate entsprechende Richtgröße D mit einem Wert aus einem Wertebereich von 10.000 N/mm bis 350.000 N/mm auf. Die maximale einer Federrate entsprechende Richtgröße D des Klemmflügels ergibt sich vorzugsweise aus folgendem Zusammenhang: F = Dz, wobei

$$D = \frac{3EI}{L^3}, \; z = \frac{FL^3}{3EI}, \; I = \frac{bh^3}{12}$$

mit L als, insbesondere gemittelte, maximale Erstreckung des Klemmflügels zwischen dem ersten Begrenzungskreis und dem zweiten Begrenzungskreis, mit b als maximaler tangentialer Erstreckung des Klemmflügels entlang des zweiten Begrenzungskreises und mit h als maximaler Materialstärke des Klemmflügels entlang der axialen Richtung der Werkzeugdrehachse a. Die maximale Materialstärke h kann vorzugsweise einem Wert aus einem Wertebereich von 0,5 mm bis 1,6 mm entsprechen.

Dadurch kann die Werkzeugaufnahmeeinrichtung den Klemmflügel zuverlässig befestigen, indem der Klemmflügel zumindest abschnittsweise in axialer Richtung der Werkzeugdrehachse derart eingespannt wird, dass der Klemmflügel in axialer Richtung elastisch biegbar ausgeführt ist.

Erfindungsgemäß ist der Klemmflügel gegenüber jeder durch eine radiale und eine axiale Richtung der Werkzeugdrehachse aufgespannten Symmetrieebene asymmetrisch, insbesondere nicht spiegelsymmetrisch.

Unter "jeder Symmetrieebene" soll in diesem Zusammenhang jede Symmetrieebene verstanden werden, welche sich durch jede eine Radialachse bildende radiale Richtung gegenüber der Werkzeugdrehachse in Umfangsrichtung um die Werkzeugdrehachse in einem Winkelbereich um bis zu 30°, insbesondere um bis zu 60°, vorzugsweise um bis zu 90°, bevorzugt um bis zu 120°, weiter bevorzugt um bis zu 180°, besonders bevorzugt um bis zu 360°, ergibt.

Dadurch kann insbesondere eine mehrseitige Verbindbarkeit der Werkzeugeinrichtung mit der Werkzeugaufnahmeeinrichtung vermieden werden, sodass die Werkzeugeinrichtung lediglich von einer zur Aufnahme mit der Werkzeugaufnahmeeinrichtung vorgesehenen Aufnahmeseite mit der Werkzeugaufnahmeeinrichtung verbunden ist. Dadurch kann gemäß dem Prinzip von Poka Yoke eine sofortige Fehlaufdeckung und/oder Fehlervermeidung erreicht werden, indem ein Bediener ein Feedback darüber erhält, wenn die Werkzeugeinrichtung mit einer nicht zur Aufnahme mit der Werkzeugaufnahmeeinrichtung vorgesehenen Seite mit der Werkzeugaufnahmeeinrichtung verbunden wird.

Die Werkzeugeinrichtung ist besonders vorteilhaft, da der zumindest eine Klemmflügel derart ausgestaltet ist, dass die Werkzeugeinrichtung schwingungsminimierend mit der Handwerkzeugmaschine betreibbar ist, sodass eine asymmetrische Ausführung des zumindest einen Klemmflügels nicht nur eine besonders vorteilhafte Übertragung des Drehmoments von der Abtriebswelle der Werkzeugaufnahmeeinrichtung auf die Werkzeugeinrichtung bewirkt, sondern auch ein besonders schwingungsminimiertes Betreiben der Werkzeugeinrichtung in einem eingespannten Zustand mit der Werkzeugaufnahmeeinrichtung ermöglicht. Hierdurch können beim Betreiben der Werkzeugeinrichtung entstehende Schwingungen besser gedämpft werden und mit zunehmender Vorspannung im eingeklemmten Zustand verstärkt werden.

Weiterhin kann durch die asymmetrische Ausführung des zumindest einen Klemmflügels eine Drehrichtung der Werkzeugeinrichtung um die Werkzeugdrehachse festgelegt sein, wodurch sichergestellt werden kann, dass die Werkzeugeinrichtung nur in einer einzigen Drehrichtung zur Bearbeitung eines Werkstücks oder einer Werkstückanordnung speziell ausgestaltet ist.

Ferner kann es zweckmäßig sein, dass ein Querschnitt des Klemmflügels, welcher sich durch eine Orthogonalebene der Werkzeugdrehachse ergibt, im Wesentlichen trapezförmig ausgebildet ist, insbesondere im Wesentlichen rechteckförmig ausgebildet ist. Vorzugsweise kann der Querschnitt kegelförmig oder kegelstumpfförmig ausgebildet sein.

Es kann zweckmäßig sein, dass der erste Begrenzungskreis zumindest eine zwischen zwei benachbarten ersten Begrenzungskanten liegende fiktive Projektionskante aufweist, welche auf dem ersten Begrenzungskreis liegt und in Umfangsrichtung um die Werkzeugdrehachse konzentrisch zu dem ersten Begrenzungskreis verläuft.

Die Erstreckung in Umfangsrichtung zumindest einer, insbesondere jeder, Projektionskante kann, insbesondere um bis zu 50 %, vorzugsweise um bis zu 40 %, weiter vorzugsweise um bis zu 30 %, bevorzugt um bis zu 20%, besonders bevorzugt um bis zu 10 %, weiter bevorzugt um bis zu 5 %, kleiner sein als die Erstreckung einer zu der Projektionskante benachbarten ersten Begrenzungskante.

Die erste Begrenzungskante kann eine, insbesondere maximale, Erstreckung eines Klemmflügels in Umfangsrichtung entlang der ersten Begrenzungskante umschreiben. Die erste Begrenzungskante kann dazu vorgesehen sein, eine Zentrierung, insbesondere eine Grobzentrierung bzw. eine Vorzentrierung, der Werkzeugeinrichtung mit einer Werkzeugaufnahmevorrichtung in einem die Werkzeugeinrichtung mit der Werkzeugaufnahmevorrichtung zu verbindendem Zustand zu ermöglichen.

Die zumindest eine, insbesondere jede, Projektionskante weist eine maximale Erstreckung in Umfangsrichtung auf, welche kleiner ist als eine maximale radiale Erstreckung der Werkzeugaufnahmeeinrichtung, insbesondere einer Klemmeinrichtung bei werkzeuglosen Werkzeugaufnahmeeinrichtungen oder einem Gewindebolzen bei herkömmlichen Werkzeugaufnahmeeinrichtungen, sodass die Werkzeugeinrichtung, welche die Werkzeugaufnahmeeinrichtung in radialer Richtung umgibt, vorzentriert werden kann.

Bevorzugt ist eine Gesamterstreckung in Umfangsrichtung aller auf dem ersten Begrenzungskreis liegenden ersten Begrenzungskanten größer, insbesondere um bis zu 100%, insbesondere um bis zu 80%, vorzugsweise um bis zu 60%, bevorzugt um bis zu 40%, besonders bevorzugt um bis zu 20%, weiter bevorzugt um bis zu 10%, größer als eine Gesamterstreckung in Umfangsrichtung aller auf dem ersten Begrenzungskreis liegenden Projektionskanten. Vorzugsweise ist eine, insbesondere jede, Projektionskante kleiner als eine zu der Projektionskante benachbarte erste Begrenzungskante.

Die Anschlusseinrichtung kann im einfachsten Fall als eine Ausnehmung ausgebildet sein, sodass die Mitnahmeeinrichtung und die Klemmeinrichtung in oder durch die Ausnehmung greifen können. Bevorzugt greifen/greift zumindest die Mitnahmeeinrichtung und/oder die Klemmeinrichtung der Werkzeugaufnahmeeinrichtung in einem an der Werkzeugaufnahmeeinrichtung angeordneten Zustand zumindest teilweise in die Ausnehmung der Anschlusseinrichtung der Werkzeugeinrichtung ein. Die Mitnahmeeinrichtung ist vorzugsweise dazu vorgesehen, zumindest teilweise an einem die Ausnehmung der Anschlusseinrichtung der Werkzeugeinrichtung begrenzenden Randbereich der Werkzeugeinrichtung anzuliegen, insbesondere in einem an der Werkzeugaufnahmeeinrichtung angeordneten Zustand der Werkzeugeinrichtung.

Alternativ kann es zweckmäßig sein, dass die Anschlusseinrichtung durch einen, insbesondere scheibenförmigen oder gekröpften, Trägerflansch gebildet ist. Hierdurch kann die Anschlusseinrichtung besonders stabil ausgeführt sein, indem der Trägerflansch ein Metallwerkstoff, wie beispielsweise ein Stahlwerkstoff, enthält oder daraus besteht. Somit kann der Trägerflansch besonders vorteilhaft robust mit der Werkzeugaufnahmeeinrichtung der Werkzeugmaschine, insbesondere der Handwerkzeugmaschine, verbunden und zuverlässig mit der Werkzeugaufnahmeeinrichtung gehalten werden. Zudem erlaubt der Trägerflansch den Einsatz von weniger Material, da der Trägerflansch dünn ausgeführt werden kann und dennoch den Anforderungen an die Werkzeugeinrichtung standhält.

Der gekröpfte Trägerflansch ist dazu vorgesehen, mit einer Klemmeinrichtung der Werkzeugaufnahmeeinrichtung aufgenommen zu werden, wodurch eine besonders schnelle und komfortable Aufnahme der Werkzeugeinrichtung gewährleistet wird. Bevorzugt kann der gekröpfte Trägerflansch dazu vorgesehen sein, mit den herkömmlichen Werkzeugmaschinen, insbesondere Handwerkzeugmaschinen, besonders effektiv verbunden zu werden, indem die Werkzeugeinrichtung mittels einer Spannmutter fixiert wird. Die Spannmutter kann in einem Hohlvolumen des gekröpften Trägerflansches untergebracht werden, wodurch der Trägerflansch zumindest abschnittsweise die Spannmutter in zumindest einer Ebene um 360° umgibt.

Ferner kann es zweckmäßig sein, dass der Klemmflügel im Wesentlichen in radialer Richtung zu der Werkzeugdrehachse durch eine zweite Begrenzungskante, welche auf einem zweiten, insbesondere maximalen, Begrenzungskreis um die Werkzeugdrehachse liegt, begrenzt ist. Die zweite Begrenzungskante kann die Ausnehmung der Anschlusseinrichtung begrenzen. Hierdurch kann die Werkzeugeinrichtung besonders vorteilhaft zentriert werden, indem die Klemmflügel in radialer Richtung entlastet werden. Mittels eines vergrößerten radialen Abstands der zweiten Begrenzungskante gegenüber der ersten Begrenzungskante kann ein höheres Kippmoment abgestützt werden, sodass die Werkzeugeinrichtung besonders zuverlässig mit der Werkzeugaufnahmeeinrichtung gehalten wird.

Weiterhin kann es zweckmäßig sein, dass die Werkzeugeinrichtung einen mit dem Trägerflansch verbundenen und den Trägerflansch vollständig umgebenden Arbeitsbereich aufweist, welcher dazu eingerichtet ist, auf ein Werkstück oder eine Werkstückanordnung einzuwirken. Hierdurch kann auf besonders einfache Weise eine Trennung der Funktionen erreicht werden, indem der Trägerflansch eine stabile Verbindung mit der Werkzeugaufnahmeeinrichtung der Werkzeugmaschine einrichtet und der Arbeitsbereich beispielsweise eine auf ein zu bearbeitendes Werkstück oder eine zu bearbeitende Werkstückanordnung angepasste, erforderliche Nachgiebigkeit oder gar Steifigkeit aufweist, ohne dabei beispielsweise die Verbindung der Werkzeugeinrichtung mit der Werkzeugaufnahmeeinrichtung zu schwächen. Vorzugsweise ist der Trägerflansch mittels einer stoffschlüssigen, formschlüssigen und/oder kraftschlüssigen Verbindung mit dem Arbeitsbereich verbunden, insbesondere einteilig mit dem Arbeitsbereich ausgebildet.

Des Weiteren kann es zweckmäßig sein, dass der Arbeitsbereich derart an dem Trägerflansch angeordnet ist, dass der Arbeitsbereich gegenüber dem Trägerflansch in einem Befestigungszustand in axialer Richtung der Werkzeugdrehachse in einer zu der Werkzeugaufnahmeeinrichtung der Handwerkzeugmaschine hin orientierten Richtung, insbesondere um bis zu 2 mm, vorzugsweise bis zu 1 mm, weiter vorzugsweise bis zu 0,7 mm, bevorzugt bis zu 0,6 mm, besonders bevorzugt bis zu 0,3 mm, weiter bevorzugt bis zu 0,1 mm, absteht. Dadurch kann sich die Werkzeugeinrichtung zusätzlich an der Werkzeugaufnahmeeinrichtung abstützen und einen effektiven Stützradius der Werkzeugeinrichtung vergrößern, wodurch eine zusätzliche kraftschlüssige Verbindung der Werkzeugeinrichtung mit der Werkzeugmaschine bewirkt wird.

Die Werkzeugeinrichtung, insbesondere der Arbeitsbereich, kann als eine Schleifscheibe und/oder eine Trennscheibe und/oder eine Schruppscheibe ausgeführt sein, die insbesondere zum abrasiven Abtrag dient.

An die Werkzeugaufnahmeeinrichtung der Werkzeugmaschine, insbesondere der Handwerkzeugmaschine, kann sich nach außen entweder unmittelbar der Arbeitsbereich oder alternativ zunächst eine zwischen der Werkzeugaufnahmeeinrichtung und dem Arbeitsbereich angeordneter Trägerflansch anschließen.

Der maximale Durchmesser des Trägerflansches kann in etwa 20 % bis 80 %, insbesondere 30 % bis 70 %, vorzugsweise 35 % bis 60 % des maximalen Durchmessers der Werkzeugeinrichtung betragen.

Es wird vorgeschlagen, dass die Werkzeugeinrichtung im Bereich des Trägerflansches wenigstens eine erste obere Trägerebene und wenigstens eine zweite untere Trägerebene aufweist, wobei diese Trägerebenen im Wesentlichen senkrecht zu der Werkzeugdrehachse angeordnet sind, wobei diese Trägerebenen voneinander um den Abstand T beabstandet sind und wobei diese Trägerebenen eine axiale Erstreckung des Trägerflansches begrenzen. Die erste Trägerebene kann zu der zweiten Trägerebene in einem Abstand T von bis zu 25 mm, insbesondere bis zu 20 mm, vorzugsweise bis zu 15 mm, weiter vorzugsweise bis zu 10 mm, bevorzugt bis zu 8 mm, besonders bevorzugt bis zu 5 mm, aber auch bis zu 3 mm, insbesondere bis zu 2 mm, vorzugsweise bis zu 1 mm, beabstandet sein. Hierdurch kann eine besonders flache und stabile Ausführungsform der Werkzeugeinrichtung erreicht werden.

Der Trägerflansch kann eine im Wesentlichen zylinderförmige Seitenwand aufweisen, die sich in axialer Richtung der Werkzeugdrehachse erstreckt und insbesondere den Arbeitsbereich in radialer Richtung zur Werkzeugdrehachse begrenzt. Insbesondere kann die Seitenwand einen im Wesentlichen kreisrunden Querschnitt aufweisen.

Zusätzlich kann die Werkzeugaufnahmeeinrichtung der Werkzeugmaschine, insbesondere der Handwerkzeugmaschine, durch beispielsweise einen topfförmigen Trägerflansch vor einer Kollision mit einem Werkstück geschützt werden. Vorzugsweise kann die Seitenwand im Wesentlichen konzentrisch zu dem ersten Begrenzungskreis und dem zweiten Begrenzungskreis sein. Bevorzugt erstreckt sich die Seitenwand zwischen der ersten oberen Trägerebene und der zweiten unteren Trägerebene. Die Seitenwand kann dazu vorgesehen sein, zumindest einen Teil der Werkzeugaufnahmeeinrichtung in einem Innenbereich der Seitenwand aufzunehmen.

In einer bevorzugten Ausführungsform kann die Seitenwand im Wesentlichen radial geschlossen um die Werkzeugdrehachse umlaufen. In einer weiteren Ausführungsform kann die Seitenwand in ihrem Verlauf um die Werkzeugdrehachse Ausnehmungen bzw. Unterbrechungen aufweisen. Insbesondere durch eine geschlossen umlaufende Seitenwand ist eine besonders stabile Anschlusseinrichtung erreichbar; durch eine unterbrochene oder Ausnehmungen aufweisende Seitenwand ist insbesondere eine besonders leichte und ein geringes Trägheitsmoment aufweisende Anschlusseinrichtung erreichbar.

Die zweite Trägerebene kann weiter von einer die Werkzeugeinrichtung aufnehmenden Werkzeugmaschine, insbesondere Handwerkzeugmaschine, entfernt sein als die erste Trägerebene, insbesondere in einem an der Werkzeugaufnahmeeinrichtung angeordneten und/oder befestigten Zustand der Werkzeugeinrichtung.

Es wird ferner vorgeschlagen, dass der zumindest eine Klemmflügel einen, insbesondere eine Antriebskante und/oder eine Antriebsfläche bildenden, Drehmomentaufnahmebereich zur Aufnahme eines Drehmoments in Umfangsrichtung um die Werkzeugdrehachse aufweist, wobei sich der Drehmomentaufnahmebereich zumindest abschnittweise durch eine axiale und/oder radiale Erstreckung des Klemmflügels ergibt. Der Drehmomentaufnahmebereich kann mit der Werkzeugaufnahmeeinrichtung der Werkzeugmaschine mittels einer Punkt-, insbesondere mittels einer Linien-, vorzugsweise mittels einer Flächenauflage kontaktiert sein.

Insbesondere kann der Drehmomentaufnahmebereich zwischen der ersten unteren Trägerebene und der ersten oberen Trägerebene angeordnet sein. Bevorzugt sind die Drehmomentaufnahmebereiche mit jeweils einer Antriebskante und/oder einer Antriebsfläche entlang einer um die Werkzeugdrehachse verlaufenden Umfangsrichtung relativ zueinander beabstandet angeordnet, wobei insbesondere ein minimaler Abstand zwischen den Drehmomentaufnahmebereichen, insbesondere zwischen den Antriebskanten und/oder den Antriebsflächen der Drehmomentaufnahmebereiche, entlang der Umfangsrichtung insbesondere größer ist als 10 %, bevorzugt größer ist als 20 % und besonders bevorzugt kleiner ist als 60 % eines Gesamtumfangs des ersten Begrenzungskreises.

Der Drehmomentaufnahmebereich ist dafür vorgesehen, das Antriebsdrehmoment der Werkzeugmaschine, insbesondere der Handwerkzeugmaschine, auf eine Werkzeugeinrichtung zu übertragen.

Insbesondere kann der Drehmomentaufnahmebereich, insbesondere die Antriebskante und/oder die Antriebsfläche, entgegen einer Drehrichtung der Werkzeugaufnahmeeinrichtung im Betrieb der Werkzeugmaschine, insbesondere der Handwerkzeugmaschine, angewinkelt sein und vorzugsweise gegenüber einer durch eine axiale Richtung und eine radiale Richtung der Werkzeugdrehachse aufgespannten Ebene in Umfangsrichtung um die Werkzeugdrehachse, insbesondere um bis zu 50°, vorzugsweise um bis zu 40°, bevorzugt um bis zu 30°, besonders bevorzugt um bis zu 25°, angewinkelt sein. Bevorzugt schließen die Antriebsfläche und/oder die Antriebskante, insbesondere in einer zumindest im Wesentlichen senkrecht zur Antriebsachse verlaufenden Ebene, mit einer die Antriebsachse sowie die Antriebsfläche und/oder die Antriebskante zumindest in einem Punkt schneidenden Geraden, insbesondere mit der radialen Richtung, einen Winkel von insbesondere weniger als 80°, bevorzugt von weniger als 60° und besonders bevorzugt von weniger als 45° ein. Vorzugsweise sind die Antriebsflächen relativ zu einer um die Werkzeugdrehachse verlaufenden Umfangsrichtung geneigt. Insbesondere schließen die Antriebsflächen jeweils mit der Umfangsrichtung einen von 90° verschiedenen Winkel ein.

Bevorzugt kann die Anschlusseinrichtung zumindest zwei Klemmflügel mit jeweils einem Drehmomentaufnahmebereich, insbesondere einer Antriebskante und/oder einer Antriebsfläche, aufweisen, welche zueinander parallel und beabstandet angeordnet sind und, insbesondere dass die beiden Drehmomentaufnahmebereiche symmetrisch um die Werkzeugdrehachse sind.

Es wird weiter vorgeschlagen, dass die Werkzeugeinrichtung einen, insbesondere stoffschlüssig und/oder formschlüssig, mit dem Trägerflansch verbundenen Arbeitsbereich zur Bearbeitung von einem Werkstück aufweist. Hierdurch kann eine besonders vorteilhafte Trennung der Funktionen erreicht werden. Die formschlüssige Verbindung kann insbesondere durch mehrere axiale Ausprägungen des Trägerflansches erreicht werden, welche in den Arbeitsbereich eingreifen und den Trägerflansch mit dem Arbeitsbereich formschlüssig verbinden. Die axialen Ausprägungen können in Form von in axialer Richtung abstehenden Vorsprüngen oder Zipfel ausgeführt sein. Die axialen Ausprägungen können dazu vorgesehen sein, eine Wärmeabfuhr zu verbessern.

Es kann zweckmäßig sein, dass der Trägerflansch die Ausnehmung in radialer Richtung zur Werkzeugdrehachse begrenzt. Weiterhin kann es zweckmäßig sein, dass der zumindest eine Klemmflügel, insbesondere der als Federarm ausgebildete Klemmflügel, die Ausnehmung zumindest abschnittsweise radial zur Werkzeugdrehachse begrenzt. Ferner kann es zweckmäßig sein, dass die Ausnehmung als ein sich durch die gesamte Materialstärke der Werkzeugeinrichtung, insbesondere der Anschlusseinrichtung, erstreckender Materialdurchbruch ausgebildet ist, wobei der Materialdurchbruch dazu vorgesehen ist, die Abtriebswelle, insbesondere die Werkzeugaufnahmeeinrichtung, vorzugsweise eine Mitnahmeeinrichtung und eine Klemmeinrichtung, der Handwerkzeugmaschine vollständig zu umgreifen. Hierdurch wird eine besonders stabile Anschlusseinrichtung der Werkzeugeinrichtung bereitgestellt.

Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren.

Die Materialstärke t der Anschlusseinrichtung ist vorzugsweise aus einem definierten Bereich ausgewählt, wobei diese Materialstärke vorzugsweise größer oder gleich 0,2 mm, bevorzugt größer als 0,5 mm und besonders bevorzugt größer 0,8 mm ist, weiter vorzugsweise ist die Materialstärke t kleiner oder gleich 4 mm, bevorzugt kleiner als 2 mm und besonders bevorzugt kleiner als 1,5 mm. Besonders bevorzugt ist die Materialstärke t im Wesentlichen 1 mm oder 1,5 mm oder bevorzugt auch ein Maß zwischen 1 mm und 1,5 mm. Insbesondere durch die Wahl einer geeigneten Materialstärke t aus dem zuvor genannten Bereich ist es ermöglicht, ein einerseits leichtes und damit ein geringes Trägheitsmoment aufweisende Werkzeugeinrichtung und andererseits eine ausreichend stabile Werkzeugeinrichtung zu erreichen.

Des Weiteren kann es zweckmäßig sein, dass ein Durchmesser D1 des ersten Begrenzungskreises gegenüber einem Durchmesser D2 des zweiten Begrenzungskreises ein Verhältnis in einem Bereich von 50% bis 95%, insbesondere in einem Bereich von 60% bis 90%, vorzugsweise in einem Bereich von 65% bis 85%, bevorzugt in einem Bereich von 70% bis 80%, aufweist. Insbesondere kann der erste Begrenzungskreis einen Durchmesser D1 von etwa 22 mm, wie beispielsweise 22,2 mm aufweisen. Vorzugsweise kann der zweite Begrenzungskreis einen Durchmesser D2 von etwa 29 mm aufweisen. Bevorzugt kann der Durchmesser D2 des zweiten Begrenzungskreises gegenüber dem Durchmesser D1 des ersten Begrenzungskreises ein Verhältnis von 77 % aufweisen. Dadurch kann eine Aufnahme der Werkzeugeinrichtung an einer Vielzahl von herkömmlichen Werkzeugmaschinen, insbesondere Handwerkzeugmaschinen, ermöglicht werden.

Weiter bevorzugt kann der erste Begrenzungskreis einen Durchmesser D1 von etwa 16 mm aufweisen und der zweite Begrenzungskreis einen Durchmesser D2 in einem Bereich von etwa 21 mm bis 22,5 mm aufweisen, sodass die Werkzeugeinrichtung auch auf kleinere auf dem Markt erhältliche Werkzeugmaschinen, insbesondere Handwerkzeugmaschinen, angepasst werden kann.

Besonders bevorzugt kann der Durchmesser D2 des zweiten Begrenzungskreises gegenüber dem Durchmesser D1 des ersten Begrenzungskreises ein Verhältnis in einem Bereich von 71% bis 77% aufweisen.

Es wird vorgeschlagen, dass die Anschlusseinrichtung eine geradzahlige Mehrzahl von Klemmflügeln, insbesondere zumindest zwei oder vier oder sechs Klemmflügel, aufweist. Es wird ferner vorgeschlagen, dass die Anschlusseinrichtung mehrere Klemmflügel aufweist, die symmetrisch um die Werkzeugdrehachse angeordnet sind. Hierdurch kann unter anderem eine besonders effektive Schwingminimierung der Werkzeugeinrichtung erreicht werden.

Es wird weiter vorgeschlagen, dass der Trägerflansch ein Sicherungsmittel aufweist, welches derart ausgebildet ist, dass der Arbeitsbereich bei einem Bruch der Verbindung zwischen dem Trägerflansch und dem Arbeitsbereich in axialer Richtung der Werkzeugdrehachse durch den Trägerflansch und die Handwerkzeugmaschine zwischen dem Trägerflansch und der Werkzeugmaschine, insbesondere Handwerkzeugmaschine, gehalten wird. Dadurch kann der Arbeitsbereich zwischen dem Trägerflansch, insbesondere zwischen dem Sicherungsmittel des Trägerflansches, und der Werkzeugaufnahmeeinrichtung der Werkzeugmaschine, insbesondere Handwerkzeugmaschine, bei einer ungewollt gelösten Verbindung gehalten werden, sodass ein Bediener vor einem herumfliegenden Arbeitsbereich, insbesondere Teilen des Arbeitsbereichs, einer berstenden Werkzeugeinrichtung effektiv geschützt wird.

Das Sicherungsmittel kann durch eine maximale radiale Erstreckung des Trägerflansches ausgestaltet sein, die eine minimale radiale Erstreckung des Arbeitsbereichs übersteigt, sodass der Trägerflansch den Arbeitsbereich in radialer Richtung überlappt und somit eine in axialer Richtung der Werkzeugdrehachse formschlüssige Verbindung in einem Befestigungszustand ergibt.

Das Sicherungsmittel kann als eine den Trägerflansch in radialer Richtung der Werkzeugdrehachse begrenzende radiale Trägerlippe bzw. Trägerkragen ausgeführt sein. Das Sicherungsmittel ist insbesondere als ein mit dem Arbeitsbereich überlappender Bereich des Trägerflansches ausgebildet. Das Sicherungsmittel weist einen Verbindungsbereich auf, welcher den Arbeitsbereich form- und/oder stoffschlüssig mit dem Trägerflansch verbindet. Der Verbindungsbereich erstreckt sich in einem radial außenliegenden Bereich des Trägerflansches. Der Verbindungsbereich ist in radialer Richtung benachbart, insbesondere anschließend zu der Anschlusseinrichtung, insbesondere der Ausnehmung der Anschlusseinrichtung, angeordnet. Der Verbindungsbereich ist als eine, insbesondere ringförmige, bevorzugt kreisringförmige, Verbindungsfläche ausgeführt, welche den Arbeitsbereich mit dem Trägerflansch verbindet.

Der Trägerflansch kann als ein Trägerring ausgeführt sein, welcher im Querschnitt L-förmig ausgebildet ist, sodass bevorzugt eine Verbindung des Arbeitsbereichs mit dem Trägerflansch nur an einer zu der Werkzeugaufnahmeinrichtung hin orientierten Seite oder von der Werkzeugaufnahmeeinrichtung weg orientierten Seite der Werkzeugaufnahmeeinrichtung erfolgt.

Der Trägerring kann auch im Querschnitt U-förmig sein. Der Trägerring kann dabei aus einem oberen und einem unteren Teilring zusammengesetzt sein, die vorzugsweise miteinander verbunden, insbesondere gegeneinander verpresst, sind.

Erfindungsgemäß weist die Anschlusseinrichtung zumindest ein Werkzeugmontagekodierelement auf, das dazu vorgesehen ist, in einem an der Werkzeugaufnahmeeinrichtung angeordneten Zustand der Werkzeugeinrichtung mit zumindest einem Montagekodierelement der Werkzeugaufnahmeeinrichtung zusammenzuwirken. Das Werkzeugmontagekodierelement der Werkzeugeinrichtung ist an dem zumindest einen Klemmflügel der Anschlusseinrichtung angeordnet und ist als sich durch eine maximale Materialstärke des Klemmflügels vollständig hindurch erstreckende Ausnehmung ausgebildet.

Bevorzugt ist das Werkzeugmontagekodierelement der Werkzeugeinrichtung dazu vorgesehen, gemäß einem Schlüssel-Schlüsselloch-Prinzip mit zumindest einem Montagekodierelement der Mitnahmeeinrichtung oder mit zumindest einem Montagekodierelement der Klemmeinrichtung zusammenzuwirken, insbesondere in einem an der Werkzeugaufnahmeeinrichtung angeordneten Zustand der Werkzeugeinrichtung. Vorzugsweise umfasst die Werkzeugeinrichtung eine Vielzahl an Werkzeugmontagekodierelementen, insbesondere zumindest zwei, bevorzugt zumindest drei und ganz besonders bevorzugt zumindest vier. Die Werkzeugeinrichtung umfasst vorzugsweise in Abhängigkeit von einer Anzahl an Montagekodierelementen der Werkzeugaufnahmeeinrichtung eine gleiche Anzahl. Es ist jedoch auch denkbar, dass die Werkzeugeinrichtung eine Anzahl an Werkzeugmontagekodierelementen aufweist, die von einer Anzahl an Montagekodierelementen der Werkzeugaufnahmeeinrichtung abweicht, insbesondere größer ist. Das zumindest eine Werkzeugmontagekodierelement der Werkzeugeinrichtung kann bevorzugt, insbesondere zusätzlich zu einer Montagekodierfunktion, als Spannungsentlastungskerbe ausgebildet sein oder wirken. Vorzugsweise ist zu einer Montage und/oder Befestigung der Werkzeugeinrichtung an der Werkzeugaufnahmeeinrichtung eine mechanische und/oder elektronische Auswertung des zumindest einen Werkzeugmontagekodierelements der Werkzeugeinrichtung vorzusehen, insbesondere mittels des zumindest einen Montagekodierelements der Werkzeugaufnahmeeinrichtung, um vorzugsweise eine Montage und/oder Befestigung der Werkzeugeinrichtung an der Werkzeugaufnahmeeinrichtung freizugeben. Es ist denkbar, dass eine Bewegung der Klemmeinrichtung bis zu einer Freigabe einer Montage und/oder Befestigung sperrbar ist, insbesondere mechanisch und/oder elektronisch. Es ist denkbar, dass das zumindest eine Werkzeugmontagekodierelement der Werkzeugeinrichtung zu einer Betätigung, insbesondere zu einer Bewegung, des zumindest einen Montagekodierelements der Werkzeugaufnahmeeinrichtung vorgesehen ist, insbesondere um eine Freigabe einer Montage und/oder einer Befestigung der Werkzeugeinrichtung an der Werkzeugaufnahmeeinrichtung zu ermöglichen. Alternativ oder zusätzlich ist es denkbar, dass die Werkzeugeinrichtung zumindest ein weiteres Werkzeugmontagekodierelement, insbesondere eine Prägung, aufweist, das dazu vorgesehen ist, zumindest ein weiteres Montagekodierelement der Werkzeugaufnahmeeinrichtung, das insbesondere beweglich gelagert ist, insbesondere an der Auflagefläche, zu betätigen, insbesondere zu bewegen, um eine Freigabe einer Montage und/oder einer Befestigung der Werkzeugeinrichtung an der Werkzeugaufnahmeeinrichtung zu ermöglichen.

Mittels der erfindungsgemäßen Ausgestaltung kann vorteilhaft eine fehlerhafte Montage der Werkzeugeinrichtung an der Werkzeugaufnahmeeinrichtung weitestgehend vermieden werden. Es kann vorteilhaft eine Anordnung von für einen sicheren Betrieb der Werkzeugmaschine ungeeigneten Werkzeugeinrichtungen an der Werkzeugaufnahmeeinrichtung entgegengewirkt werden. Es kann vorteilhaft beispielsweise eine Anordnung einer Werkzeugeinrichtung, die für Werkzeugmaschinen mit geringer maximaler Drehzahl vorgesehen ist, an einer Werkzeugmaschine mit hoher maximaler Drehzahl entgegengewirkt werden. Es kann vorteilhaft eine hohe Bedienersicherheit realisiert werden.

Bei der Ausgestaltung des am Klemmflügel angeordneten Werkzeugmontagekodierelements als Ausnehmung ist das Werkzeugmontagekodierelement vorzugsweise derart in den Klemmflügel eingebracht, dass eine Widerstandseigenschaft des Klemmflügels gegen eine plastische Verformung infolge einer betrieblichen Belastung maximal bis zu einer Belastungsgrenze des Klemmflügels verringert ist. Es ist denkbar, dass an dem Klemmflügel zumindest ein Versteifungselement, wie beispielsweise eine Versteifungsrippe o. dgl., angeordnet ist. Das zumindest eine an dem Klemmflügel angeordnete Werkzeugmontagekodierelement ist vorzugsweise dazu vorgesehen, in einem an der Werkzeugaufnahmeeinrichtung angeordneten Zustand der Werkzeugeinrichtung mit dem zumindest einen an der Hakenbacke angeordneten Montagekodierelement der Klemmeinrichtung zusammenzuwirken. Mittels der erfindungsgemäßen Ausgestaltung kann vorteilhaft eine sichere Montage- oder Befestigungskodierung gemäß einem Schlüssel-Schlüsselloch-Prinzip erreicht werden.

Zudem wird vorgeschlagen, dass das zumindest eine Werkzeugmontagekodierelement entlang einer Radialachse eine maximale Erstreckung aufweist, die maximal einem Maximalabstand zwischen dem ersten Begrenzungskreis und einem zweiten Begrenzungskreis der Anschlusseinrichtung entspricht. Bevorzugt weist das zumindest eine an dem Klemmflügel angeordnete Werkzeugmontagekodierelement eine maximale Erstreckung entlang einer quer, insbesondere zumindest im Wesentlichen senkrecht, zur Werkzeugdrehachse verlaufenden Richtung, insbesondere einer Radialachse der Werkzeugeinrichtung, auf, die gleich groß oder kleiner ist als ein Maximalabstand zwischen einem ersten Begrenzungskreis und einem zweiten Begrenzungskreis der Werkzeugeinrichtung. Mittels der erfindungsgemäßen Ausgestaltung kann vorteilhaft eine zuverlässige und sichere Kodierung erreicht werden.

Des Weiteren wird vorgeschlagen, dass das zumindest eine Werkzeugmontagekodierelement in einem Winkelbereich zwischen einer Antriebskante und einer Kodierungskante der Anschlusseinrichtung an dem zumindest einen Klemmflügel der Anschlusseinrichtung angeordnet ist. Insbesondere weist der Winkelbereich eine maximale Erstreckung von weniger als 90°, bevorzugt von weniger als 60° und besonders bevorzugt von weniger als 40° auf. Mittels der erfindungsgemäßen Ausgestaltung kann vorteilhaft eine sichere Befestigungskodierung erreicht werden. Es kann vorteilhaft eine Befestigung der Werkzeugeinrichtung an ungeeigneten Werkzeugmaschinen weitestgehend vermieden werden. Es kann vorteilhaft eine Prävention vor Verletzungen eines Bedieners infolge einer Befestigung der Werkzeugeinrichtung an ungeeigneten Werkzeugmaschinen erreicht werden.

Zudem wird eine Werkzeugeinrichtung mit zumindest einem Arbeitsbereich, welcher dazu eingerichtet ist auf ein Werkstück oder eine Werkstückanordnung einzuwirken, und zumindest einer Anschlusseinrichtung, welche zur Aufnahme von Antriebskräften eingerichtet ist, und zumindest einem Verbindungsbereich, welcher dazu eingerichtet ist die Antriebskräfte zu diesem Arbeitsbereich zu übertragen, zur Verwendung mit einer Werkzeugmaschine, insbesondere mit einer Handwerkzeugmaschine, vorgeschlagen.

Insbesondere kann zwischen dieser Anschlusseinrichtung und jedem dieser Arbeitsbereiche ein Verbindungsbereich angeordnet sein. Vorzugsweise kann der zumindest eine Verbindungsbereich, vorzugsweise können alle, Verbindungsbereiche im Wesentlich im Bereich, insbesondere oberhalb, einer der zweiten unteren Trägerebene angeordnet sein und vorzugsweise mit der Trägerebene im Wesentlichen zusammenfallen.

Dadurch sind insbesondere eine besonders stabile Anschlusseinrichtung und damit eine gute Drehmomenteinleitung in die Werkzeugeinrichtung erreichbar.

Zudem wird eine Verwendung einer Werkzeugeinrichtung mit einem Winkelschleifer vorgeschlagen, wobei die Werkzeugeinrichtung mit einer Rotationsgeschwindigkeit von mehr als 4000 oder mehr als 10000 oder mehr als 20000 Umdrehungen pro Minute betreibbar ist.

Unter "betreibbar" soll in diesem Zusammenhang zuverlässig betreibbar verstanden werden, sodass eine Verwendung einer Werkzeugeinrichtung mit einer Werkzeugmaschine, insbesondere einem Winkelschleifer, einer gleichen oder zumindest annähernd ähnlich langen Verwendungszeit bzw. Standzeit der Werkzeugeinrichtung, wie beispielsweise einer mit einem Winkelschleifer verwendete Fieberschleifscheibe, entspricht. Insbesondere soll unter der Verwendungszeit bzw. Standzeit eine auf dem Gebiet der Schleifwerkzeuge übliche Standzeit eines mit einem Winkelschleifer angetriebenen Schleifmittels verstanden werden.

Zudem wird ein nicht erfindungsgemäßes Verfahren zur Herstellung einer Werkzeugeinrichtung vorgeschlagen, wobei die Werkzeugeinrichtung eine Anschlusseinrichtung mit einer Ausnehmung aufweist, welche mittels eines Stanzverfahrens hergestellt wird.

Des Weiteren geht die Erfindung aus von einem Werkzeugmaschinensystem mit einer erfindungsgemäßen Werkzeugeinrichtung und mit zumindest einer Handwerkzeugmaschine, die zumindest eine Werkzeugaufnahmeeinrichtung umfasst. Es wird vorgeschlagen, dass die Werkzeugeinrichtung zumindest ein Werkzeugmontagekodierelement aufweist, das dazu vorgesehen ist, in einem an der Werkzeugaufnahmeeinrichtung angeordneten Zustand der Werkzeugeinrichtung mit zumindest einem Montagekodierelement der Werkzeugaufnahmeeinrichtung zusammenzuwirken. Bevorzugt umfasst die Mitnahmeeinrichtung zumindest ein Montagekodierelement, das dazu vorgesehen ist, mit einem Werkzeugmontagekodierelement der Werkzeugeinrichtung in einem an der Werkzeugaufnahmeeinrichtung angeordneten Zustand der Werkzeugeinrichtung zusammenzuwirken. Vorzugsweise ist das zumindest ein Montagekodierelement der Mitnahmeeinrichtung dazu vorgesehen, eine Anordnung oder ein Aufsetzen der Werkzeugeinrichtung an oder auf der Werkzeugaufnahmeeinrichtung, insbesondere der Auflagefläche, zu kodieren. Bevorzugt ist das zumindest eine Montagekodierelement der Mitnahmeeinrichtung dazu vorgesehen, eine Anordnung oder ein Aufsetzen der Werkzeugeinrichtung an oder auf der Werkzeugaufnahmeeinrichtung, insbesondere der Auflagefläche, gemäß einem Schlüssel-Schlüsselloch-Prinzip zu kodieren. Vorzugsweise ist das zumindest eine Montagekodierelement der Mitnahmeeinrichtung als Axialkodierelement ausgebildet, insbesondere als ein entlang einer zumindest im Wesentlichen parallel zur Abtriebsachse verlaufenden Richtung wirkendes Axialkodierelement. Vorzugsweise ist das zumindest eine Montagekodierelement der Mitnahmeeinrichtung dazu vorgesehen, eine axiale Aufsetzmöglichkeit der Werkzeugeinrichtung auf die Mitnahmeeinrichtung zu kodieren. Vorzugsweise ist das zumindest eine Montagekodierelement der Mitnahmeeinrichtung einteilig mit der Mitnahmeeinrichtung, insbesondere einer Mitnahmebacke der Mitnahmeeinrichtung, ausgebildet. Es ist jedoch auch denkbar, dass das zumindest eine Montagekodierelement der Mitnahmeeinrichtung separat zur Mitnahmeeinrichtung, insbesondere zur Mitnahmebacke, ausgebildet ist und mittels einer, einem Fachmann als sinnvoll erscheinenden Verbindung an der Mitnahmeeinrichtung, insbesondere der Mitnahmebacke, fixiert ist. Vorzugsweise ist das Montagekodierelement als mechanisches Montagekodierelement ausgebildet ist, wie beispielsweise als Ausnehmung, als Fortsatz, als Nut, als Steg o. dgl. Es ist jedoch auch denkbar, dass das Montagekodierelement als elektronisches Montagekodierelement ausgebildet, wie beispielsweise als RFID-Chip, als NFC-Chip, als Funkwellenauswertegerät, als elektronisches Lesegerät (Strichcodelesegerät, Datamatrixcodelesegerät etc.) o. dgl. oder dass das Montagekodierelement als eine Kombination aus einem mechanischen und einem elektronischen Montagekodierelement ausgebildet ist. Das Werkzeugmontagekodierelement der Werkzeugeinrichtung ist vorzugsweise korrespondierend zum Montagekodierelement der Mitnahmeeinrichtung ausgebildet. Bei einer Ausgestaltung des Montagekodierelements als mechanisches Montagekodierelement ist das Werkzeugmontagekodierelement ebenfalls als mechanisches Werkzeugmontagekodierelement ausgebildet, wie beispielsweise als Ausnehmung, als Fortsatz, als Nut, als Steg o. dgl. Bei einer Ausgestaltung des Montagekodierelements als elektronisches Montagekodierelement ist das Werkzeugmontagekodierelement, nicht erfindungsgemäß ebenfalls als elektronisches Werkzeugmontagekodierelement ausgebildet, wie beispielsweise als RFID-Chip, als NFC-Chip, als Funkwellenauswertegerät, als elektronisches Lesegerät (Strichcodelesegerät, Datamatrixcodelesegerät etc.) o. dgl. Weitere, einem Fachmann als sinnvoll erscheinende korrespondierende Ausgestaltungen des Montagekodierelements und des Werkzeugmontagekodierelements sind ebenfalls denkbar. Vorzugsweise umfasst die Werkzeugaufnahmeeinrichtung eine Vielzahl an Montagekodierelementen, insbesondere zumindest zwei, bevorzugt zumindest drei und ganz besonders bevorzugt zumindest vier. Die Werkzeugeinrichtung umfasst vorzugsweise in Abhängigkeit von einer Anzahl an Montagekodierelementen der Werkzeugaufnahmeeinrichtung eine gleiche Anzahl. Es ist jedoch auch denkbar, dass die Werkzeugeinrichtung eine Anzahl an Werkzeugmontagekodierelementen aufweist, die von einer Anzahl an Montagekodierelementen der Werkzeugaufnahmeeinrichtung abweicht, insbesondere größer ist.

Bevorzugt ist das Montagekodierelement der Mitnahmeeinrichtung an zumindest einer Mitnahmebacke der Mitnahmeeinrichtung angeordnet. Vorzugsweise ist das an der zumindest einen Mitnahmebacke der Mitnahmeeinrichtung angeordnete Montagekodierelement als Fortsatz ausgebildet. Bevorzugt weist das als Fortsatz ausgebildete Montagekodierelement eine Hauptausrichtung auf, die in eine von der Abtriebsachse weg gerichtete Ausrichtung aufweist, insbesondere entlang einer quer, insbesondere zumindest im Wesentlichen senkrecht, zur Abtriebsachse verlaufenden Richtung. Es ist jedoch auch denkbar, dass das an der zumindest einen Mitnahmebacke der Mitnahmeeinrichtung angeordnete Montagekodierelement eine andere, einem Fachmann als sinnvoll erscheinende Ausgestaltung aufweist. Bevorzugt ist das an der zumindest einen Mitnahmebacke der Mitnahmeeinrichtung angeordnete Montagekodierelement an einer, insbesondere der Abtriebsachse abgewandten, Außenfläche der zumindest einen Mitnahmebacke angeordnet. Vorzugsweise ist das an der zumindest einen Mitnahmebacke der Mitnahmeeinrichtung angeordnete Montagekodierelement an einer zumindest im Wesentlichen parallel zur Abtriebsachse verlaufenden Außenfläche der zumindest einen Mitnahmebacke angeordnet. Alternativ oder zusätzlich ist es denkbar, dass die Werkzeugaufnahmeeinrichtung zumindest ein Montagekodierelement umfasst, das an der Auflagefläche der Werkzeugaufnahmeeinrichtung angeordnet ist. Das an der Auflagefläche der Werkzeugaufnahmeeinrichtung angeordnete Montagekodierelement kann als mechanisches oder als elektronisches Montagekodierelement ausgebildet sein.

Bevorzugt ist das Montagekodierelement der Mitnahmeeinrichtung angrenzend an eine Innenumfangsfläche der zumindest einen Mitnahmebacke angeordnet. Vorzugsweise ist das an der zumindest einen Mitnahmebacke der Mitnahmeeinrichtung angeordnete Montagekodierelement direkt angrenzend an der Innenumfangsfläche angeordnet. Alternativ oder zusätzlich ist es denkbar, dass das an der zumindest einen Mitnahmebacke der Mitnahmeeinrichtung angeordnete Montagekodierelement an einer Außenumfangsfläche der zumindest einen Mitnahmebacke angeordnet ist. Bevorzugt bildet eine Oberfläche des an der zumindest einen Mitnahmebacke der Mitnahmeeinrichtung angeordnete Montagekodierelements einen Teil der Innenumfangsfläche oder der Außenumfangsfläche der zumindest einen Mitnahmebacke.

Bevorzugt umfasst die Klemmeinrichtung, insbesondere die zumindest eine Hakeneinrichtung der Klemmeinrichtung, zumindest ein Montagekodierelement. Bevorzugt umfasst die Klemmeinrichtung eine Vielzahl an Montagekodierelementen, insbesondere zumindest zwei. Es ist jedoch auch denkbar, dass die Klemmeinrichtung eine von eins und zwei abweichende Anzahl an Montagekodierelementen aufweist, die an der Hakeneinrichtung angeordnet sind. Vorzugsweise bildet das zumindest eine Montagekodierelement der Klemmeinrichtung ein Fixierungskodierelement, das dazu vorgesehen ist, eine Befestigung der Werkzeugeinrichtung an der Werkzeugaufnahmeeinrichtung zu kodieren. Bevorzugt ist das zumindest eine Montagekodierelement der Klemmeinrichtung dazu vorgesehen, eine Befestigung der Werkzeugeinrichtung an der Werkzeugaufnahmeeinrichtung gemäß einem Schlüssel-Schlüsselloch-Prinzip zu kodieren. Vorzugsweise ist das zumindest eine Montagekodierelement der Klemmeinrichtung als Radialkodierelement ausgebildet, insbesondere als ein entlang einer zumindest im Wesentlichen senkrecht zur Abtriebsachse verlaufenden Richtung wirkendes Radialkodierelement. Vorzugsweise ist das zumindest eine Montagekodierelement der Klemmeinrichtung dazu vorgesehen, eine radial wirkende Befestigung der Klemmeinrichtung zu einer Befestigung der Werkzeugeinrichtung an der Werkzeugaufnahmeeinrichtung zu kodieren. Das Montagekodierelement der Klemmeinrichtung ist vorzugsweise dazu vorgesehen, bei einem Nichtvorhandensein eines korrespondierenden Montagekodierelements an einer Werkzeugeinrichtung eine Befestigung der Werkzeugeinrichtung an der Werkzeugaufnahmeeinrichtung, insbesondere an der Auflagefläche, mittels der Klemmeinrichtung zumindest weitestgehend zu vermeiden oder zu unterbinden. Bei einem Vorhandensein eines korrespondierenden Montagekodierelements an einer Werkzeugeinrichtung ist eine Befestigung infolge einer Kodierfreigabe durch ein Zusammenwirken des Montagekodierelements der Klemmeinrichtung mit dem korrespondierenden Montagekodierelement der Werkzeugeinrichtung vorzugsweise möglich. Es ist denkbar, dass Werkzeugaufnahmeeinrichtung lediglich zumindest das oder die Montagekodierelement/e der Mitnahmeeinrichtung oder lediglich zumindest das oder die Montagekodierelement/e der Klemmeinrichtung aufweist. Denkbar ist auch, dass die Werkzeugaufnahmeeinrichtung alternativ oder zusätzlich zu dem oder den Montagekodierelement/en der Mitnahmeeinrichtung oder dem oder den Montagekodierelement/en der Klemmeinrichtung weitere Kodierelemente aufweist, die eine Kodierung einer Anordnung der Werkzeugeinrichtung an der Werkzeugaufnahmeeinrichtung ermöglichen, wie beispielsweise zumindest ein Kodierelement, das infolge einer Anordnung der Werkzeugeinrichtung an der Werkzeugaufnahmeeinrichtung bewegbar ist, um eine Anordnung der Werkzeugeinrichtung freizugeben, zumindest ein zusätzliches statisches Kodierelement an der Werkzeugaufnahmeeinrichtung, das beispielsweise in eine Ausnehmung an der Werkzeugeinrichtung eingreift, zumindest ein zusätzliches bewegbar gelagertes Kodierelement, das vorzugsweise nach einer korrekten Anordnung einer geeigneten Werkzeugeinrichtung in eine Kodierausnehmung der Werkzeugeinrichtung bewegbar ist, um beispielsweise eine Inbetriebnahme der Werkzeugmaschine freizuschalten oder weitere, einem Fachmann als sinnvoll erscheinende Kodierelemente.

Bevorzugt ist das Montagekodierelement der Klemmeinrichtung an einer Hakenbacke, insbesondere in einer Klemmausnehmung der Hakenbacke, angeordnet. Vorzugsweise ist das zumindest eine Montagekodierelement der Klemmeinrichtung einteilig mit der Hakenbacke ausgebildet. Es ist jedoch auch denkbar, dass das zumindest eine Montagekodierelement der Klemmeinrichtung separat zur Hakenbacke ausgebildet ist und mittels einer, einem Fachmann als sinnvoll erscheinenden Verbindung an der Hakenbacke fixiert ist. Bevorzugt ist das Montagekodierelement der Klemmeinrichtung an einer Klemmfläche der Klemmeinrichtung angeordnet, insbesondere direkt angrenzend an die Klemmfläche, die die Klemmausnehmung zumindest teilweise begrenzt. Bevorzugt ist das zumindest eine Montagekodierelement der Klemmeinrichtung als Fortsatz ausgebildet. Es ist jedoch auch denkbar, dass das zumindest eine Montagekodierelement der Klemmeinrichtung eine andere, einem Fachmann als sinnvoll erscheinende Ausgestaltung aufweist. Das zumindest eine Montagekodierelement der Klemmeinrichtung kann symmetrisch oder asymmetrisch zu einer Mittelebene, insbesondere einer Symmetrieebene, der Hakenbacke an der Hakenbacke angeordnet sein. Vorzugsweise verläuft die Mittelebene, insbesondere die Symmetrieebene, der Hakenbacke zumindest im Wesentlichen parallel zur Abtriebsachse und/oder umfasst diese. Denkbar ist auch eine relativ zur Mittelebene, insbesondere zur Symmetrieebene, der Hakenbacke beabstandete Anordnung des zumindest einen Montagekodierelements der Klemmeinrichtung an der Hakenbacke

Mittels der erfindungsgemäßen Ausgestaltung kann vorteilhaft eine fehlerhafte Montage der Werkzeugeinrichtung an der Werkzeugaufnahmeeinrichtung weitestgehend vermieden werden. Es kann vorteilhaft eine Anordnung von für einen sicheren Betrieb der Werkzeugmaschine ungeeigneten Werkzeugeinrichtungen an der Werkzeugaufnahmeeinrichtung entgegengewirkt werden. Es kann vorteilhaft beispielsweise eine Anordnung einer Werkzeugeinrichtung, die für Werkzeugmaschinen mit geringer maximaler Drehzahl vorgesehen ist, an einer Werkzeugmaschine mit hoher maximaler Drehzahl entgegengewirkt werden. Es kann vorteilhaft zuverlässig eine Anordnung, insbesondere ein Aufsetzen, einer ungeeigneten Werkzeugeinrichtung an, insbesondere auf, die Werkzeugaufnahmeeinrichtung vorteilhaft weitestgehend vermieden werden. Es kann eine konstruktiv einfache Ausgestaltung einer Montagekodierung ermöglicht werden. Es kann eine konstruktiv einfache Ausgestaltung einer Montagekodierung ermöglicht werden. Es kann zuverlässig eine Anordnung, insbesondere ein Aufsetzen, einer ungeeigneten Werkzeugeinrichtung an, insbesondere auf, die Werkzeugaufnahmeeinrichtung vorteilhaft weitestgehend vermieden werden. Es kann vorteilhaft eine Befestigung einer Werkzeugeinrichtung mittels der Klemmeinrichtung kodiert werden. Es kann beispielsweise bei einer ungeeigneten Ausgestaltung einer Werkzeugeinrichtung, die entkoppelt von mit dem zumindest eine Montagekodierelement der Klemmeinrichtung korrespondierenden Element ausgebildet ist, eine Fixierungsmöglichkeit gesperrt werden. Es kann zuverlässig einer Befestigung einer ungeeigneten Werkzeugeinrichtung an der Werkzeugaufnahmeeinrichtung entgegengewirkt werden. Es kann vorteilhaft eine kompakte Ausgestaltung realisiert werden. Es kann vorteilhaft ein zuverlässiger Schutz des Montagekodierelements der Klemmeinrichtung vor Beschädigungen ermöglicht werden, insbesondere durch eine Anordnung des zumindest einen Montagekodierelements in der Klemmausnehmung der Hakenbacke.

Die erfindungsgemäße Werkzeugeinrichtung und/oder das erfindungsgemäße Werkzeugmaschinensystem sollen/soll hierbei nicht auf die oben beschriebene Anwendung und Ausführungsform beschränkt sein. Insbesondere können/kann die erfindungsgemäße Werkzeugeinrichtung und/oder das erfindungsgemäße Werkzeugmaschinensystem zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In der Zeichnung sind Ausführungsbeispiele der Erfindung und nicht erfindungsgemäße Ausführungsbeispiele dargestellt. Die Zeichnungen, die Beschreibung und die Ansprüche enthalten zahlreiche Merkmale in Kombination.

Hierbei zeigt:

Fig. 1             eine perspektivische Ansicht einer ersten Ausführungsform einer nicht erfindungsgemäßen Werkzeugeinrichtung,

Fig. 2             eine perspektivische Ansicht einer zweiten Ausführungsform einer nicht erfindungsgemäßen Werkzeugeinrichtung,

Fig. 3a            ein Trägerflansch der zweiten Ausführungsform einer Werkzeugeinrichtung,

Fig. 3b            ein Trägerflansch einer dritten Ausführungsform einer Werkzeugeinrichtung,

Fig. 4a            eine vergrößerte Ansicht des Trägerflansches aus Figur 3a,

Fig. 4b            eine vergrößerte Ansicht eines Klemmflügels des Trägerflanschs aus Figur 3a,

Fig. 5             eine Schnittansicht A-A der Werkzeugeinrichtung aus Figur 2,

Fig. 6             eine perspektivische Ansicht einer dritten Ausführungsform einer Werkzeugeinrichtung,

Fig. 7             eine vergrößerte Schnittansicht A-A der Werkzeugeinrichtung aus Figur 6,

Fig. 8a            eine Schnittansicht A-A der Werkzeugeinrichtung aus Figur 6,

Fig. 8b            eine Schnittansicht A-A der Werkzeugeinrichtung aus Figur 6 mit einer herkömmlichen Werkzeugaufnahmeeinrichtung einer Handwerkzeugmaschine,

Fig. 9             einen Schnitt durch ein Werkzeugmaschinensystem mit einer Handwerkzeugmaschine und mit einer Werkzeugeinrichtung aus Figur 6, die an einer Werkzeugaufnahmeeinrichtung der Handwerkzeugmaschine angeordnet ist,

Fig. 10a           eine Ansicht auf einen Teil der Werkzeugaufnahmeeinrichtung aus Figur 9,

Fig. 10b           eine Ansicht eines Teils einer ersten alternativen Werkzeugaufnahmeeinrichtung,

Fig. 10c           eine Ansicht eines Teils einer zweiten alternativen Werkzeugaufnahmeeinrichtung, Beschreibungsseite 30 (Reinschriftfassung)

Fig. 10d           eine Ansicht eines Teils einer dritten alternativen Werkzeugaufnahmeeinrichtung,

Fig. 11            eine perspektivische Ansicht der Werkzeugaufnahmeeinrichtung der Handwerkzeugmaschine aus Figur 9,

Fig. 12            eine Schnittansicht der Werkzeugaufnahmeeinrichtung entlang einer ersten Orthogonalebene aus Figur 9,

Fig. 13            eine Detailansicht einer Hakenbacke der Werkzeugaufnahmeeinrichtung aus Figur 9 mit einem daran angeordneten Montagekodierelement einer Klemmeinrichtung der Werkzeugaufnahmeeinrichtung,

Fig. 14a, 14d, 14e eine tabellarische Auflistung von möglichen Anordnungen und Ausgestaltungen von Werkzeugmontagekodierelementen der Werkzeugeinrichtung,

Fig. 14b-14c       weitere mögliche nicht erfindungsgemäße Ausgestaltungen des Trägerflanschs der Werkzeugeinrichtung,

Fig. 15a           eine Ausgestaltung einer Werkzeugeinrichtung und/oder einer Werkzeugaufnahmeeinrichtung mit zumindest einem federbelasteten Sicherungs- und/oder Positionierelement,

Fig. 15b           eine zur Figur 15a alternative Ausgestaltung der Werkzeugeinrichtung und/oder der Werkzeugaufnahmeeinrichtung mit zumindest einem federbelasteten Sicherungs- und/oder Positionierelement,

Fig. 16a           eine Draufsicht auf eine Ausgestaltung einer Werkzeugeinrichtung als Bohrkrone,

Fig. 16b           eine Schnittansicht der Werkzeugeinrichtung aus Figur 16a,

Fig. 17a           eine Draufsicht auf eine zu den Figuren 15a und 15b alternativen nicht erfindungsgemäßen Ausgestaltung einer Werkzeugeinrichtung als Bohrkrone,

Fig. 17b           eine Schnittansicht der Werkzeugeinrichtung aus Figur 17a,

Fig. 18a           eine Draufsicht auf eine zu den Figuren 15a und 15b alternativen nicht erfindungsgemäßen Ausgestaltung einer Werkzeugeinrichtung als Drahtbürste und

Fig. 18b           eine Schnittansicht der Werkzeugeinrichtung aus Figur 18a.

Beschreibung der Ausführungsbeispiele

In den folgenden Figuren sind gleiche Bauteile mit den gleichen Bezugszeichen versehen.

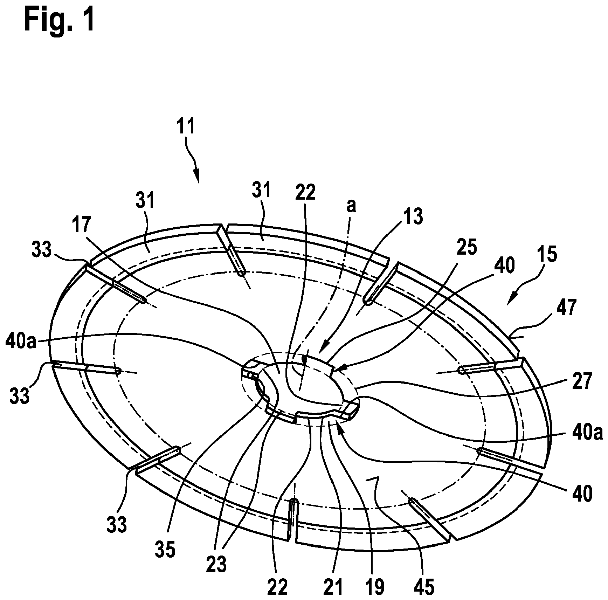

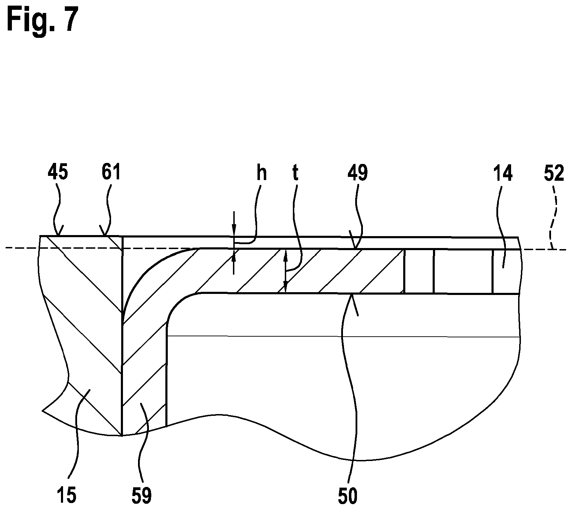

Die Figuren 1 bis 8b beziehen sich jeweils auf eine Werkzeugeinrichtung 11 zum Bearbeiten, insbesondere Schleifen und/oder Trennen, von einem oder mehreren Werkstücken aufweisend zumindest beispielsweise einen Holz-, einen Metall-, einen Kunststoff, einen Gesteinswerkstoff oder Kombinationen aus diesen Werkstoffen.

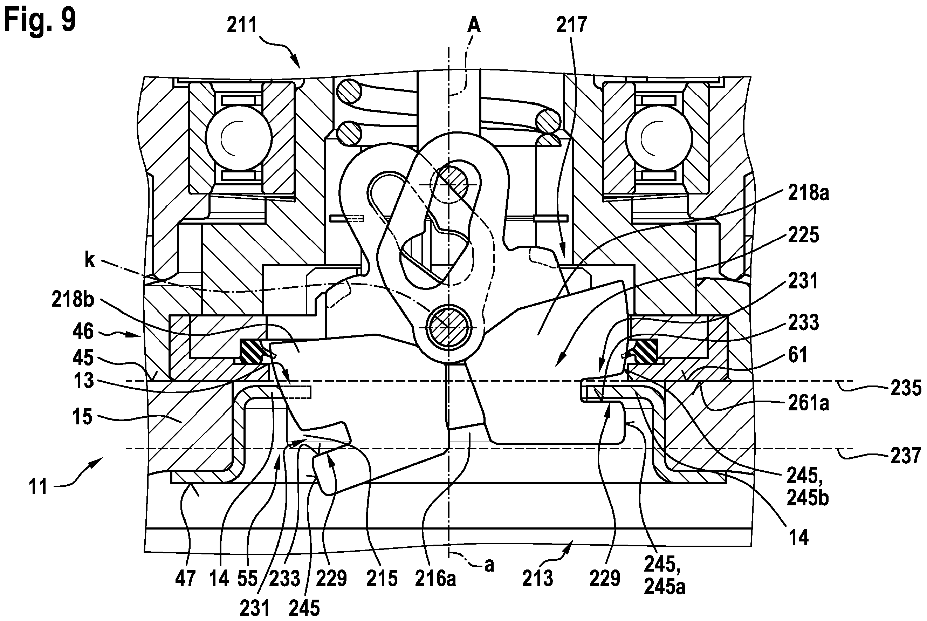

Figur 1 zeigt eine erste Ausführungsform einer nicht erfindungsgemäßen Werkzeugeinrichtung 11 in einer flachen und zumindest im Wesentlichen scheibenförmigen Ausführung. Die Werkzeugeinrichtung 11 weist eine, insbesondere fiktive, Werkzeugdrehachse a und eine Anschlusseinrichtung 13 zur Verbindung der Werkzeugeinrichtung 11 mit einer Werkzeugaufnahmeeirichtung 213 (vgl. Figuren 9 bis 13) einer Handwerkzeugmaschine 211 und einen Arbeitsbereich 15 auf.

Die Werkzeugdrehachse a definiert einen Mittelpunkt und/oder eine Achse der Werkzeugeinrichtung 11, um den sich die Werkzeugeinrichtung 11 im Betrieb mittels der Werkzeugmaschine 211 dreht. Die Anschlusseinrichtung 13 ist in einem radial innenliegenden Bereich der Werkzeugeinrichtung 11 um die Werkzeugdrehachse a angeordnet.

Die Anschlusseinrichtung 13 weist eine einen Materialdurchbruch durch die Werkzeugeinrichtung 11 bildende Ausnehmung 17 auf, welche sich in axialer Richtung der Werkzeugdrehachse a durch eine gesamte Materialstärke t der Anschlusseinrichtung 13 erstreckt. Die Ausnehmung 17 kann dazu vorgesehen sein, eine Mitnahmeeinrichtung 215 und eine Klemmeinrichtung 217 der Werkzeugaufnahmeeinrichtung 213, vollständig zu umgreifen, insbesondere entlang einer Umfangsrichtung der Werkzeugaufnahmeeinrichtung 213 zu umgeben (vgl. Figur 9). Die Ausnehmung 17 umgibt die Werkzeugdrehachse a in zumindest einer Ebene, wie zum Beispiel einer sich orthogonal zu der Werkzeugdrehachse a erstreckenden Orthogonalebene, vollständig.

Die Anschlusseinrichtung 13 ist an der Werkzeugaufnahmeeinrichtung 213 derart befestigbar, dass eine Abtriebsachse A einer Abtriebswelle der Handwerkzeugmaschine 211 und die Werkzeugdrehachse a der Werkzeugeinrichtung 11 im Wesentlichen zusammenfallen.

Die Anschlusseinrichtung 13 weist zumindest einen Klemmflügel 19 auf. Die Anschlusseinrichtung 13 weist vorzugsweise vier Klemmflügel 19 auf, die sich in radialer Richtung zur Werkzeugdrehachse a hin erstrecken und die Ausnehmung 17 der Anschlusseinrichtung 13 in radialer Richtung zumindest abschnittsweise begrenzen. Die Klemmflügel 19 werden im Wesentlichen in radialer Richtung zu der Werkzeugdrehachse a durch jeweils eine erste Begrenzungskante 21, welche auf einem ersten, insbesondere minimalen, Begrenzungskreis 23 um die Werkzeugdrehachse a liegt, begrenzt.

Die Klemmflügel 19 werden, insbesondere im Wesentlichen, in radialer Richtung zu der Werkzeugdrehachse a durch jeweils eine zweite Begrenzungskante 25, welche auf einem zweiten, insbesondere maximalen, Begrenzungskreis 27 um die Werkzeugdrehachse a liegt, begrenzt. Insbesondere ist ein Durchmesser D1 des ersten Begrenzungskreises 23 kleiner als ein Durchmesser D2 des zweiten Begrenzungskreises 27. Bevorzugt begrenzen die ersten Begrenzungskanten 25 und die zweiten Begrenzungskanten 25 der Klemmflügel 19 zumindest abschnittsweise die Ausnehmung 17 in radialer Richtung der Werkzeugdrehachse a. Der erste Begrenzungskreis 23 ist konzentrisch zu dem zweiten Begrenzungskreis 27 um die Werkzeugdrehachse a angeordnet. Der erste Durchmesser D1 der ersten Begrenzungskante 23 ist in etwa 22 mm groß, wodurch die Werkzeugeinrichtung 11 auch auf herkömmliche Handwerkzeugmaschinen, insbesondere Winkelschleifer, passt, sodass eine Rückwärtskompatibilität gewährleistet wird. Alternativ kann der erste Durchmesser D1 der ersten Begrenzungskante 23 von 22 mm abweichen, insbesondere kleiner sein, sodass die Werkzeugeinrichtung 11 auch auf herkömmliche Handwerkzeugmaschinen, insbesondere Winkelschleifer, von kleineren Abmessungen passt.

Die zweite Begrenzungskante 25 kann dazu eingerichtet sein die Werkzeugeinrichtung 11 in radialer Richtung zu zentrieren und zu stützen.

Die erste Begrenzungskante 21 kann entsprechend einem Kreisbogenverlauf des Begrenzungskreises 23 um die Werkzeugdrehachse a gekrümmt sein. Die zweite Begrenzungskante 25 kann entsprechend einem Kreisbogenverlauf des Begrenzungskreises 27 um die Werkzeugdrehachse a gekrümmt sein.

Die Anschlusseinrichtung 13 weist einen Drehmomentaufnahmebereich 40 auf. Der Drehmomentaufnahmebereich 40 weist eine, insbesondere geradlinige oder gekrümmte, Antriebskante 40a und/oder eine, insbesondere ebene oder gekrümmte, Antriebsfläche 40b auf. Dadurch kann der Drehmomentaufnahmebereich 40 der Werkzeugeinrichtung 11 einen Drehmomentübertragungsbereich 219 der Werkzeugaufnahmeeinrichtung 213, insbesondere in Form einer Punkt-, vorzugsweise in Form einer Linien-, bevorzugt in Form einer Flächenberührung, kontaktieren. Der Drehmomentaufnahmebereich 40 ist beabstandet zu der Werkzeugdrehachse a angeordnet.

Der Drehmomentaufnahmebereich 40 der Anschlusseinrichtung 13 ist dazu vorgesehen Antriebskräfte von der Werkzeugmaschine 211 auf die Werkzeugeinrichtung 11 zu übertragen. Der Drehmomentaufnahmebereich 40 ist in axialer Richtung der Werkzeugdrehachse a zwischen der sich durch die gesamte Materialstärk t der Werkzeugeinrichtung 11 erstreckenden Ausnehmung 17 der Werkzeugeinrichtung 11 angeordnet. Die Ausnehmung 17 weist zumindest vier Drehmomentaufnahmebereiche 40 auf, welche zueinander rotationssymmetrisch um die Werkzeugdrehachse a angeordnet sind.

Die Antriebsfläche 40b, insbesondere ein Antriebsflächenbereich der Antriebsfläche 40b, ist, dazu vorgesehen, mit der Werkzeugaufnahmeeinrichtung 213 der Handwerkzeugmaschine 211 eine formschlüssige und/oder kraftschlüssige, insbesondere die Werkzeugeinrichtung 11 rotatorisch betreibbare, Verbindung bereitzustellen. Die Antriebsfläche 40b ist in axialer Richtung der Werkzeugdrehachse a durch zumindest die Antriebskante 40a begrenzt. Zumindest der Antriebsflächenbereich ist eben ausgeführt. Die Antriebsflächen 40b und die Antriebskanten 40a sind angewinkelt, insbesondere entgegen einer Drehrichtung der Werkzeugaufnahmeeinrichtung 213 im Betrieb.

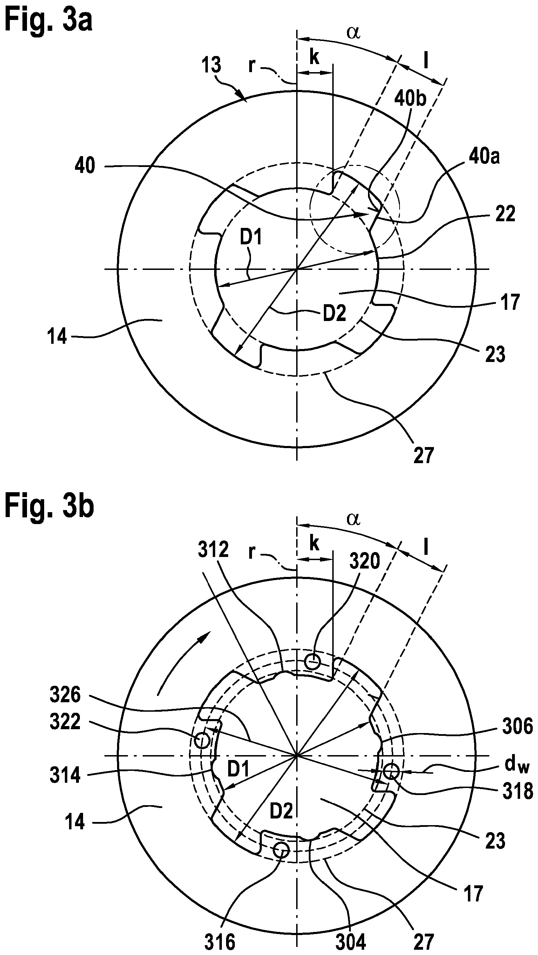

Die Antriebsflächen 40b und die Antriebskanten 40a sind gegenüber einer durch eine axiale Richtung und eine radiale Richtung der Werkzeugdrehachse a aufgespannte Ebene in Umfangsrichtung um die Werkzeugdrehachse in einem Winkel α von bis zu 30°, insbesondere von bis zu 25° angewinkelt, wie in Figur 3a zu sehen ist.

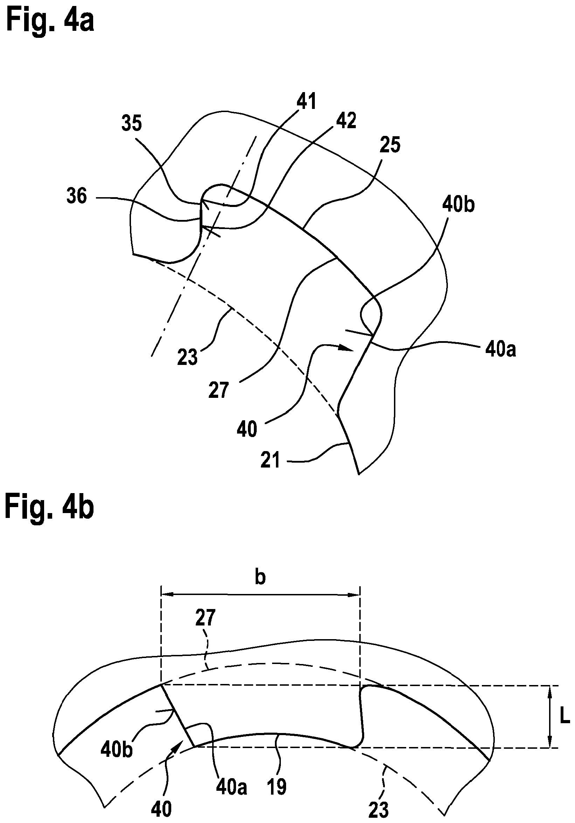

Die erste Begrenzungskante 21 ist in Umfangsrichtung um die Werkzeugdrehachse a durch eine Kodierungskante 35, insbesondere einen Kodierungskantenbereich der Kodierungskante 35, und eine Antriebskante 40a, insbesondere einen Antriebskantenbereich einer Antriebskante 40a, begrenzt, wie beispielsweise in Figur 4a zu sehen ist. Zumindest der Antriebskantenbereich der Antriebskante 40a ist geradlinig ausgebildet. Zumindest der Kodierungskantenbereich der Kodierungskante 35 ist geradlinig ausgebildet. Zumindest die Kodierungskante 35 ist im Wesentlichen gekrümmt ausgebildet.

Die Kodierungskante 35 verbindet die erste Begrenzungskante 21 mit der zweiten Begrenzungskante 25. Die Antriebskante 40a verbindet die erste Begrenzungskante 21 mit einer benachbarten zweiten Begrenzungskante 25. Die Kodierungskante 35 und die Antriebskante 40a erstrecken sich im Wesentlichen in radialer Richtung.

Der erste Begrenzungskreis 23 weist zumindest eine zwischen zwei in Umfangsrichtung benachbarten ersten Begrenzungskanten 21 liegende fiktive Projektionskante 22 auf, welche auf dem ersten Begrenzungskreis 23 liegt und in Umfangsrichtung um die Werkzeugdrehachse a konzentrisch zu dem ersten Begrenzungskreis 23 verläuft. Dabei ist eine Erstreckung in Umfangsrichtung der zumindest einen auf dem ersten Begrenzungskreis 23 liegenden ersten Begrenzungskante 21 um bis zu 10 % größer, als eine Erstreckung der auf dem ersten Begrenzungskreis 23 liegenden benachbarten fiktiven Projektionskante 22. Vorzugsweise ist eine, insbesondere jede, Projektionskante 22 kleiner als eine zu der Projektionskante 22 benachbarte erste Begrenzungskante 21. Hierdurch kann eine besonders vorteilhafte Zentrierung, insbesondere Vorzentrierung bzw. Grobzentrierung, der Werkzeugeinrichtung 11 erreicht werden.

Die Klemmflügel 19 können insbesondere im Wesentlichen in radialer Richtung zu der Werkzeugdrehachse a durch jeweils eine zweite Begrenzungskante 25, welche auf einem zweiten, insbesondere maximalen, Begrenzungskreis 27 um die Werkzeugdrehachse a liegt, begrenzt sein.

Die Begrenzungskanten 21, 25, die Kodierungskanten 35 und die Antriebskanten 40a bilden eine Begrenzungskontur der Ausnehmung 17. Insbesondere bilden die erste Begrenzungskante 21, die Kodierungskante 35 und die Antriebskante 40a eine Kontur des Klemmflügels 19. Die Antriebskante 40a und die Kodierungskante 35 begrenzen die erste Begrenzungskante 21 in Umfangsrichtung um die Werkzeugdrehachse a und schließen an die erste Begrenzungskante 21 an.

Die Antriebskante 40a und/oder die Antriebsfläche 40b ist gegenüber einer durch eine axiale Richtung und eine radiale Richtung zur Werkzeugdrehachse a aufgespannte Ebene in Umfangsrichtung um die Werkzeugdrehachse a unter einem Winkel α um bis zu 30° wie beispielsweise etwa 25° angewinkelt.

Die Antriebsflächen 40b und die Antriebskanten 40a sind angewinkelt, insbesondere entgegen einer Drehrichtung der Werkzeugaufnahmeeinrichtung 213 im Betrieb.

Die Antriebsfläche 40b und die Antriebskanten 40a sind gegenüber einer durch eine axiale Richtung und eine radiale Richtung der Werkzeugdrehachse a aufgespannten Ebene in Umfangsrichtung um die Werkzeugdrehachse a in einem Winkel α von bis zu 30°, wie beispielsweise etwa 25°, angewinkelt, wie in Figur 3a zu sehen ist.

Die Kodierungskante 35 ist zu einer eine Radialachse r bildenden radialen Richtung der Werkzeugdrehachse a im Wesentlichen parallel angeordnet und um bis zu 8 mm, insbesondere um bis zu 6 mm, wie beispielsweise 4,85 mm, beabstandet. Die Kodierungskante 35 ist in Umfangsrichtung der Werkzeugdrehachse a gegenüber der Antriebskante 40a angewinkelt und insbesondere entgegen einer Drehrichtung der Werkzeugaufnahmeeinrichtung 213 im Betrieb der Werkzeugmaschine 211, vorzugsweise um bis zu 40°, angewinkelt. Insbesondere verläuft eine Verlängerung der Kodierungskante 35, insbesondere des Kodierungskantenbereichs, und eine Verlängerung der Antriebskante 40a, insbesondere des Antriebskantenbereichs, eines an die Kodierungskante in Umfangsrichtung angrenzenden Klemmflügels auf derselben Seite zu der Werkzeugdrehachse a, sodass die Werkzeugdrehachse a die Verlängerung der Kodierungskante 35 und die Verlängerung der Antriebskante 40a nicht trennt.

Die Klemmflügel 19 sind in Umfangsrichtung um die Werkzeugdrehachse a symmetrisch angeordnet. Die Klemmflügel 19 sind in Umfangsrichtung um die Werkzeugdrehachse a um 90° versetzt zueinander angeordnet, sodass sich vier Drehstellungen bei einer vollständigen Umdrehung um 360° der Werkzeugeinrichtung 11 um die Werkzeugdrehachse a ergeben. Alternativ können die Klemmflügel 19 in Umfangsrichtung um die Werkzeugdrehachse a um 180° oder 60° versetzt zueinander angeordnet sein, sodass sich zwei oder sechs Drehstellungen bei einer vollständigen Umdrehung um 360° der Werkzeugeinrichtung 11 um die Werkzeugdrehachse a ergeben.

Die Klemmflügel 19 erstrecken sich zumindest im Wesentlichen entlang einer in radialer Richtung der Werkzeugdrehachse a erstreckenden Orthogonalebene. Insbesondere erstreckt sich die Orthogonalebene im Wesentlichen orthogonal zu der Werkzeugdrehachse a.

Der oder die Klemmflügel 19 ist/sind gegenüber jeder durch eine radiale und eine axiale Richtung der Werkzeugdrehachse a aufgespannten Symmetrieebene asymmetrisch, insbesondere nicht spiegelsymmetrisch. Figur 4b zeigt eine Detailansicht eines der Klemmflügel 19. Bevorzugt weist der Klemmflügel 19 eine maximale einer Federrate entsprechende Richtgröße D mit einem Wert aus einem Wertebereich von 10.000 N/mm bis 350.000 N/mm auf. Die maximale einer Federrate entsprechende Richtgröße D des Klemmflügels ergibt sich vorzugsweise aus folgendem Zusammenhang: $F = Dz$, wobei $D = 3EI/L^3$, $z = FL^3/3EI$, $I = bh^3/12$ mit L als, insbesondere gemittelte, maximale Erstreckung des Klemmflügels19 zwischen dem ersten Begrenzungskreis 23 und dem zweiten Begrenzungskreis 27, insbesondere entlang einer zumindest im Wesentlichen parallel zur Radialachse r verlaufenden Richtung, mit b als maximaler tangentialer Erstreckung des Klemmflügels 19 tangential zum zweiten Begrenzungskreise 27 und mit h als maximaler Materialstärke des Klemmflügels 19 entlang der axialen Richtung der Werkzeugdrehachse a. Die maximale Materialstärke h kann vorzugsweise einem Wert aus einem Wertebereich von 0,5 mm bis 1,6 mm entsprechen.

Die Ausnehmung 17 ist derart ausgebildet, dass die Werkzeugeinrichtung 11 lediglich mit einer Seite auf die Werkzeugaufnahmeeinrichtung 213 der Handwerkzeugmaschine 211 aufschiebbar und betreibbar ist.

Insbesondere weist die Begrenzungskontur der Ausnehmung 17 zumindest abschnittsweise eine als die Kodierungskante 35 ausgeführte Kodierung auf, welche dazu eingerichtet ist, die Werkzeugeinrichtung 11 nur von einer zur Aufnahme der Werkzeugeinrichtung 11 mit der Werkzeugaufnahmeeinrichtung 213 der Handwerkzeugmaschine 211 vorgesehenen Seite der Werkzeugeinrichtung 11 mit der Werkzeugaufnahmeeinrichtung 213 formschlüssig in Umfangsrichtung um die Werkzeugdrehachse a verbindbar auszugestalten. Dabei ist die Kodierung derart ausgebildet, dass die Ausnehmung 17 mit einer abgewandten Seite der Werkzeugeinrichtung 11 eine formschlüssige Verbindung der Werkzeugeinrichtung 11 mit der Werkzeugaufnahmeeinrichtung 213 verhindert und somit eine seitenverkehrte Montage der Werkzeugeinrichtung 11 vermeidet. Dadurch kann gemäß dem Prinzip von Poka Yoke eine sofortige Fehlaufdeckung und/oder Fehlervermeidung erreicht werden, sodass ein Bediener ein Feedback darüber erhält, wenn die Werkzeugeinrichtung nicht mit einer zur Aufnahme der Werkzeugaufnahmeeinrichtung 213 vorgesehenen Seite mit der Werkzeugaufnahmeeinrichtung 213 verbunden ist.

Die Kodierung kann dabei durch die die erste Begrenzungskante 21 und die zweite Begrenzungskante 25 verbindende Kodierungskante 35 und/oder durch die Antriebskante 40a der Ausnehmung 17 erfolgen. Insbesondere kann die Kodierung mittels einer Ausrichtung der Kodierungskante 35 der Ausnehmung 17 erfolgen, sodass falls eine Ausrichtung der Kodierungskante 35 nicht symmetrisch bzw. achsensymmetrisch zu einer Antriebskante 40a ausgerichtet ist, sichergestellt ist, dass die Werkzeugeinrichtung 11 mit einer zumindest mit der Kodierungskante 35 und/oder der Antriebskante 40a entsprechenden konjugierten Kontur der Werkzeugaufnahmeeinrichtung 213 nicht beidseitig verbindbar ist.

Unter "einseitig verbindbar" soll in diesem Zusammenhang eine seitenabhängige Kodierung der Anschlusseinrichtung 13 der Werkzeugeinrichtung 11 verstanden werden, welche dazu vorgesehen ist, eine formschlüssige Drehmitnahme der Werkzeugeinrichtung 11 mit der Werkzeugaufnahmeeinrichtung 213 der Handwerkzeugmaschine 211 seitenabhängig zu ermöglichen um eine seitenverkehrte Montage der Werkzeugeinrichtung 11 zu vermeiden.

Der Klemmflügel 19 erstreckt sich zumindest im Wesentlichen entlang einer Orthogonalebene zu der Werkzeugdrehachse a und ist gegenüber jeder durch eine radiale und eine axiale Richtung der Werkzeugdrehachse a aufgespannten Symmetrieebene asymmetrisch, insbesondere nicht spiegelsymmetrisch,. Insbesondere ist die Radialachse r derart angeordnet, dass ein Klemmflügel 19 in Umfangsrichtung um die Werkzeugdrehachse a im Wesentlichen halbiert, insbesondere entlang einer durch eine axiale und eine radiale Richtung aufgespannte Radialebene in zwei annähernd gleich große Hälften geteilt ist. Vorzugsweise bildet die Radialachse r eine Winkelhalbierende, welche eine Erstreckung zumindest eines Klemmflügels 19 in Umfangsrichtung teilt.

Eine Erstreckung zumindest eines der Klemmflügel 19 ist in Umfangsrichtung um die Werkzeugdrehachse a derart ausgebildet, dass der zumindest eine Klemmflügel 19 keine Achssymmetrie aufweist, sodass lediglich eine richtungsabhängige bzw. einseitige Verbindbarkeit der Werkzeugeinrichtung 11 mit der Handwerkzeugmaschine 211 möglich ist.

Die Werkzeugeinrichtung 11 weist eine erste Seitenfläche 45 auf, die in einem befestigten Befestigungszustand zu der Handwerkzeugmaschine 211 gerichtet ist. Die Werkzeugeinrichtung 11 weist eine von der ersten Seitenfläche 45 abgewandte zweite Seitenfläche 47 auf, welche in einem mit der Handwerkzeugmaschine 211 befestigten Befestigungszustand von der Handwerkzeugmaschine 211 weggerichtet ist. Die erste Seitenfläche 45 und die zweite Seitenfläche 47 begrenzen die Werkzeugeinrichtung 11 in axialer Richtung zu der Werkzeugdrehachse a.

Die erste Seitenfläche 45 der Werkzeugeinrichtung 11 weist insbesondere einen radial innenliegenden ersten Seitenflächenbereich 46 auf, welcher dazu vorgesehen ist, eine Anlagefläche zur Auflage auf einer Werkzeugaufnahmeeinrichtung 213 der Werkzeugmaschine 211 zu bilden, wodurch Materialspannungen der Werkzeugeinrichtung 11 in axialer Richtung minimiert werden.

Der Arbeitsbereich 15 ist scheibenförmig und flach ausgeführt. Der Arbeitsbereich 15 ist radial außenliegend und begrenzt die radiale Erstreckung der Werkzeugeinrichtung 11. Der Arbeitsbereich 15 weist mehrere Trennsegmente 31 auf, die dazu vorgesehen sind, ein zu bearbeitendes Werkstück zu schneiden bzw. zu trennen. Der Arbeitsbereich 15 weist mehrere sich radial der Werkzeugdrehachse a erstreckende Materialdurchbrüche 33 auf, welche dazu vorgesehen sind, die Trennsegmente 31 in Umfangsrichtung um die Werkzeugdrehachse a zumindest abschnittsweise zu trennen. Vorzugsweise weisen die Trennsegmente 31 mehrere als Schleifkörper ausgeführte Schneidelemente auf, welche beispielsweise an einer Stirnseite der Werkzeugeinrichtung 11 angeordnet sind und eine Begrenzung der Werkzeugeinrichtung 11 bilden, oder beispielsweise eine nicht weiter dargestellte, eine Schneidkante bildende Zuspitzung.

Die Zuspitzung kann sich in radialer Richtung der Werkzeugdrehachse a zuspitzen und die maximale radiale Erstreckung der Werkzeugeinrichtung 11 begrenzen.

In einer alternativen Ausführungsform kann die Werkzeugeinrichtung 11 als eine Schleifscheibe zur schleifenden Bearbeitung von Werkstücken ausgebildet sein. Dabei kann der Arbeitsbereich 15 mehrere Schleifenelemente, wie beispielsweise Schleifkörner, zum Bearbeiten von Werkstücken aufweisen. In einer weiteren alternativen Ausführungsform kann die Werkzeugeinrichtung 11 als ein Kreissägeblatt zur trennenden Bearbeitung von Werkstücken ausgebildet sein. Dabei kann der Arbeitsbereich 15 mehrere in radialer Richtung der Werkzeugdrehachse a abstehende, nicht weiter dargestellte Schneidzähne zum Schneiden bzw. Trennen von Werkstücken aufweisen.

Dem Fachmann sind dabei mehrere Ausgestaltungen eines Arbeitsbereichs 15 bekannt, welche mit der erfindungsgemäßen Anschlusseinrichtung 13 der Werkzeugeinrichtung 11 verwendet werden können, sodass nicht explizit auf alle möglichen Ausgestaltungen des Arbeitsbereichs 15 eingegangen wird.

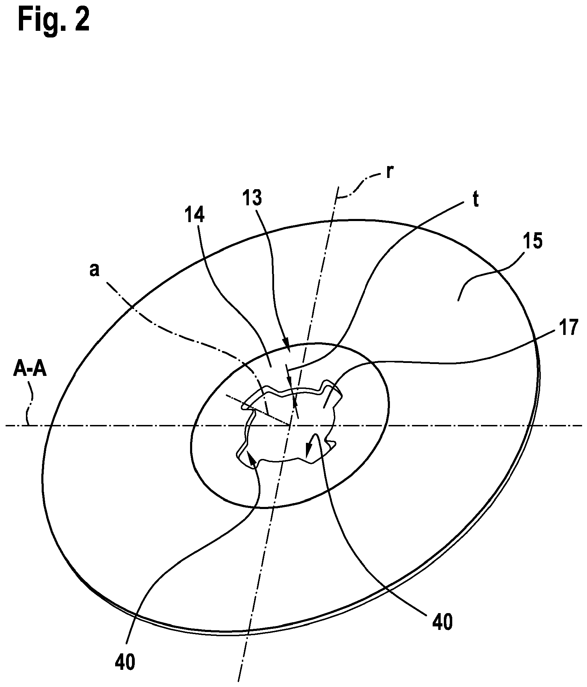

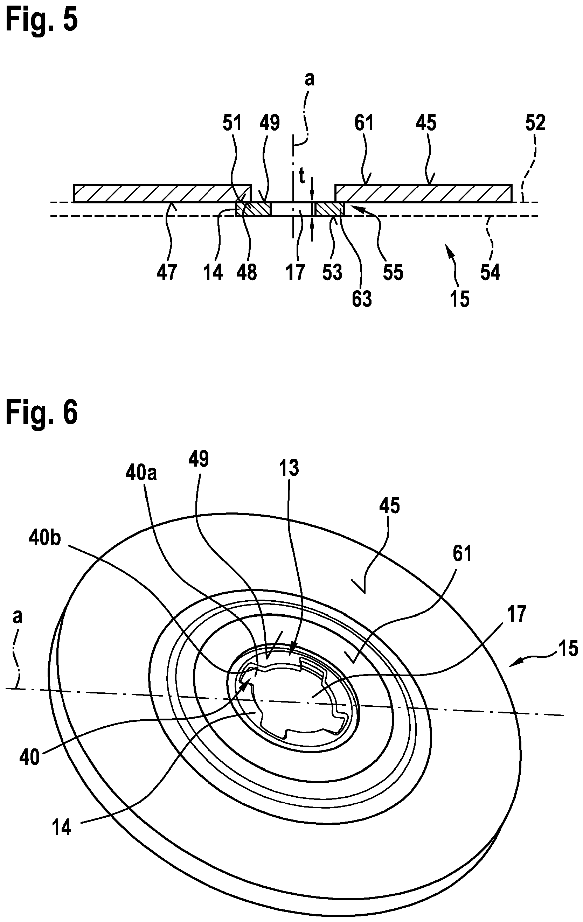

Die Figuren 2 bis 8 zeigen weitere Ausführungsformen der Werkzeugeinrichtung 11. Die Anschlusseinrichtung 13 ist dabei als ein Trägerflansch 14 ausgebildet, welcher mit dem Arbeitsbereich 15 form- und/oder stoffschlüssig verbunden ist. Der Arbeitsbereich 15 umgibt den Trägerflansch 14 in einer Ebene um 360° und weist eine, insbesondere minimale, radiale Erstreckung um die Werkzeugdrehachse a auf, die kleiner ist als eine, insbesondere maximale, radiale Erstreckung des Trägerflansches 14. Der Trägerflansch 14 ist mit dem Arbeitsbereich 15 überlappend verbunden, wie in Figur 5 in einer Querschnittsansicht A-A durch die Werkzeugeinrichtung aus Figur 2 zu sehen ist.

Der Trägerflansch 14 aus Figuren 2 bis 5 ist scheibenförmig und flach ausgeführt. Der Trägerflansch 14 weist eine erste Trägerebene 52 und eine zu der ersten Trägerebene 52 beabstandete zweite Trägerebene 54 auf. Die Trägerebenen 52, 54 sind orthogonal zur Werkzeugdrehachse a angeordnet und bilden eine Materialstärke t der Anschlusseinrichtung 13.

Die erste Trägerebene 52 begrenzt den Trägerflansch 14 auf der zu der Handwerkzeugmaschine 211 hin orientierten Seite in Richtung der Werkzeugdrehachse a, insbesondere betrachtet in einem an der Handwerkzeugmaschine 211 angeordneten Zustand der Werkzeugeinrichtung 11. Die zweite Trägerebene 54 begrenzt die Werkzeugeinrichtung 211 auf der von der Handwerkzeugmaschine 211 abgewandten Seite, insbesondere betrachtet in einem an der Handwerkzeugmaschine 211 angeordneten Zustand der Werkzeugeinrichtung 11.

Der Trägerflansch 14 weist eine erste Anschlussfläche 49 auf, welche in einem mit der Handwerkzeugmaschine 211 verbundenem Befestigungszustand zu der Handwerkzeugmaschine 211 gerichtet ist. Der Trägerflansch 14 weist eine erste Trägerfläche 51 auf, die in einem mit der Handwerkzeugmaschine 211 verbundenem Befestigungszustand zu der Werkzeugmaschine 211 gerichtet ist. Der Trägerflansch 14 weist eine von der ersten Trägerfläche 51 abgewandte zweite Trägerfläche 53 auf. Die erste Trägerfläche 51 und die zweite Trägerfläche 53 begrenzen den Trägerflansch 14 in axialer Richtung der Werkzeugdrehachse a. Die erste Trägerfläche 51 ist in dieser Ausführungsform als ein Flächenbereich der ersten Anschlussfläche 49 ausgebildet, da die erste Anschlussfläche 49 in die erste Trägerfläche 51 übergeht.

Die erste Trägerebene 52 erstreckt sich entlang einer ersten Trägerfläche 51 bzw. der Anschlussfläche 49. Die zweite Trägerebene 54 erstreckt sich entlang einer zweiten Trägerfläche 53. Der Drehmomentaufnahmebereich 40 erstreckt sich in axialer Richtung zwischen den beiden Trägerflächen 51, 53.

Der Trägerflansch 14 ist mit dem Arbeitsbereich 15 überlappend verbunden, sodass eine erste Trägerfläche 51 des Trägerflansches 14 mit einer zweiten Seitenfläche 47 des Arbeitsbereichs 15 form- und/oder stoffschlüssig verbunden ist und einen kreisringförmigen Verbindungsbereich 55 bildet. Vorzugsweise weist die zweite Seitenfläche 47 einen radial innenliegenden zweiten Seitenflächenbereich 48 auf, der dazu vorgesehen ist, mit einem radial außenliegenden ersten Trägerflächenbereich 51 der ersten Trägerfläche 51, insbesondere stoffschlüssig und/oder formschlüssig, verbunden zu werden.

Der Trägerflansch 14 kann mit dem Arbeitsbereich 15 formschlüssig verbunden sein. Es kann eine Nietverbindung oder eine anderweitige Verbindung wie beispielsweise eine Steckverbindung verwendet werden, welche beispielsweise aufgrund von sich in axialer Richtung zur Werkzeugdrehachse a erstreckenden, nicht weiter dargestellten Materialvorsprünge, die beispielsweise mittels einer partiellen Massivverformung des Trägerflansches 14 in axialer Richtung der Werkzeugdrehachse a des Trägerflansches 14 entstehen können, in den Arbeitsbereich 15 hineingesteckt werden, um in den Arbeitsbereich 15 einzudringen und eine rotatorische Kraftwirkung formschlüssig von dem Trägerflansch 14 auf den Arbeitsbereich 15 zu übertragen.

Der Trägerflansch 14 kann ein als Trägerlippe ausgebildetes Sicherungsmittel 63 aufweisen oder als ein Sicherungsmittel 63 ausgebildet sein, sodass das Sicherungsmittel 63 in einem Befestigungszustand mit der Handwerkzeugmaschine 211 derart angeordnet ist, dass der Arbeitsbereich 15 bei einem Bruch bzw. einem unbeabsichtigten Lösen der Verbindung zwischen Trägerflansch 14 und dem Arbeitsbereich 15 durch den Trägerflansch 14 und die Handwerkzeugmaschine 211 gesichert wird, indem der Trägerflansch 14, insbesondere das Sicherungsmittel 63 des Trägerflansches 14, eine Bewegung des Arbeitsbereichs 15 in axialer Richtung der Werkzeugdrehachse a formschlüssig verhindert. Vorzugsweise kann der Arbeitsbereich 15 zwischen dem Trägerflansch 14, insbesondere zwischen dem Sicherungsmittel 63 des Trägerflansches 14, und der Werkzeugaufnahmeeinrichtung 213 bei einer unbeabsichtigt gelösten Verbindung gehalten werden, sodass ein Bediener vor einem herumfliegenden Arbeitsbereich 15 effektiv geschützt ist.

Das Sicherungsmittel 63 ist vorzugsweise durch eine maximale radiale Erstreckung des Trägerflansches 14 ausgestaltet, die eine minimale radiale Erstreckung des Arbeitsbereichs 15 übersteigt, sodass der Trägerflansch 14 den Arbeitsbereich 15 überlappt und somit eine in axialer Richtung der Werkzeugdrehachse a formschlüssige Verbindung des Arbeitsbereichs 15 in einem mit der Werkzeugaufnahmeeinrichtung 213 der Handwerkzeugmaschine 211 eingespannten Zustand ergibt.

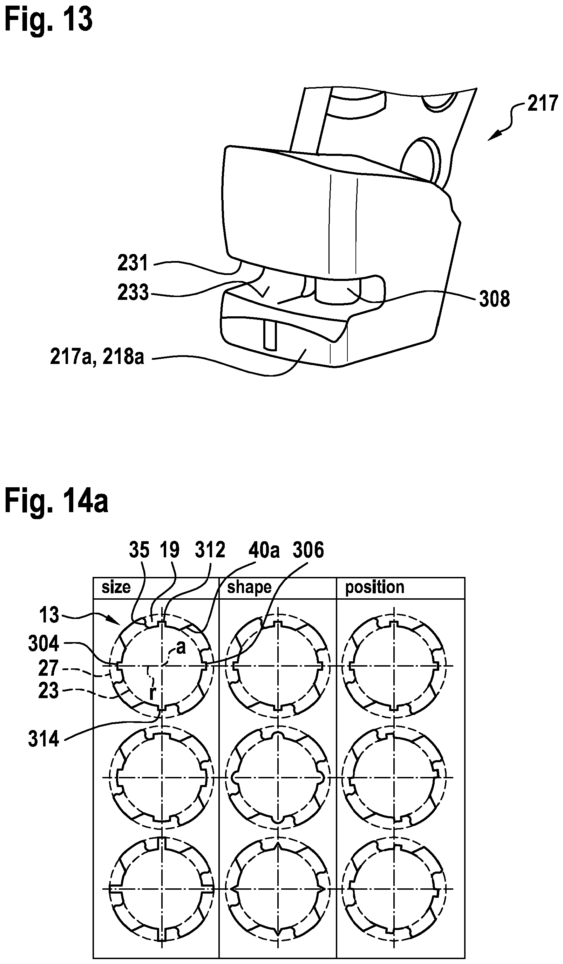

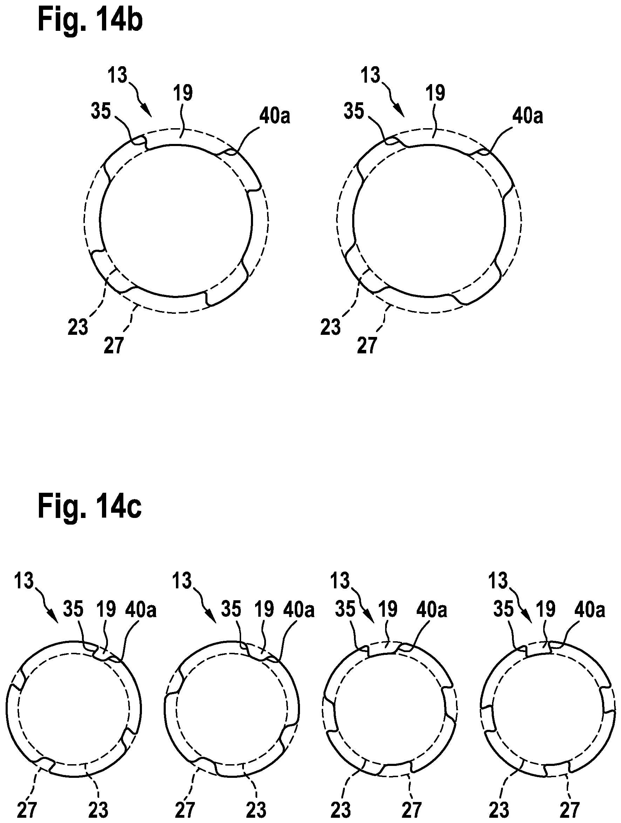

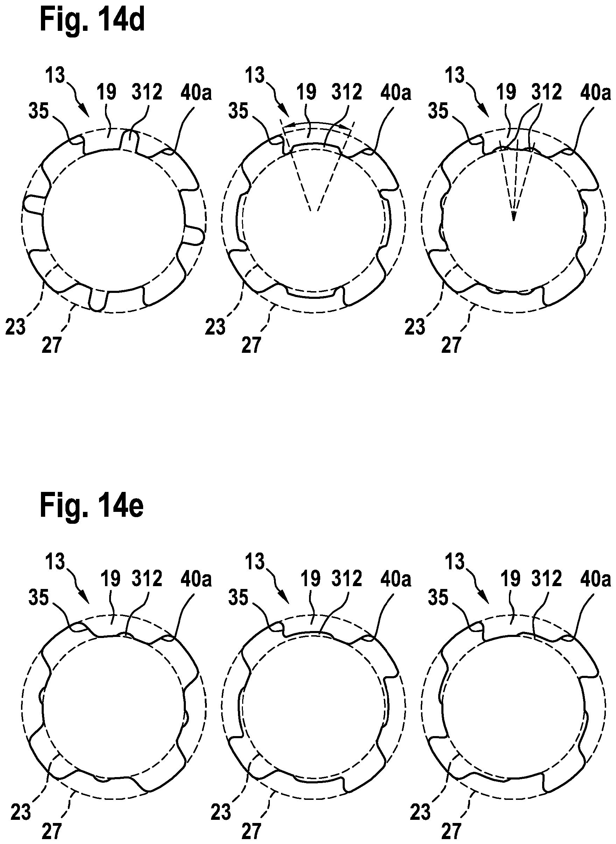

Figur 3b zeigt eine Ausführungsform der erfindungsgemäßen Werkzeugeinrichtung 11 mit zumindest einem Werkzeugmontagekodierelement 304, 306, 312, 314, das dazu vorgesehen ist, in einem an der Werkzeugaufnahmeeinrichtung 213 angeordneten Zustand der Werkzeugeinrichtung 11 mit zumindest einem Montagekodierelement 300, 302, 308, 310 der Werkzeugaufnahmeeinrichtung 213 zusammenzuwirken. Das zumindest eine Werkzeugmontagekodierelement 304, 306, 312, 314 ist an dem zumindest einen Klemmflügel 19 der Anschlusseinrichtung 13 angeordnet. Das zumindest eine Werkzeugmontagekodierelement 304, 306, 312, 314 weist entlang einer Radialachse r eine maximale Erstreckung auf, die maximal einem Maximalabstand zwischen dem ersten Begrenzungskreis 23 und dem zweiten Begrenzungskreis 27 der Anschlusseinrichtung 13 entspricht, wie dies beispielhaft den unterschiedlichen Ausführungsmöglichkeiten der Anschlusseinrichtung 13 in Figur 14 zu entnehmen ist. Das zumindest eine Werkzeugmontagekodierelement 304, 306, 312, 314 ist vorzugsweise in einem Winkelbereich zwischen der Antriebskante 40a und der Kodierungskante 35 der Anschlusseinrichtung 13 an dem Klemmflügel 19 der Anschlusseinrichtung 13 angeordnet.

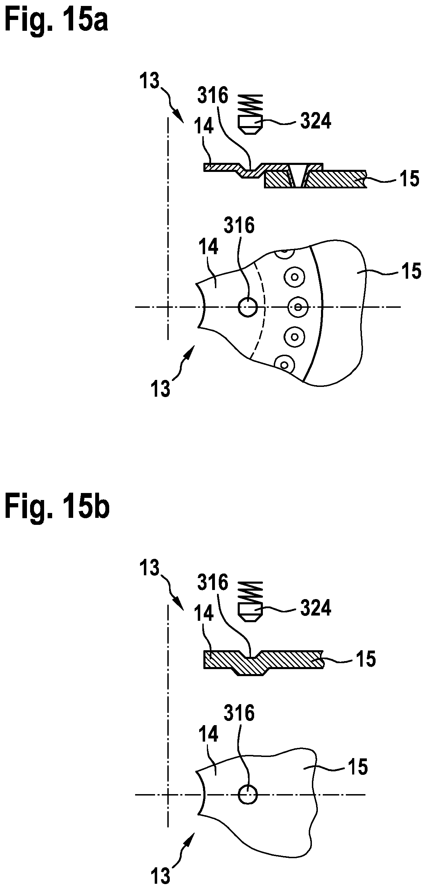

Die in Figur 3b gezeigte Werkzeugeinrichtung 11 umfasst alternativ oder zusätzlich zu dem zumindest einen Werkzeugmontagekodierelement 304, 306, 312, 314 zumindest ein zusätzliches Werkzeugmontagekodierelement 316, 318, 320, 322, das dazu vorgesehen ist, ein an der Werkzeugaufnahmeeinrichtung 213 beweglich gelagertes Sicherungs- und/oder Positionierelement 324 (beispielhaft in Figuren 15a und 15b dargestellt) aufzunehmen. Das beweglich gelagerte Sicherungs- und/oder Positionierelement 324 der Werkzeugaufnahmeeinrichtung 213 kann beispielsweise als federbelasteter Rastbolzen o. dgl. ausgebildet sein. Das zumindest eine zusätzliche Werkzeugmontagekodierelement 316, 318, 320, 322 ist am Klemmflügel 19 angeordnet. Das zumindest eine zusätzliche Werkzeugmontagekodierelement 316, 318, 320, 322 ist als materialfreier Durchbruch im Klemmflügel 19 ausgebildet, nämlich als sich durch eine maximale Materialstärke h des Klemmflügels 19 vollständig hindurch erstreckende Ausnehmung. Es ist jedoch auch denkbar, aber nicht erfindungsgemäß, dass das zusätzliche Werkzeugmontagekodierelement 316, 318, 320, 322 als eine Vertiefung, wie beispielsweise als eine durch ein Prägeverfahren hergestellte Vertiefung, am Klemmflügel 19 und/oder am Trägerflansch 14 ausgebildet ist, wie dies beispielhaft in Figuren 15a und 15b dargestellt ist. Der Trägerflansch 14 kann einteilig mit dem Arbeitsbereich 15 ausgebildet sein oder mittels eines, insbesondere durch ein Prägeverfahren hergestellten, Befestigungselements des Trägerflanschs 14 form- und/oder kraftschlüssig mit dem Arbeitsbereich 15 verbunden sein (vgl. Figuren 15a und 15b).

Ein maximaler Durchmesser $d_w$ des zumindest einen zusätzlichen Werkzeugmontagekodierelements 316, 318, 320, 322 entspricht bevorzugt einem Wert aus einem Wertebereich von 0,8 mm bis 1,6 mm. Das zumindest eine zusätzliche Werkzeugmontagekodierelement 316, 318, 320, 322 ist in einem radialen Bereich zwischen dem ersten Begrenzungskreis 23 und dem zweiten Begrenzungskreis 27 am Klemmflügel 19 angeordnet. Es ist jedoch auch denkbar, aber nicht erfindungsgemäß, dass das zumindest eine zusätzliche Werkzeugmontagekodierelement 316, 318, 320, 322 in einem anderen Bereich der Werkzeugeinrichtung 11 angeordnet ist. Vorteilhafterweise umfasst die Werkzeugeinrichtung 11 eine Vielzahl an zusätzlichen Werkzeugmontagekodierelementen 316, 318, 320, 322, die bevorzugt gleichmäßig verteilt an der Werkzeugeinrichtung 11, insbesondere am Trägerflansch 14 der Werkzeugeinrichtung 11, angeordnet sind. Insbesondere sind die zusätzlichen Werkzeugmontagekodierelemente 316, 318, 320, 322 auf einem gemeinsamen Kreisring 326 angeordnet, der einen maximalen Durchmesser mit einem Wert aus einem Wertebereich von 23 mm bis 28 mm aufweist. Der gemeinsame Kreisring weist vorzugsweise einen auf der Werkzeugdrehachse a angeordneten Mittelpunkt auf.

Figuren 6 bis 8 zeigen eine weitere, nicht erfindungsgemäße Ausführungsform der Werkzeugeinrichtung 11. Der Trägerflansch 14 ist dabei in axialer Richtung gekröpft ausgeführt, sodass der Trägerflansch 14 im Wesentlichen topfförmig ist. Der Trägerflansch 14 weist eine im Wesentlichen zylinderförmige Seitenwand 59 auf, die sich in axialer Richtung erstreckt und den Arbeitsbereich 15 in radialer Richtung zur Werkzeugdrehachse a begrenzt. Die Seitenwand 59 weist einen im Wesentlichen kreisrunden Querschnitt auf. In einer alternativen Ausführungsform kann die Seitenwand 59 einen Querschnitt mit variablen Abständen der Seitenwand 59 zur Werkzeugdrehachse a einer zu dieser Werkzeugdrehachse orthogonalen Ebene aufweisen. Die Seitenwand 59 ist im Wesentlichen konzentrisch zu dem ersten Begrenzungskreis 23 und dem zweiten Begrenzungskreis 27. Die Seitenwand 59 begrenzt eine minimale radiale Erstreckung des Arbeitsbereichs 15 und bewirkt insbesondere eine formschlüssige Verbindung des Arbeitsbereichs 15 in radialer Richtung der Werkzeugdrehachse a. Zusätzlich kann die Seitenwand 59 auch eine kraftschlüssige Verbindung in axialer Richtung der Werkzeugdrehachse a zwischen der Seitenwand 59 und dem Arbeitsbereich 15 bewirken. Die Seitenwand 59 verläuft radial beabstandet von der Werkzeugdrehachse a. Die Seitenwand 59 erstreckt sich zwischen der ersten oberen Trägerebene 52 und der zweiten unteren Trägerebene 54. Die Seitenwand 59 läuft im Wesentlichen radial geschlossen um die Werkzeugdrehachse a um.

Die erste Trägerfläche 51 ist in dieser Ausführungsform gegenüber der ersten Anschlussfläche 49 in radialer Richtung und in axialer Richtung der Werkzeugdrehachse a beabstandet.

Die erste Trägerebene 52 erstreckt sich entlang der ersten Anschlussfläche 49. Die zweite Trägerebene 54 erstreckt sich entlang der zweiten Trägerfläche 53.

Der Drehmomentaufnahmebereich 40 erstreckt sich in axialer Richtung zwischen der ersten Anschlussfläche 49 und einer der ersten Anschlussfläche 49 abgewandten gegenüberliegenden zweiten Anschlussfläche 50 des Trägerflansches 14.

Der Arbeitsbereich 15 ist derart mit dem Trägerflansch 14 verbunden, dass der Arbeitsbereich 15 gegenüber dem Trägerflansch 14 entlang der Werkzeugdrehachse a in einer zu der Werkzeugaufnahmeeinrichtung 213 der Handwerkzeugmaschine 211 zugewandten Richtung in einer Höhe h von bis zu 0,6 mm absteht, wie auch beispielsweise aus Figur 5 hervorgeht. Dabei weist die erste Seitenfläche 45 einen eine Anlagefläche 61 bildenden Seitenflächenbereich auf, der dazu vorgesehen ist auf der Werkzeugaufnahmeeinrichtung 213 einer Handwerkzeugmaschine 211 aufzuliegen. Vorzugsweise steht die Anlagefläche 61 des Arbeitsbereichs 15 in axialer Richtung der Werkzeugdrehachse a gegenüber der Anschlussfläche 49 entsprechend der Höhe h ab.

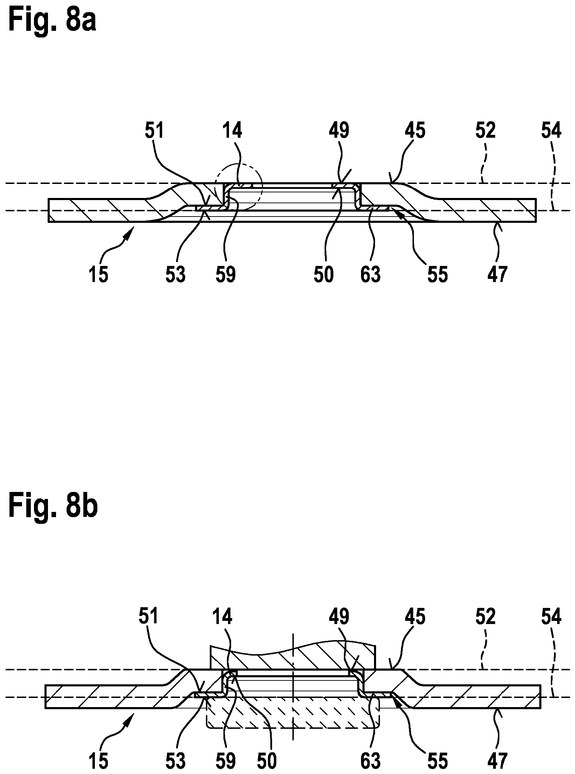

In Figur 8a ist ferner eine Schnittansicht der Werkzeugeinrichtung 11 gezeigt, sodass eine sich von der Seitenwand 59 in radialer Richtung der Werkzeugdrehachse a erstreckende und als Sicherungsmittel 63 ausgebildete Trägerlippe aufweist, welche dazu vorgesehen ist, den Arbeitsbereich 15 mit dem Trägerflansch 14 zu verbinden und den Verbindungsbereich 55 zwischen Arbeitsbereich 15 und Trägerflansch 14 zu bilden.

In Figur 8b ist eine exemplarische Aufnahme der Werkzeugeinrichtung 11 in einer alternativen Werkzeugaufnahmeeinrichtung einer alternativen Handwerkzeugmaschine mit einer Abtriebswelle der alternativen Handwerkzeugmaschine dargestellt, welche an der Anlagefläche 61 des Arbeitsbereichs 55 anliegt, und mit einer schematisch dargestellten Spannmutter, welche an der Trägerlippe 63 des Trägerflansches 14 anliegt und die Werkzeugeinrichtung 11 in axialer Richtung der Werkzeugdrehachse a spannt bzw. befestigt.

Figur 9 zeigt ein Werkzeugmaschinensystem bzw. ein Bearbeitungssystem mit einer um eine Abtriebsachse A rotierend bewegbare Werkzeugaufnahmeeinrichtung 213 einer Handwerkzeugmaschine 211 und einer Werkzeugeinrichtung 11. Die Werkzeugeinrichtung 11 ist so an der Werkzeugaufnahmeeinrichtung 213 aufgenommen, dass die Abtriebsachse A und die, insbesondere fiktive, geometrische Werkzeugdrehachse a zusammenfallen.

Die Werkzeugaufnahmeeinrichtung 213 ist dazu eingerichtet, eine Werkzeugeinrichtung 11 derart an der Handwerkzeugmaschine 211 zu halten, dass die Abtriebsachse A und die Werkzeugdrehachse a im Wesentlichen zusammenfallen.

Vorzugsweise weist die Werkzeugaufnahmeeinrichtung 213 wenigstens eine Mitnahmeeinrichtung 215 und eine relativ zu der Mitnahmeeinrichtung 215 bewegbare Klemmeinrichtung 217 auf.

Die Klemmeinrichtung 217 weist zwei als Hakeneinrichtungen 218 ausgebildete Hakenbacken 218a, 218b auf, welche relativ zueinander um eine Klemmeinrichtungsdrehachse k der Klemmeinrichtung 217 drehbar gelagert sind.

Die Mitnahmeeinrichtung 215 weist zur Übertragung einer Antriebskraft auf die Werkzeugeinrichtung 11 vier im Abstand zu dieser Abtriebsachse A angeordnete Drehmomentübertragungsbereiche 219 auf. Die Drehmomentübertragungsbereiche 219 können jeweils als eine Abtriebsfläche 219b, insbesondere ein Abtriebsflächenbereich, oder als eine Abtriebskante 219a, insbesondere ein Abtriebskantenbereich, ausgebildet sein.

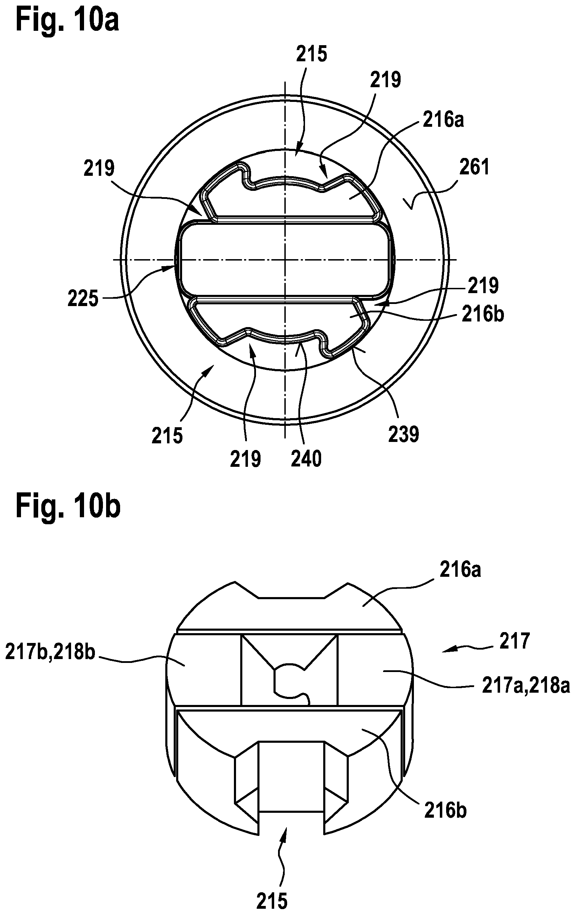

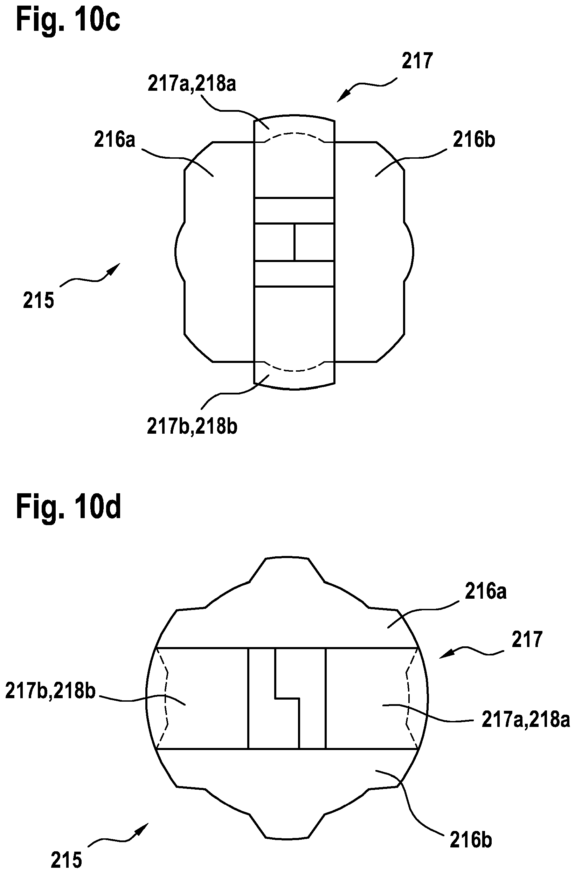

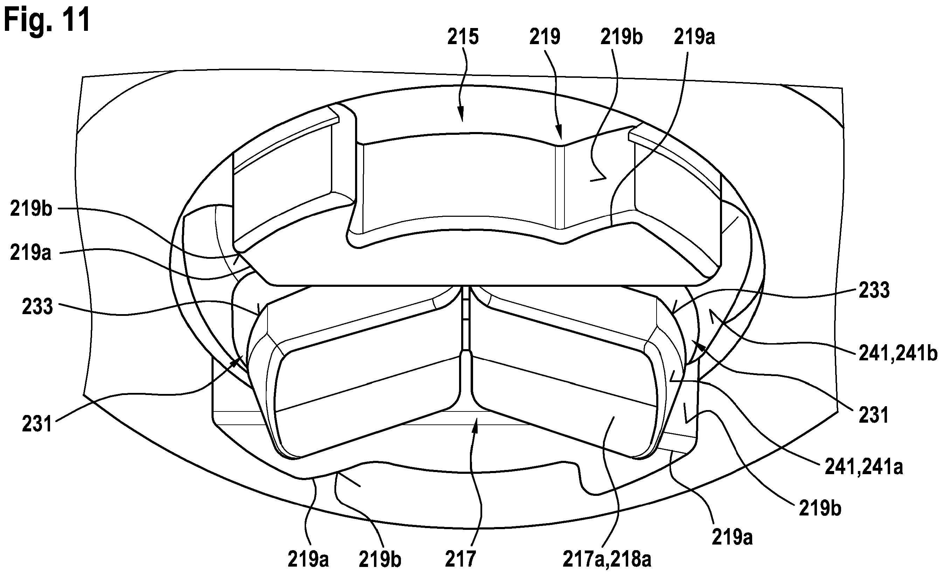

Die Mitnahmeeinrichtung 215 und die in Figuren 10 und 11 gezeigte Klemmeinrichtung 217 sind dazu vorgesehen, durch eine sich durch die gesamte Materialstärke der Werkzeugeinrichtung 11 erstreckende Ausnehmung 17 der Werkzeugeinrichtung 11 hindurchzugreifen und die Werkzeugeinrichtung 11 mittels der im Wesentlichen in radialer Richtung zur Abtriebsachse A beweglichen Hakeneinrichtung 218 mit der Werkzeugaufnahmeeinrichtung 213 zu klemmen.

Die Werkzeugaufnahmeeinrichtung 213 weist eine im Wesentlichen rechteckige Öffnung 225 auf, welche dazu vorgesehen ist, die Hakeneinrichtung 218 aufzunehmen. Die beiden Hakeneinrichtungen 218 weisen jeweils wenigstens eine Klemmfläche 233 zum Übertragen einer zumindest axialen Kraftwirkung auf die Werkzeugeinrichtung 11 auf.

Die Mitnahmeeinrichtung 215 ist durch zwei, insbesondere als Führungsbacken dienende, Mitnahmebacken 216a, 216b ausgebildet, welche dazu vorgesehen sind, die Klemmeinrichtung 217 der Werkzeugaufnahmeeinrichtung 213 in radialer Richtung zu führen, indem eine Bewegung der Klemmeinrichtung 217 in radialer Richtung der Abtriebsachse A um die Klemmeinrichtungsdrehachse k ermöglicht wird und senkrecht zu dieser radialen Richtung begrenzt wird. Die Mitnahmebacken 216a, 216b begrenzen die Öffnung 225 in radialer Richtung der Werkzeugdrehachse a entlang der Längserstreckung der im Wesentlichen rechteckigen Öffnung 225.

Die Mitnahmeeinrichtung 215 weist eine maximale radiale Erstreckung auf, die größer ist als eine maximale radiale Erstreckung der Klemmeinrichtung 217 in einem Befestigungszustand, wodurch die bei einem rotatorischen Antrieb der Werkzeugaufnahmeeinrichtung 213 in radialer Richtung der Abtriebsachse A abstehenden Mitnahmebacken 216a, 216b einen Schutz der Hakenbacken 218a, 218b gewährleistet wird, indem bei einem versehentlichen Kontakt mit einem Werkstück die Hakeneinrichtung 218 durch die Mitnahmeeinrichtung 215 geschützt ist.

Die Hakenbacken 218a, 218b in Figur 9 sind zur besseren Illustration in einem fiktiven Zustand, nämlich in einem Befestigungszustand (rechte Hakenbacke 218a) und in einem Lösezustand (linke Hakenbacke 218b) angeordnet. Dieser fiktive Zustand der Hakenbacken 218a, 218b ist bei der Handwerkzeugmaschine 211 vorzugsweise nicht erreichbar, da beide Hakenbacken 218a, 218b entweder in dem Befestigungszustand oder im Lösezustand angeordnet sind. Vorzugsweise sind die Hakenbacken 218a, 218b synchron bewegbar gelagert.

Die Hakenbacken 218a, 218b stehen gegenüber der Mitnahmeeinrichtung 215 in einem Lösezustand der Klemmeinrichtung 217 in axialer Richtung zur Abtriebsachse A ab, wie beispielsweise an der linken Hakenbacke 218a in Figur 9 zu sehen ist. Zu sehen ist, dass die Hakenbacken 218a, 218b gegenüber der Mitnahmeeinrichtung 215 in einem Lösezustand der Werkzeugaufnahmeeinrichtung 213 in axialer Richtung zur Abtriebsachse A weiter abstehen als in einem Befestigungszustand.

Die Hakenbacken 218a, 218b der Klemmeinrichtung 217 weisen jeweils zumindest eine Umfangsfläche 245 auf, welche eine maximale radiale Erstreckung der Hakenbacken 218a, 218b begrenzt. Die Umfangsflächen 245 der Hakenbacken 218a, 218b sind voneinander weg orientiert. Die Hakenbacken 218a, 218b weisen jeweils eine erste Umfangsfläche 245a und eine zweite Umfangfläche 245b auf, welche in axialer Richtung durch eine Klemmausnehmung 231 der Klemmeinrichtung 217 getrennt sind. Die erste und die zweite Umfangsfläche 245a, 245b begrenzen eine radiale Erstreckung der Klemmausnehmung 231. Die erste Umfangsfläche 245a ist zumindest um die Abtriebsachse A gekrümmt.

Zur deutlicheren Veranschaulichung ist die rechte Hakenbacke 218b aus Figur 9 in einem Befestigungszustand, in dem die Hakenbacke 218b die Werkzeugeinrichtung 11 an der Werkzeugaufnahmeeinrichtung 213 hält, ausgeführt. Die Hakeneinrichtungen 218 sind von der Auflagefläche 261 umgeben.

Der Drehmomentübertragungsbereich 219 der Mitnahmeeinrichtung 217 weist eine Abtriebsfläche 219b, insbesondere einen Abtriebsflächenbereich, und eine Abtriebskante 219a, insbesondere einen Abtriebskantenbereich, auf. Zumindest der Abtriebsflächenbereich der Antriebsfläche 219b kann eben sein. Zumindest der Abtriebskantenbereich der Antriebskante 219a kann geradlinig sein.

Die Abtriebsflächen 219b und die Abtriebskanten 219a sind gegenüber einer durch eine axiale Richtung und eine radiale Richtung der Abtriebsachse A aufgespannte Ebene angewinkelt und insbesondere entgegen einer Drehrichtung der Werkzeugaufnahmeeinrichtung 213 im Betrieb der Handwerkzeugmaschine 211, vorzugsweise um bis zu 30°, angewinkelt. Die Werkzeugaufnahmeeinrichtung 213 weist ferner eine ebene kreisringförmige Auflagefläche 261 auf, welche dazu vorgesehen ist, zumindest die Anlagefläche 61 der Werkzeugeinrichtung 11 in axialer Richtung zu stützen. Die Auflagefläche 261 ist in radialer Richtung beabstandet zu der Hakeneinrichtung 218, insbesondere der Klemmfläche 233 der Klemmeinrichtung 217.

Der Arbeitsbereich 15 der Werkzeugeinrichtung 11 ist derart an der Anschlusseinrichtung 13 angeordnet, dass der Arbeitsbereich 15 in einem Befestigungszustand gegenüber der Anschlusseinrichtung 13 entlang der Werkzeugdrehachse a in einer zu der Werkzeugaufnahmeeinrichtung 213 der Handwerkzeugmaschine 211 zugewandten Richtung absteht. Wobei die Anlagefläche 61 des Arbeitsbereichs 15 in einem Befestigungszustand der Werkzeugeinrichtung 11 mit der Auflagefläche 261 der Handwerkzeugmaschine 211 in Kontakt steht und eine kraftschlüssige Verbindung in Umfangsrichtung der Werkzeugdrehachse a zur Handwerkzeugmaschine 11 bildet.

Die Auflagefläche 261 erstreckt sich in radialer Richtung der Werkzeugdrehachse a zwischen einem ersten radialen Abstand und einem zweiten radialen Abstand, wobei der erste radiale Abstand kleiner ist als der zweite radiale Abstand.

Der Klemmflügel 19 bzw. die erste Begrenzungskante 21 des Klemmflügels 19, der Werkzeugeinrichtung 11 steht in einem Befestigungszustand der Werkzeugeinrichtung 11 mit der Handwerkzeugmaschine 211 gegenüber dem ersten, insbesondere minimalen, radialen Abstand des Auflagefläche 261 in radialer Richtung zur Abtriebsachse A um bis zu 4 mm ab, sodass in diesem Bereich keine Auflagefläche 261 bzw. kein Stützmaterial vorhanden ist und sich den Klemmflügel 19 in axialer Richtung biegen kann.

Die Werkzeugaufnahmeeinrichtung 213, insbesondere die Hakeneinrichtung 218, weist eine Betätigungseinrichtung 229 auf, welche bei einer axialen Betätigung der Betätigungseinrichtung 229 mittels einer Betätigungskraft dazu vorgesehen ist, die Hakeneinrichtung 218 von einem Lösezustand, in dem die Werkzeugeinrichtung 11 von dem Werkzeugaufnahmeeinrichtung 213 abnehmbar oder aufsetzbar ist, in einen Befestigungszustand, in dem die Werkzeugeinrichtung 11 mit der Werkzeugaufnahmeeinrichtung 213 verbunden ist, zu überführen.

Die Hakeneinrichtung 218 weist ferner die radiale Klemmausnehmung 231 auf, die dazu vorgesehen ist, den zumindest einen Klemmflügel 19 aufzunehmen und in einem Befestigungszustand in axialer Richtung der Abtriebsachse A zu klemmen und in einem Lösezustand freizugeben. Die Klemmausnehmung 231 weist die Klemmfläche 233 auf, welche dazu vorgesehen ist, eine Klemmwirkung auf die Werkzeugeinrichtung 11 aufzubringen.

Die Hakeneinrichtungen 218 sind um die, insbesondere zur Abtriebsachse A im Wesentlichen orthogonale, Klemmeinrichtungsdrehachse k derart schwenkbar gelagert, dass mit der Hakeneinrichtung 218 in Abhängigkeit eines gegenüber der Abtriebsachse A geneigten Schwenkwinkels der Hakeneinrichtung 218, insbesondere der Klemmfläche 233 der Hakeneinrichtung 218 Werkzeugeinrichtungen 11 unterschiedlicher Stärken der Anschlusseinrichtungen 13 mittels der Hakeneinrichtung 218 einspannbar sind.

Die Drehmomentübertragungsbereiche 219 der Werkzeugaufnahmeeinrichtung 213 liegen zwischen einer ersten Orthogonalebene 235 und einer zweiten Orthogonalebene 237 der Werkzeugaufnahmeeinrichtung 213, wenn die Werkzeugeinrichtung 11 an der Handwerkzeugmaschine 211 befestigt ist. Die Werkzeugaufnahmeeinrichtung 213 weist zwei Mitnahmebacken 216a, 216b mit jeweils zwei Drehmomentübertragungsbereichen 219 auf, welche zueinander rotationssymmetrisch um die Abtriebsachse A angeordnet sind.

Die erste Orthogonalebene 235 begrenzt die Werkzeugaufnahmeeinrichtung 213 auf der der Handwerkzeugmaschine 211 zugewandten Seite in Richtung der Abtriebsachse A, die zweite Orthogonalebene 237 begrenzt die Werkzeugaufnahmeeinrichtung 213 auf der von der Handwerkzeugmaschine 211 abgewandten Seite.

Die Drehmomentübertragungsbereiche 219 erstrecken sich in radialer Richtung der Abtriebsachse A wenigstens abschnittsweise zwischen einem ersten und einem zweiten radialen Abstand zu der Abtriebsachse A und wobei wenigstens einer dieser Abschnitte zur Drehmomentübertragung 219 von der Handwerkzeugmaschine 211 auf die Werkzeugeinrichtung 11 eingerichtet ist.

Vorzugsweise kontaktiert ein Drehmomentübertragungsbereich 219, bevorzugt mehrere, besonders bevorzugt alle Drehmomentübertragungsbereiche 219 der Handwerkzeugmaschine 211 die Drehmomentaufnahmebereiche 40 der Werkzeugeinrichtung 11 wenigstens abschnittsweise in Form einer Punktberührung, bevorzugt in Form einer Linienberührung und besonders bevorzugt in Form einer Flächenberührung.

Figuren 10b, 10c und 10d zeigen alternative Ausgestaltungen der Werkzeugaufnahmeeinrichtung 213 der Handwerkzeugmaschine 211 zu einer Aufnahme von Werkzeugeinrichtungen, die eine symmetrische Ausgestaltung einer Anschlusseinrichtung aufweisen. Die in den Figuren 10b, 10c und 10d dargestellten Werkzeugaufnahmeeinrichtungen 213 weisen eine zumindest im Wesentlichen analoge Ausgestaltung zu der in den vorhergehenden Figuren dargestellten Werkzeugaufnahmeeinrichtung 213 auf. Im Unterschied zu der in den vorhergehenden Figuren dargestellten Werkzeugaufnahmeeinrichtung 213 weisen die in den Figuren 10b, 10c und 10d dargestellten Werkzeugaufnahmeeinrichtungen 213 eine zu einer sich zumindest im Wesentlichen parallel zur Abtriebsachse A verlaufenden Symmetrieebene symmetrisch ausgebildete Mitnahmeeinrichtung 215 auf. Vorzugsweise verläuft die Abtriebsachse A in der Symmetrieebene, zu der die Mitnahmeeinrichtung 215 symmetrisch ausgebildet ist.

Die in Figur 10b dargestellte Mitnahmeeinrichtung 215 weist vorzugsweise zueinander symmetrisch ausgebildete Mitnahmebacken 216a, 216b auf. Insbesondere sind die Mitnahmebacken 216a, 216b spiegelsymmetrisch zueinander ausgebildet, insbesondere in Bezug auf eine die Abtriebsachse A umfassende Symmetrieebene. Bevorzugt sind die Mitnahmebacken 216a, 216b jeweils zu einer sich zumindest im Wesentlichen senkrecht zur Symmetrieebene erstreckenden Ebene spiegelsymmetrisch ausgebildet. Vorzugsweise ist an jeder der Mitnahmebacken 216a, 216b zumindest eine Einführausnehmung der Mitnahmeeinrichtung 215 angeordnet, in die ein, insbesondere einen rechteckigen Querschnitt aufweisender, Klemmflügel einer nicht näher dargestellten und korrespondierend zur Werkzeugaufnahmeeinrichtung 213 aus Figur 10b ausgebildete Werkzeugeinrichtung einführbar und/oder anordenbar ist. Insbesondere weisen die Mitnahmebacken 216a, 216b jeweils zumindest eine Einführschräge auf. Die Einführschräge ist an der jeweiligen Mitnahmebacke 216a, 216b an einer die Einführausnehmung zumindest teilweise begrenzenden Außenfläche der jeweiligen Mitnahmebacke 216a, 216b angeordnet.

Die in Figur 10c dargestellte Mitnahmeeinrichtung 215 weist vorzugsweise zueinander symmetrisch ausgebildete Mitnahmebacken 216a, 216b auf. Insbesondere sind die Mitnahmebacken 216a, 216b spiegelsymmetrisch zueinander ausgebildet, insbesondere in Bezug auf eine die Abtriebsachse A umfassende Symmetrieebene. Bevorzugt sind die Mitnahmebacken 216a, 216b jeweils zu einer sich zumindest im Wesentlichen senkrecht zur Symmetrieebene erstreckenden Ebene spiegelsymmetrisch ausgebildet. Die Mitnahmebacken 216a, 216b weisen jeweils eine rechteckige Grundform mit zumindest zwei abgeschrägten Kanten auf. An einer die zwei abgeschrägten Kanten miteinander verbindenden Außenseite der jeweiligen Mitnahmebacke 216a, 216b umfassen die Mitnahmebacken 216a, 216b jeweils einen Fortsatz. Der Fortsatz der jeweiligen Mitnahmebacke 216a, 216b ist vorzugsweise kreissegmentförmig ausgebildet. Der Fortsatz der jeweiligen Mitnahmebacke 216a, 216b kann beispielsweise ein Montagekodierelement der in Figur 10c dargestellten Werkzeugaufnahmeeinrichtung 213 bilden. Vorzugsweise weist eine zumindest im Wesentlichen senkrecht zu einer Klemmfläche 233 einer Klemmeinrichtung 217 der in Figur 10c dargestellten Werkzeugaufnahmeeinrichtung 213 verlaufende Innenfläche der Klemmeinrichtung 217 einen kreissegmentförmigen Fortsatz auf. Der Fortsatz der Klemmeinrichtung 217 kann beispielsweise ein Befestigungskodierelement der in Figur 10c dargestellten Werkzeugaufnahmeeinrichtung 213 bilden. Vorzugsweise ist eine Befestigung einer Werkzeugeinrichtung (hier nicht näher dargestellt), die eine zu dem Fortsatz der Klemmeinrichtung 217 unkorrespondierende Ausnehmung aufweist, vorteilhaft mittels der Klemmeinrichtung 217 der in Figur 10c dargestellten Werkzeugaufnahmeeinrichtung 213 weitestgehend vermeidbar. Vorzugsweise bilden Fortsätze der Mitnahmebacken 216a, 216b und Fortsätze der Klemmeinrichtung 217 in einer zumindest im Wesentlichen senkrecht zur Abtriebsachse A verlaufenden Ebene eine vierzählige Umfangskontur der Werkzeugaufnahmeeinrichtung 213.

Die in Figur 10d dargestellte Mitnahmeeinrichtung 215 weist vorzugsweise zueinander symmetrisch ausgebildete Mitnahmebacken 216a, 216b auf. Insbesondere sind die Mitnahmebacken 216a, 216b spiegelsymmetrisch zueinander ausgebildet, insbesondere in Bezug auf eine die Abtriebsachse A umfassende Symmetrieebene. Bevorzugt sind die Mitnahmebacken 216a, 216b jeweils zu einer sich zumindest im Wesentlichen senkrecht zur Symmetrieebene erstreckenden Ebene spiegelsymmetrisch ausgebildet. Bevorzugt weist jede Mitnahmebacke 216a, 216b zumindest zwei korrespondierend zu Klemmflügeln einer nicht näher dargestellten Werkezugeinrichtung ausgebildete Mitnahme- und/oder Kodierungskonturen auf. Vorzugsweise sind die Mitnahme- und/oder Kodierungskonturen als Vertiefungen in einer Außenkontur der Mitnahmeeinrichtung 215 ausgebildet, insbesondere betrachtet in einer zumindest im Wesentlichen senkrecht zur Abtriebsachse A verlaufenden Ebene. Eine Klemmeinrichtung 217 der in Figur 10d dargestellten Werkzeugaufnahmeeinrichtung 213 umfasst eine zumindest im Wesentlichen senkrecht zu einer Klemmfläche 233 der Klemmeinrichtung 217 verlaufende Innenfläche der Klemmeinrichtung 217. Die Innenfläche weist betrachtet in der zumindest im Wesentlichen senkrecht zur Abtriebsachse A verlaufenden Ebene einen zu einer der Mitnahme- und/oder Kodierungskonturen analogen Verlauf auf. Vorzugsweise bilden die Mitnahme- und/oder Kodierungskonturen der Mitnahmebacken 216a, 216b und Innenflächen der Klemmeinrichtung 217 in der zumindest im Wesentlichen senkrecht zur Abtriebsachse A verlaufenden Ebene eine sechszählige Umfangskontur der Werkzeugaufnahmeeinrichtung 213.

Figuren 13 bis 15 zeigen Ansichten von zusätzlichen Details des Werkzeugmaschinensystems, insbesondere der Werkzeugeinrichtung 11 und der Werkzeugaufnahmeeinrichtung 213 der Handwerkzeugmaschine 211, wobei die in Figuren 13 bis 15 zusätzlich gezeigten Details in den vorhergehenden Figuren 1 bis 12 der Übersichtlichkeit halber nicht dargestellt wurden, um eine einfache Lesbarkeit der Figuren 1 bis 12 zu ermöglichen. Die zu den Figuren 13 bis 15 offenbarten Merkmale sind analog auf die Figuren 1 bis 12 übertragbar.

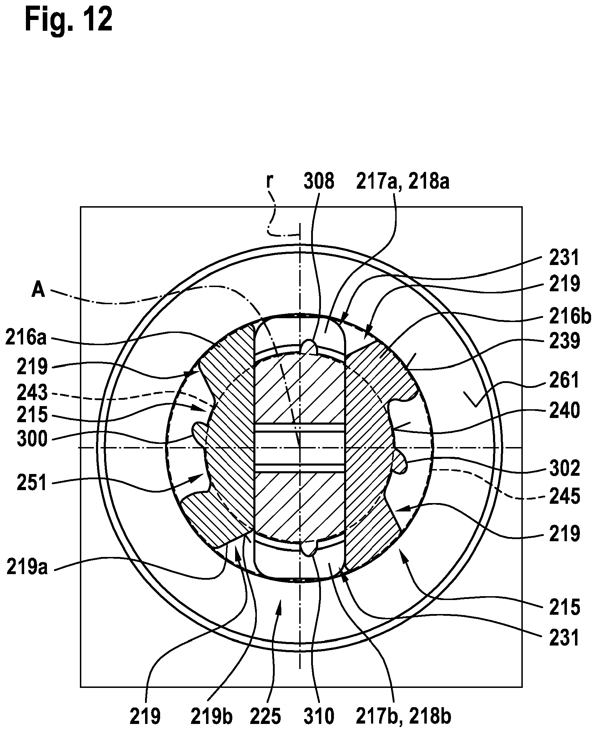

Die Werkzeugeinrichtung 11 umfasst zumindest ein Werkzeugmontagekodierelement 304, 306, 312, 314, das dazu vorgesehen ist, in einem an der Werkzeugaufnahmeeinrichtung 213 angeordneten Zustand der Werkzeugeinrichtung 11 mit zumindest einem Montagekodierelement 300, 302, 308, 310 der Werkzeugaufnahmeeinrichtung 213 (vgl. Figur 12) zusammenzuwirken. Das zumindest eine Werkzeugmontagekodierelement 304, 306, 312, 314 der Werkzeugeinrichtung 11 und das zumindest eine Montagekodierelement 300, 302, 308, 310 der Werkzeugaufnahmeeinrichtung 213 sind insbesondere korrespondierend ausgebildet. Vorzugsweise ist das zumindest eine Montagekodierelement 300, 302, 308, 310 der Werkzeugaufnahmeeinrichtung 213 dazu vorgesehen, eine Anordnung, eine Fixierung oder ein Aufsetzen der Werkzeugeinrichtung 11 an oder auf der Werkzeugaufnahmeeinrichtung 213, insbesondere der Auflagefläche 261, zu kodieren. Bevorzugt ist das zumindest eine Montagekodierelement 300, 302, 308, 310 der Werkzeugaufnahmeeinrichtung 213 dazu vorgesehen, eine Anordnung, eine Fixierung oder ein Aufsetzen der Werkzeugeinrichtung 11 an oder auf der Werkzeugaufnahmeeinrichtung 213, insbesondere der Auflagefläche 261, gemäß einem Schlüssel-Schlüsselloch-Prinzip zu kodieren.

Die Mitnahmeeinrichtung 215 umfasst zumindest ein Montagekodierelement 300, 302, das dazu vorgesehen ist, mit zumindest einem Werkzeugmontagekodierelement 304, 306 der Werkzeugeinrichtung 11 in einem an der Werkzeugaufnahmeeinrichtung 213 angeordneten Zustand der Werkzeugeinrichtung 11 zusammenzuwirken. Das zumindest eine Montagekodierelement 300, 302 der Mitnahmeeinrichtung 215 ist an zumindest einer Mitnahmebacke 216a, 216b der Mitnahmeeinrichtung 215 angeordnet (vgl. Figur 12).

Das zumindest eine Montagekodierelement 300, 302 der Mitnahmeeinrichtung 215 ist als mechanisches Montagekodierelement ausgebildet. Das zumindest eine Montagekodierelement 300, 302 der Mitnahmeeinrichtung 215 ist einteilig mit der Mitnahmebacke 216a, 216b ausgebildet. Das zumindest eine Montagekodierelement 300, 302 der Mitnahmeeinrichtung 215 ist als Fortsatz ausgebildet. Es ist jedoch auch denkbar, dass das zumindest eine Montagekodierelement 300, 302 der Mitnahmeeinrichtung 215 eine andere, einem Fachmann als sinnvoll erscheinende Ausgestaltung aufweist, wie beispielsweise eine Ausgestaltung als Ausnehmung, als Steg o. dgl. Das zumindest eine Montagekodierelement 300, 302 der Mitnahmeeinrichtung 215 erstreckt sich vorzugsweise zumindest entlang einer quer, zumindest im Wesentlichen senkrecht, zur Werkzeugdrehachse a der Werkzeugeinrichtung 11 verlaufenden Richtung. Das zumindest eine Montagekodierelement 300, 302 der Mitnahmeeinrichtung 215 ist angrenzend an eine Innenumfangsfläche 240 der zumindest einen Mitnahmebacke 216a, 216b angeordnet. Das zumindest eine Montagekodierelement 300, 302 der Mitnahmeeinrichtung 215 erstreckt sich ausgehend von der Innenumfangsfläche 240 der zumindest einen Mitnahmebacke 216a, 216b insbesondere in eine von der Werkzeugdrehachse a weg gerichtete Richtung, insbesondere bis maximal zur Umfangsfläche 245, die von dem Außenumfangskreis 245c begrenzt wird (vgl. Figuren 9 und 12).

Das zumindest eine Montagekodierelement 300, 302 der Mitnahmeeinrichtung 215 ist vorzugsweise, betrachtet entlang einer Umfangsrichtung, zwischen der Antriebskante 219a und/oder der Antriebsfläche 219b und einer der Antriebskante 219a und/oder der Antriebsfläche 219b abgewandten Seite der Mitnahmebacke 216a, 216b angeordnet. Vorzugsweise weist das zumindest eine Montagekodierelement 300, 302 der Mitnahmeeinrichtung 215 entlang der Umfangsrichtung eine maximale Erstreckung auf, die kleiner ist als ein Maximalabstand zwischen der Antriebskante 219a und/oder der Antriebsfläche 219b und der Antriebskante 219a und/oder der Antriebsfläche 219b abgewandten Seite der Mitnahmebacke 216a, 216b entlang der Umfangsrichtung. Vorzugsweise ist das zumindest eine Montagekodierelement 300, 302 der Mitnahmeeinrichtung 215 in einem Winkelbereich von weniger als 60° zwischen der Antriebskante 219a und/oder der Antriebsfläche 219b und der der Antriebskante 219a und/oder der Antriebsfläche 219b abgewandten Seite der Mitnahmebacke 216a, 216b angeordnet.

Das zumindest eine Montagekodierelement 300, 302 der Mitnahmeeinrichtung 215 kann jegliche, einem Fachmann als sinnvoll erscheinende Ausgestaltungen aufweisen. Beispielsweise ist es denkbar, dass das zumindest eine Montagekodierelement 300, 302 der Mitnahmeeinrichtung 215, insbesondere betrachtet in der ersten Orthogonalebene 235, einen polygonalen (quadratischen, quaderförmigen, dreieckigen, n-eckigen o. dgl.) oder einen kreisförmigen (halbkreisförmigen, halbkreisförmigen mit einer gewellten Außenumfangslinie o. dgl.) Querschnitt aufweist, wie dies beispielhaft auch aus der Figur 14 ableitbar ist, da das zumindest eine Werkzeugmontagekodierelement 304, 306, 312, 314 der Werkzeugeinrichtung 11 vorzugsweise korrespondierend zu dem zumindest einen Montagekodierelement 300, 302, 308, 310 der Werkzeugaufnahmeeinrichtung 213 ausgebildet ist. Es ist jedoch auch denkbar, dass das zumindest eine Werkzeugmontagekodierelement 304, 306, 312, 314 der Werkzeugeinrichtung 11 und das zumindest eine Montagekodierelement 300, 302, 308, 310 der Werkzeugaufnahmeeinrichtung 213 insbesondere im Hinblick auf eine Größenabmessung unterschiedlich ausgebildet sind. Beispielsweise ist es denkbar, dass das zumindest eine Werkzeugmontagekodierelement 304, 306, 312, 314 der Werkzeugeinrichtung 11 entlang einer Umfangsrichtung oder entlang einer radialen Richtung eine maximale Erstreckung aufweist, die einem Vielfachen einer maximalen Erstreckung des zumindest einen Montagekodierelement 300, 302, 308, 310 der Werkzeugaufnahmeeinrichtung 213 entspricht o. dgl.

Vorzugsweise ist zumindest an jeder Mitnahmebacke 216a, 216b der Mitnahmeeinrichtung 215 zumindest ein Montagekodierelement 300, 302 angeordnet (vgl. Figur 12). Es ist jedoch auch denkbar, dass mehr als ein Montagekodierelement 300, 302 pro Mitnahmebacke 216a, 216b vorgesehen ist, wie beispielsweise zumindest zwei, zumindest drei, zumindest vier oder mehrere Montagekodierelemente 300, 302 pro Mitnahmebacke 216a, 216b. Die an den Mitnahmebacken 216a, 216b angeordneten Montagekodierelemente 300, 302 weisen insbesondere eine zueinander analoge Ausgestaltung auf, wobei auch eine differierende Ausgestaltung der Montagekodierelemente 300, 302 denkbar ist.

Vorzugsweise sind die an den Mitnahmebacken 216a, 216b angeordneten Montagekodierelemente 300, 302 der Mitnahmeeinrichtung 215 bezogen auf eine die Abtriebsachse A umfassende Ebene asymmetrisch an den Mitnahmebacken 216a, 216b angeordnet. Es ist jedoch auch denkbar, dass die den Mitnahmebacken 216a, 216b angeordneten Montagekodierelemente 300, 302 der Mitnahmeeinrichtung 215 bezogen auf eine die Abtriebsachse A umfassende Ebene symmetrisch an den Mitnahmebacken 216a, 216b angeordnet sind, wie dies insbesondere beispielhaft durch die möglichen korrespondierenden Anordnungen der Werkzeugmontagekodierelemente 304, 306, 312, 314 aus der Figur 14 ableitbar ist.

Die Klemmeinrichtung 217, insbesondere zumindest die Hakeneinrichtung 217a, 217b der Klemmeinrichtung 217, umfasst zumindest ein Montagekodierelement 308, 310 (vgl. Figuren 12 und 13). Das Montagekodierelement 308, 310 der Klemmeinrichtung 217 ist vorzugsweise an der Hakenbacke 218a, 218b, insbesondere in der Klemmausnehmung 231 der Hakenbacke 218a, 218b, angeordnet. Bevorzugt umfasst die Klemmeinrichtung 217 eine Vielzahl an Montagekodierelementen 308, 310, insbesondere zumindest zwei. Es ist jedoch auch denkbar, dass die Klemmeinrichtung 217 eine von eins und zwei abweichende Anzahl an Montagekodierelementen 308, 310 aufweist, die an der Hakeneinrichtung 217a, 217b angeordnet sind. Vorzugsweise bildet das zumindest eine Montagekodierelement 308, 310 der Klemmeinrichtung 217 ein Fixierungskodierelement, das dazu vorgesehen ist, eine Befestigung der Werkzeugeinrichtung 11 an der Werkzeugaufnahmeeinrichtung 213 zu kodieren. Bevorzugt ist das zumindest eine Montagekodierelement 308, 310 der Klemmeinrichtung 217 dazu vorgesehen, eine Befestigung der Werkzeugeinrichtung 11 an der Werkzeugaufnahmeeinrichtung 217 gemäß einem Schlüssel-Schlüsselloch-Prinzip zu kodieren.

Vorzugsweise ist das zumindest eine Montagekodierelement 308, 310 der Klemmeinrichtung 217 einteilig mit der Hakenbacke 218a, 218b ausgebildet. Es ist jedoch auch denkbar, dass das zumindest eine Montagekodierelement 308, 310 der Klemmeinrichtung 217 separat zur Hakenbacke 218a, 218b ausgebildet ist und mittels einer, einem Fachmann als sinnvoll erscheinenden Verbindung an der Hakenbacke 218a, 218b fixiert ist. Bevorzugt ist das zumindest eine Montagekodierelement 308, 310 der Klemmeinrichtung 217 an der Klemmfläche 233 der Klemmeinrichtung 217 angeordnet, insbesondere direkt angrenzend an die Klemmfläche 233, die die Klemmausnehmung 231 zumindest teilweise begrenzt. Das zumindest eine Montagekodierelement 308, 310 der Klemmeinrichtung 217 weist insbesondere eine maximale Erstreckung innerhalb der Klemmausnehmung 231 auf, die kleiner ist als eine maximale Erstreckung der Klemmfläche 233 der Klemmeinrichtung 217. Bevorzugt ist das zumindest eine Montagekodierelement 308, 310 der Klemmeinrichtung 217 als Fortsatz ausgebildet. Es ist jedoch auch denkbar, dass das zumindest eine Montagekodierelement 308, 310 der Klemmeinrichtung 217 eine andere, einem Fachmann als sinnvoll erscheinende Ausgestaltung aufweist, wie beispielsweise eine Ausgestaltung als Ausnehmung, als Nut, als Steg, als gezackte Kontur o. dgl. Das zumindest eine Montagekodierelement 308, 310 der Klemmeinrichtung 217 kann symmetrisch oder asymmetrisch zu einer Mittelebene, insbesondere einer Symmetrieebene, der Hakenbacke 218a, 218b an der Hakenbacke 218a, 218b angeordnet sein, wie dies insbesondere beispielhaft durch die möglichen korrespondierenden Anordnungen der Werkzeugmontagekodierelemente 304, 306, 312, 314 aus der Figur 14 ableitbar ist. Vorzugsweise verläuft die Mittelebene, insbesondere die Symmetrieebene, der Hakenbacke 218a, 218b zumindest im Wesentlichen parallel zur Abtriebsachse A und/oder umfasst diese. Denkbar ist auch eine relativ zur Mittelebene, insbesondere zur Symmetrieebene, der Hakenbacke 218a, 218b beabstandete Anordnung des zumindest einen Montagekodierelements 308, 310 der Klemmeinrichtung 217 an der Hakenbacke 218a, 218b.

Die Anschlusseinrichtung 13 der Werkzeugeinrichtung 11 weist das zumindest eine Werkzeugmontagekodierelement 304, 306, 312, 314 auf, das dazu vorgesehen ist, in einem an der Werkzeugaufnahmeeinrichtung 213 angeordneten Zustand der Werkzeugeinrichtung 11 mit dem zumindest einen Montagekodierelement 300, 302, 308, 310 der Werkzeugaufnahmeeinrichtung 213 zusammenzuwirken. Das zumindest eine Werkzeugmontagekodierelement 304, 306, 312, 314 ist an dem zumindest einen Klemmflügel 19 der Anschlusseinrichtung 13 angeordnet (vgl. Figur 14a). Das zumindest eine Werkzeugmontagekodierelement 304, 306, 312, 314 weist entlang einer Radialachse r eine maximale Erstreckung auf, die maximal einem Maximalabstand zwischen dem ersten Begrenzungskreis 23 und dem zweiten Begrenzungskreis 27 der Anschlusseinrichtung 13 entspricht, wie dies beispielhaft den unterschiedlichen Ausführungsmöglichkeiten der Anschlusseinrichtung 13 in Figur 14a zu entnehmen ist. Das zumindest eine Werkzeugmontagekodierelement 304, 306, 312, 314 ist vorzugsweise in einem Winkelbereich zwischen der Antriebskante 40a und der Kodierungskante 35 der Anschlusseinrichtung 13 an dem Klemmflügel 19 der Anschlusseinrichtung 13 angeordnet. Insbesondere weist der Winkelbereich eine maximale Erstreckung von weniger als 90°, bevorzugt von weniger als 60° und besonders bevorzugt von weniger als 40° auf. Das zumindest eine Werkzeugmontagekodierelement 304, 306, 312, 314 weist entlang einer Umfangsrichtung eine maximale Erstreckung auf, die vorzugsweise kleiner ist als ein Maximalabstand zwischen der Antriebskante 40a und der Kodierungskante 35 der Anschlusseinrichtung 13. Insbesondere erstreckt sich das zumindest eine Werkzeugmontagekodierelement 304, 306, 312, 314 entlang einer Umfangsrichtung in einem Bereich zwischen der Antriebskante 40a und der Kodierungskante 35. Der Bereich zwischen der Antriebskante 40a und der Kodierungskante 35 ist bevorzugt innerhalb des ersten Begrenzungskreis 23 und des zweiten Begrenzungskreis 27 der Anschlusseinrichtung 13 angeordnet. Vorzugsweise wird der Bereich von einem Teilbereich eines durch den ersten Begrenzungskreis 23 und des zweiten Begrenzungskreis 27 der Anschlusseinrichtung 13 begrenzenden Kreisrings gebildet, wie dies beispielhaft den verschiedenen Ausführungsmöglichkeiten der tabellarischen Auflistung in Figur 14a zu entnehmen ist, wobei auch durchaus eine Kombination von dargestellten Ausführungsmöglichkeiten denkbar ist. Die Anschlusseinrichtung 13 umfasst vorzugsweise eine Vielzahl an Werkzeugmontagekodierelementen 304, 306, 312, 314, die symmetrisch, insbesondere gemäß einer n-zähligen Drehsymmetrie, oder unsymmetrisch an der Anschlusseinrichtung 13, insbesondere an den Klemmflügeln 19, angeordnet sein können.

Die in Figur 14a dargestellte tabellarische Auflistung von beispielhaften Ausführungsmöglichkeiten der Anschlusseinrichtung 13, insbesondere im Hinblick auf Ausführungsmöglichkeiten der Werkzeugmontagekodierelemente 304, 306, 312, 314, zeigt in einer ersten Spalte der tabellarischen Auflistung mögliche Ausführungen der Werkzeugmontagekodierelemente 304, 306, 312, 314 in Bezug auf eine Größe, insbesondere eine Länge, eine Breite o. dgl. Eine zweite Spalte der tabellarischen Auflistung zeigt mögliche Ausführungen der Werkzeugmontagekodierelemente 304, 306, 312, 314 in Bezug auf eine Form, wie beispielsweise eine polygonale Form, eine kreisförmige Form o. dgl. Eine dritte Spalte der tabellarischen Auflistung zeigt mögliche Ausführungen der Werkzeugmontagekodierelemente 304, 306, 312, 314 in Bezug auf eine Anordnung relativ zur Radialachse r oder zu einer die Werkzeugdrehachse a umfassende Ebene, wie beispielsweise eine symmetrische Anordnung zur Radialachse r, eine einseitige Anordnung zur Radialachse r, eine n-zählige Drehsymmetrie o. dgl. In Figur 14a sind die Bezugszeichen lediglich an einer Ausführungsmöglichkeit vergeben, um eine bessere Lesbarkeit der tabellarischen Auflistung zu ermöglichen. Die in Figur 14a dargestellten Ausführungsmöglichkeiten der Anschlusseinrichtung 13, insbesondere im Hinblick auf Ausführungsmöglichkeiten der Werkzeugmontagekodierelemente 304, 306, 312, 314, soll hier jedoch nicht als beschränkend angesehen werden, da die Werkzeugmontagekodierelemente 304, 306, 312, 314 weitere, einem Fachmann sinnvoll erscheinende Ausführungsmöglichkeiten aufweisen können.

Die nicht erfindungsgemäßen Figuren 14b bis 14c und die erfindungsgemäßen 14d bis 14e zeigen alternative Ausgestaltungen der Anschlusseinrichtung 13, insbesondere im Hinblick auf Ausführungsmöglichkeiten der Klemmflügel 19. In der Figur 14b weist die Anschlusseinrichtung 13 bevorzugt einen den Klemmflügel 19 der Anschlusseinrichtung 13 zumindest teilweise begrenzenden ersten Begrenzungskreis 23 auf, der einen maximalen Durchmesser D1 aufweist, der größer ist als ein maximaler Durchmessers eines Kreises, der Montagekodierelemente 300, 302, 308, 310 der Werkzeugeinrichtung 11 begrenzt, insbesondere in Richtung der Radialachse r begrenzt. Der Klemmflügel 19 ist bevorzugt derart ausgebildet, dass er sich in einem an der Werkzeugaufnahmeeinrichtung 213 angeordneten Zustand der Werkzeugeinrichtung 11 in die Klemmausnehmung 231 der Klemmeinrichtung 217 hinein erstreckt und insbesondere mittels der Klemmfläche 233 an der Werkzeugaufnahmeeinrichtung 213 befestigbar ist. Insbesondere ist der Klemmflügel 19 derart ausgebildet, dass eine den Klemmflügel 19 entlang der Radialachse r begrenzende und vorzugsweise zumindest teilweise auf dem ersten Begrenzungskreis 23 angeordnete Kante des Klemmflügels 19 in einem an der Werkzeugaufnahmeeinrichtung 213 angeordneten Zustand der Werkzeugeinrichtung 11 das Montagekodierelement 300, 302, 308, 310 der Werkzeugeinrichtung 11 gerade noch berührt oder relativ zu dem Montagekodierelement 300, 302, 308, 310 der Werkzeugeinrichtung 11 beabstandet angeordnet ist. Bevorzugt ist der maximale Durchmesser D1 des ersten Begrenzungskreises 23 kleiner als ein maximaler Durchmesser D2 eines zweiten Begrenzungskreises 27 der Anschlusseinrichtung 13. Vorzugsweise ist der maximale Durchmesser D1 des ersten Begrenzungskreises 23 größer oder gleich groß als ein maximaler Durchmessers des Kreises, der die Montagekodierelemente 300, 302, 308, 310 der Werkzeugeinrichtung 11 begrenzt, insbesondere größer oder gleich groß als 24,8 mm. Der Klemmflügel 19 kann in Bezug auf eine die Werkzeugdrehachse a umfassende Symmetrieebene spiegelsymmetrisch ausgebildet sein (vgl. rechte Abbildung in Figur 14b) oder zur Symmetrieebene unsymmetrisch ausgebildet sein (vgl. linke Abbildung in Figur 14b).

In der Figur 14c weist die Anschlusseinrichtung 13 bevorzugt zumindest einen Klemmflügel 19, insbesondere zumindest vier Klemmflügel 19, auf, der/die entlang des ersten Begrenzungskreises 23 und/oder des zweiten Begrenzungskreises 27 eine maximale Erstreckung aufweist/aufweisen, die kleiner ist/sind als eine maximale Erstreckung einer in einem an der Werkzeugaufnahmeeinrichtung 213 angeordneten Zustand der Werkzeugeinrichtung 11 mit zumindest einer Mitnahmebacke 216a, 216b zusammenwirkende und/oder diese zumindest teilweise aufnehmende Ausnehmung der Werkzeugeinrichtung 11. Vorzugsweise weist der Klemmflügel 19 entlang des ersten Begrenzungskreises 23 und/oder des zweiten Begrenzungskreises 27 eine maximale Erstreckung auf, die kleiner ist als ein minimaler Abstand zwischen der Abtriebskante 219a des Drehmomentübertragungsbereichs 219 und des Montagekodierelements 300, 302, 308, 310 der Werkzeugeinrichtung 11. In Figur 14c sind beispielhaft vier Ausführungsmöglichkeiten eines Klemmflügels 19 mit einer geringen maximalen Erstreckung dargestellt.

In der Figur 14d weist die Anschlusseinrichtung 13 bevorzugt zumindest einen Klemmflügel 19, insbesondere zumindest vier Klemmflügel 19, auf, an dem/denen zumindest ein Werkzeugmontagekodierelement 304, 306, 312, 314 der Werkzeugeinrichtung 11 angeordnet ist. In der linken Abbildung der Figur 14d weist das am Klemmflügel 19 angeordnete Werkzeugmontagekodierelement 304, 306, 312, 314 eine maximale Radialerstreckung auf, die kleiner oder gleich groß ist als ein maximaler Radialabstand zwischen dem ersten Begrenzungskreis 23 und dem zweiten Begrenzungskreis 27.

In der mittleren Abbildung der Figur 14d weist das am Klemmflügel 19 angeordnete Werkzeugmontagekodierelement 304, 306, 312, 314 eine maximale Umfangserstreckung auf, die sich entlang eines Winkelbereichs mit einem Wert aus einem Wertebereich von 10° bis 40° erstreckt.

In der rechten Abbildung der Figur 14d weist das am Klemmflügel 19 angeordnete Werkzeugmontagekodierelement 304, 306, 312, 314 eine maximale Umfangserstreckung auf, die kleiner oder gleich groß als 17 mm ist und vorzugsweise innerhalb eines Winkelbereichs mit einem Wert aus einem Wertebereich von 10° bis 40° zwischen zumindest zwei mit einer Mitnahmebacke 216a, 216b zusammenwirkende und/oder diese zumindest teilweise aufnehmenden Ausnehmungen der Werkzeugeinrichtung 11 angeordnet ist.

In der Figur 14e weist die Anschlusseinrichtung 13 bevorzugt zumindest einen Klemmflügel 19, insbesondere zumindest vier Klemmflügel 19, auf, an dem/denen zumindest ein Werkzeugmontagekodierelement 304, 306, 312, 314 der Werkzeugeinrichtung 11 angeordnet ist. In der linken Abbildung der Figur 14e ist/sind der Klemmflügel 19/die Klemmflügel 19 in Bezug auf eine die Werkzeugdrehachse a umfassende Symmetrieebene spiegelsymmetrisch ausgebildet. Die Werkzeugmontagekodierelemente 304, 306, 312, 314 grenzen vorzugsweise beidseitig an eine den Klemmflügel 19 begrenzende Kante an, die vorzugsweise zumindest teilweise entlang des ersten Begrenzungskreises 23 verläuft.

In der mittleren Abbildung der Figur 14e ist/sind der Klemmflügel 19/die Klemmflügel 19 in Bezug auf eine die Werkzeugdrehachse a umfassende Symmetrieebene unsymmetrisch ausgebildet. Die Werkzeugmontagekodierelemente 304, 306, 312, 314 grenzen an einer Seite, insbesondere an einer der Antriebskante 40a zugewandten Seite, der Werkzeugmontagekodierelemente 304, 306, 312, 314 vorzugsweise zumindest an eine den Klemmflügel 19 begrenzende Kante an, die vorzugsweise zumindest teilweise entlang des ersten Begrenzungskreises 23 verläuft. An einer der Kodierungskante 35 zugewandten Seite des jeweiligen Werkzeugmontagekodierelements 304, 306, 312, 314 grenzen die Werkzeugmontagekodierelemente 304, 306, 312, 314 vorzugsweise zumindest an eine den Klemmflügel 19 begrenzende weitere Kante an, die relativ zum ersten Begrenzungskreis 23 in Richtung des zweiten Begrenzungskreis 27 versetzt angeordnet ist.

In der rechten Abbildung der Figur 14e ist/sind der Klemmflügel 19/die Klemmflügel 19 in Bezug auf eine die Werkzeugdrehachse a umfassende Symmetrieebene unsymmetrisch ausgebildet. Die Werkzeugmontagekodierelemente 304, 306, 312, 314 grenzen an einer Seite, insbesondere an einer der Kodierungskante 35 zugewandten Seite, der Werkzeugmontagekodierelemente 304, 306, 312, 314 vorzugsweise zumindest an eine den Klemmflügel 19 begrenzende Kante an, die vorzugsweise zumindest teilweise entlang des ersten Begrenzungskreises 23 verläuft. An einer der Antriebskante 40a zugewandten Seite des jeweiligen Werkzeugmontagekodierelements 304, 306, 312, 314 grenzen die Werkzeugmontagekodierelemente 304, 306, 312, 314 vorzugsweise zumindest an eine den Klemmflügel 19 begrenzende weitere Kante an, die relativ zum ersten Begrenzungskreis 23 in Richtung des zweiten Begrenzungskreis 27 versetzt angeordnet ist.

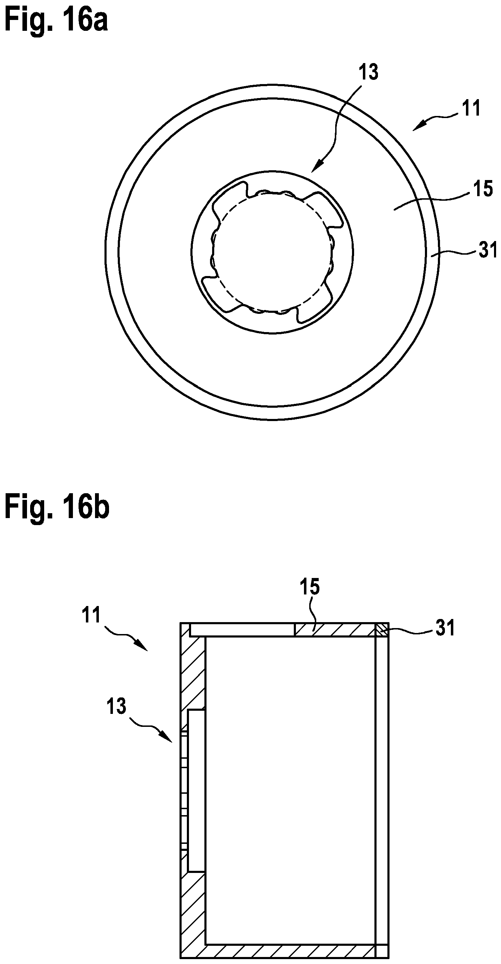

Die erfindungsgemäßen Figuren 16a, 16b und die nicht erfindungsgemäßen Figuren, 17a, 17b, 18a und 18b zeigen mögliche Ausführungen der Werkzeugeinrichtung 11. In den Figuren 16a und 16b ist eine mögliche Ausführung der Werkzeugeinrichtung 11 als Bohrkorne dargestellt. Die Werkzeugeinrichtung 11 umfasst die Anschlusseinrichtung 13 und den an die Anschlusseinrichtung 13 angrenzenden Arbeitsbereich 15. Der Arbeitsbereich 15 ist zylinderförmig, insbesondere kreiszylinderförmig, ausgebildet. Vorzugsweise weist der Arbeitsbereich 15 einen zumindest im Wesentlichen gleichbleibenden maximalen Durchmesser, insbesondere betrachtet entlang der Werkzeugdrehachse a. Bevorzugt weist der Arbeitsbereich 15 entlang der Werkzeugdrehachse a einen konstanten maximalen Abstand relativ zur Werkzeugdrehachse a auf. An einer der Anschlusseinrichtung 13 abgewandten Seite des Arbeitsbereichs 15 umfasst der Arbeitsbereich zumindest ein Trennsegment 31 oder mehrere Trennsegmente 31. Das Trennsegment 31 oder die Trennsegmente 31 ist/sind vorzugsweise als Diamanttrennsegment/e ausgebildet. Es ist jedoch auch denkbar, dass das/die Trennsegment/e 31 eine andere, einem Fachmann als sinnvoll erscheinende Ausgestaltung aufweisen, wie beispielsweise eine Ausgestaltung als Hartmetalltrennsegmente o. dgl.

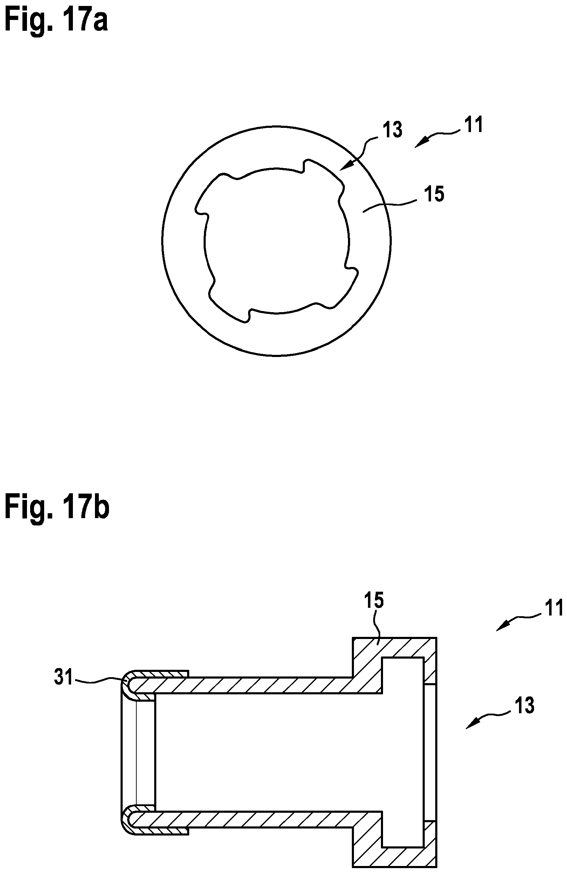

In den Figuren 17a und 17b ist eine mögliche, nicht erfindungsgemäße Ausführung der Werkzeugeinrichtung 11 als Bohrkorne dargestellt. Die in den Figuren 17a und 17b dargestellte Werkzeugeinrichtung 11 weist eine zumindest im Wesentlichen analoge Ausgestaltung zu der in den Figuren 16a und 16b dargestellte Werkzeugeinrichtung 11 auf. Im Unterschied zu der in den Figuren 16a und 16b dargestellten Werkzeugeinrichtung 11 weist die in den Figuren 17a und 17b dargestellte Werkzeugeinrichtung 11 einen Arbeitsbereich 15 auf, der, insbesondere entlang der Werkzeugdrehachse a betrachtet, einen zumindest zwei unterschiedliche maximale Durchmesser aufweist. Vorzugsweise weist der Arbeitsbereich 15 in einem dem Trennsegment 31 zugeordneten Bereich einen kleineren maximalen Durchmesser auf als in einem der Anschlusseinrichtung 13 zugeordneten Bereich. Ein Durchmesserwechsel oder eine Durchmesseränderung kann sprunghaft ausgebildet sein oder kontinuierlich ausgebildet sein. Vorzugsweise ist das Trennsegment 31 als Beschichtung ausgebildet, die Trennpartikel, insbesondere Diamantpartikel, Korundpartikel o. dgl., aufweist. Es ist jedoch auch denkbar, dass das Trennsegment 31 als Hartmetalltrennsegment o. dgl. ausgebildet ist.

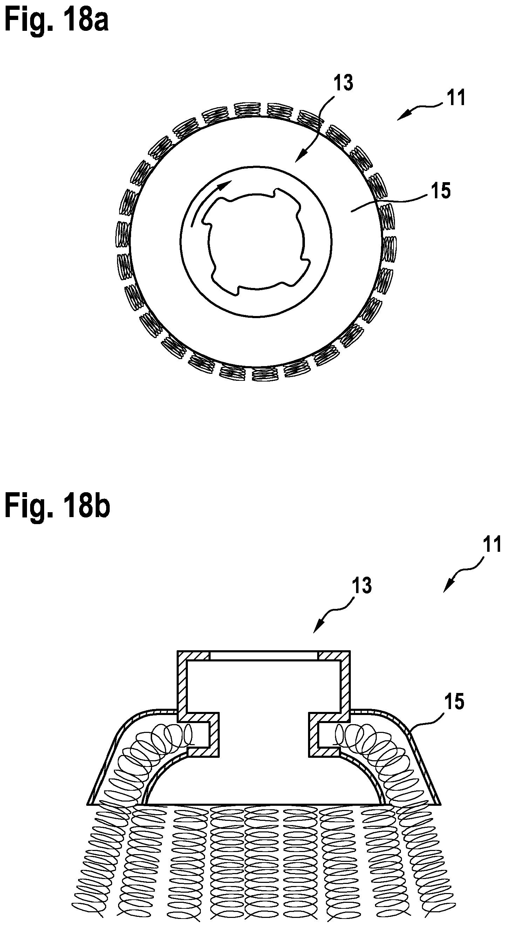

In den Figuren 18a und 18b ist eine mögliche, nicht erfindungsgemäße Ausführung der Werkzeugeinrichtung 11 als topfförmige Bürste dargestellt. Die Werkzeugeinrichtung 11 umfasst vorzugsweise die Anschlusseinrichtung 13 und einen daran angeordneten Arbeitsbereich 15. Der Arbeitsbereich 15 ist topfförmig ausgebildet. Der Arbeitsbereich 15 umfasst vorzugsweise einen Fixierungsbereich, an dem borstenartige Werkstückbearbeitungselemente der Werkzeugeinrichtung 11 fixiert sind. Die Werkstückbearbeitungselemente können als beschichtete Nylonborsten, als beschichtete Metallborsten, als Metallborsten o. dgl. ausgebildet sein. Die Werkstückbearbeitungselemente können gekräuselt oder ungekräuselt ausgebildet sein. Die Werkstückbearbeitungselemente sind vorzugsweise mittels einer kraft-, form- und/oder stoffschlüssigen Verbindung an dem Fixierungsbereich fixiert.

**Patentansprüche**

1. Werkzeugeinrichtung, insbesondere zum Bearbeiten von einem Werkstück, zur Aufnahme in einer die Werkzeugeinrichtung (11) um eine Abtriebswelle einer Werkzeugaufnahmeeinrichtung (213) drehbar betreibbaren Handwerkzeugmaschine (211), aufweisend zumindest eine Anschlusseinrichtung (13), welche mit einer Abtriebswelle der Handwerkzeugmaschine (211) lösbar verbindbar ist,

   wobei die Anschlusseinrichtung (13) an der Werkzeugaufnahmeeinrichtung (213) derart befestigbar ist, dass eine Abtriebsachse (A) der Abtriebswelle und eine Werkzeugdrehachse (a) der Werkzeugeinrichtung (11) im Wesentlichen zusammenfallen,
   wobei die Anschlusseinrichtung (13) eine Ausnehmung (17) aufweist,
   wobei die Anschlusseinrichtung (13) zumindest einen die Ausnehmung (17) in radialer Richtung der Werkzeugdrehachse (a) zumindest teilweise begrenzenden Klemmflügel (19) aufweist, welcher im Wesentlichen in radialer Richtung zu der Werkzeugdrehachse (a) durch eine erste Begrenzungskante (21), welche auf einem ersten, insbesondere minimalen, Begrenzungskreis (23) um die Werkzeugdrehachse (a) liegt, begrenzt ist, wobei sich der Klemmflügel (19) zumindest im Wesentlichen entlang einer Orthogonalebene zu der Werkzeugdrehachse (a) erstreckt, **dadurch gekennzeichnet, dass** der Klemmflügel (19) gegenüber jeder durch eine radiale und eine axiale Richtung der Werkzeugdrehachse (a) aufgespannten Symmetrieebene asymmetrisch, insbesondere nicht spiegelsymmetrisch, ist, wobei die Anschlusseinrichtung (13) zumindest ein Werkzeugmontagekodierelement (304, 306, 312, 314) aufweist, das dazu vorgesehen ist, in einem an der Werkzeugaufnahmeeinrichtung (213) angeordneten Zustand der Werkzeugeinrichtung (11) mit zumindest einem Montagekodierelement (300, 302, 308, 310) der Werkzeugaufnahmeeinrichtung (213) zusammenzuwirken, wobei das zumindest eine Werkzeugmontagekodierelement (304, 306, 312, 314) an dem zumindest einen Klemmflügel (19) der Anschlusseinrichtung (13) angeordnet und als sich durch eine maximale Materialstärke des Klemmflügels (19) vollständig hindurch erstreckende Ausnehmung ausgebildet ist.

2. Werkzeugeinrichtung nach einem der vorhergehenden Ansprüche, **dadurch gekennzeichnet, dass** der Klemmflügel (19) als ein Federflügel ausgebildet ist.

3. Werkzeugeinrichtung nach einem der vorhergehenden Ansprüche, **dadurch gekennzeichnet, dass** der erste Begrenzungskreis (23) zumindest eine zwischen zwei benachbarten ersten Begrenzungskanten (21) liegende fiktive Projektionskante (22) aufweist, welche auf dem ersten Begrenzungskreis (23) liegt und in Umfangsrichtung um die Werkzeugdrehachse (a) konzentrisch zu dem Begrenzungskreis (23) verläuft, wobei die Erstreckung in Umfangsrichtung zumindest einer, insbesondere jeder, Projektionskante (22) kleiner ist als die Erstreckung einer zu der Projektionskante (22) benachbarten ersten Begrenzungskante (21).

4. Werkzeugeinrichtung nach einem der vorhergehenden Ansprüche, **dadurch gekennzeichnet, dass** die Anschlusseinrichtung (13) durch einen, insbesondere scheibenförmigen oder gekröpften, Trägerflansch (14) gebildet ist.

5. Werkzeugeinrichtung nach einem der vorhergehenden Ansprüche, **dadurch gekennzeichnet, dass** der Klemmflügel (19) im Wesentlichen in radialer Richtung zu der Werkzeugdrehachse (a) durch eine zweite Begrenzungskante (25), welche auf einem zweiten, insbesondere maximalen, Begrenzungskreis (27) um die Werkzeugdrehachse (a) liegt, begrenzt ist.

6. Werkzeugeinrichtung nach einem der vorhergehenden Ansprüche, **dadurch gekennzeichnet, dass** die Werkzeugeinrichtung (11) einen mit dem Trägerflansch (14) verbundenen und den Trägerflansch (14) vollständig umgebenden Arbeitsbereich (15) aufweist, welcher dazu eingerichtet ist, auf ein Werkstück oder eine Werkstückanordnung einzuwirken.

7. Werkzeugeinrichtung nach einem der vorhergehenden Ansprüche, **dadurch gekennzeichnet, dass** der Arbeitsbereich (15) derart an dem Trägerflansch (14) angeordnet ist, dass der Arbeitsbereich (15) gegenüber dem Trägerflansch (14) in axialer Richtung der Werkzeugdrehachse (a) in einer zu der Werkzeugaufnahmeeinrichtung (213) der Handwerkzeugmaschine (211) hin orientierten Richtung absteht.

8. Werkzeugeinrichtung nach einem der vorhergehenden Ansprüche, **dadurch gekennzeichnet, dass** die Werkzeugeinrichtung (11) im Bereich des Trägerflansches (14) wenigstens eine erste obere Trägerebene (52) und wenigstens eine zweite untere Trägerebene (54) aufweist, wobei diese Trägerebenen (52, 54) im Wesentlichen senkrecht zu der Werkzeugdrehachse (a) angeordnet sind, wobei diese Trägerebenen (52, 54) voneinander um den Abstand T beabstandet sind und wobei diese Trägerebenen (52, 54) eine axiale Erstreckung des Trägerflansches (14) begrenzen.

9. Werkzeugeinrichtung nach einem der vorhergehenden Ansprüche, **dadurch gekennzeichnet, dass** der zumindest eine Klemmflügel (19) einen Drehmomentaufnahmebereich (40), insbesondere eine Antriebskante (40a) und/oder eine Antriebsfläche (40b), zur Aufnahme eines Drehmoments in Umfangsrichtung um die Werkzeugdrehachse (a) aufweist, wobei sich der Drehmomentaufnahmebereich (40) zumindest abschnittweise durch eine axiale und/oder radiale Erstreckung des Klemmflügels (19) ergibt.

10. Werkzeugeinrichtung nach dem Anspruch 9, **dadurch gekennzeichnet, dass** der Drehmomentaufnahmebereich (40), insbesondere die Antriebskante (40a) und/oder die Antriebsfläche (40b), entgegen einer Drehrichtung der Werkzeugaufnahmeeinrichtung (213) im Betrieb der Handwerkzeugmaschine (211) angewinkelt ist.

11. Werkzeugeinrichtung nach einem der vorhergehenden Ansprüche 9 oder 10, **dadurch gekennzeichnet, dass** der Drehmomentaufnahmebereich (40), insbesondere die Antriebskante (40a) und/oder die Antriebsfläche (40b), gegenüber einer durch eine axiale Richtung und eine radiale Richtung der Werkzeugdrehachse (a) aufgespannten Ebene in Umfangsrichtung um die Werkzeugdrehachse (a), insbesondere um bis zu 50°, vorzugsweise um bis zu 40°, bevorzugt um bis zu 30°, besonders bevorzugt um bis zu 25°, angewinkelt ist.

12. Werkzeugeinrichtung nach einem der vorhergehenden Ansprüche, **dadurch gekennzeichnet, dass** die Anschlusseinrichtung (13) zumindest zwei Klemmflügel (40) mit jeweils einem Drehmomentaufnahmebereich (40), insbesondere einer Antriebskanten (40a) und/oder einer Antriebsflächen (40b), aufweisen, welche zueinander parallel und beabstandet angeordnet sind und, insbesondere dass die beiden Drehmomentaufnahmebereiche (40) symmetrisch um die Werkzeugdrehachse (a) sind.

13. Werkzeugeinrichtung nach einem der vorhergehenden Ansprüche 4 bis 8, **dadurch gekennzeichnet, dass** die Werkzeugeinrichtung (11) einen, insbesondere stoffschlüssig und/oder formschlüssig, mit dem Trägerflansch (14) verbundenen Arbeitsbereich (15) zur Bearbeitung von einem Werkstück aufweist.

14. Werkzeugeinrichtung nach einem der vorhergehenden Ansprüche 4 bis 8 oder 13, **dadurch gekennzeichnet, dass** der Trägerflansch (14) die Ausnehmung (17) in radialer Richtung zur Werkzeugdrehachse (a) begrenzt.

**15.** Werkzeugeinrichtung nach einem der vorhergehenden Ansprüche, **dadurch gekennzeichnet, dass** die Ausnehmung (17) als ein sich durch die gesamte Materialstärke der Werkzeugeinrichtung (11) erstreckender Materialdurchbruch ausgebildet ist, wobei der Materialdurchbruch dazu vorgesehen ist, die Abtriebswelle, insbesondere die Werkzeugaufnahmeeinrichtung (213), vorzugsweise eine Mitnahmeeinrichtung (215) und eine Klemmeinrichtung (217), der Handwerkzeugmaschine (211) vollständig zu umgreifen.

**16.** Werkzeugeinrichtung nach dem Anspruch 5, **dadurch gekennzeichnet, dass** ein Durchmesser D1 des ersten Begrenzungskreis (23) gegenüber einem Durchmesser D2 des zweiten Begrenzungskreises (27) ein Verhältnis in einem Bereich von 50 bis 95%, insbesondere in einem Bereich von 60 bis 90%, vorzugsweise in einem Bereich von 65 bis 85%, bevorzugt in einem Bereich von 70 bis 80%, aufweist.

**17.** Werkzeugeinrichtung nach einem der vorhergehenden Ansprüche, **dadurch gekennzeichnet, dass** die Anschlusseinrichtung (13) eine geradzahlige Mehrzahl von Klemmflügeln (19), insbesondere zumindest zwei oder vier oder sechs Klemmflügel (19), aufweist.

**18.** Werkzeugeinrichtung nach einem der vorhergehenden Ansprüche, **dadurch gekennzeichnet, dass** die Anschlusseinrichtung (13) mehrere Klemmflügel (19) aufweist, die symmetrisch um die Werkzeugdrehachse (a) angeordnet sind.

**19.** Werkzeugeinrichtung nach einem der vorhergehenden Ansprüche, **dadurch gekennzeichnet, dass** der Trägerflansch (14) ein Sicherungsmittel (63) aufweist, welches derart ausgebildet ist, dass der Arbeitsbereich (15) bei einem Bruch der Verbindung zwischen Trägerflansch (14) und dem Arbeitsbereich (15) durch den Trägerflansch (14) und die Handwerkzeugmaschine (211) zwischen dem Trägerflansch und der Werkzeugmaschine gehalten wird.

**20.** Werkzeugeinrichtung nach einem der vorhergehenden Ansprüche, **dadurch gekennzeichnet, dass** das zumindest eine Werkzeugmontagekodierelement (304, 306, 312, 314) entlang einer Radialachse (r) eine maximale Erstreckung aufweist, die maximal einem Maximalabstand zwischen dem ersten Begrenzungskreis (23) und einem zweiten Begrenzungskreis (27) der Anschlusseinrichtung (13) entspricht.

**21.** Werkzeugeinrichtung nach einem der vorhergehenden Ansprüche, **dadurch gekennzeichnet, dass** das zumindest eine Werkzeugmontagekodierelement (304, 306, 312, 314) in einem Winkelbereich zwischen einer Antriebskante (40a) und einer Kodierungskante (35) der Anschlusseinrichtung (13) an dem zumindest einen Klemmflügel (19) der Anschlusseinrichtung (13) angeordnet ist.

**22.** Werkzeugeinrichtung nach einem der vorhergehenden Ansprüche, **gekennzeichnet durch**, einen Arbeitsbereich (15), welcher dazu eingerichtet ist auf ein Werkstück oder eine Werkstückanordnung einzuwirken und die Anschlusseinrichtung (13), welche zur Aufnahme von Antriebskräften eingerichtet ist, und einen Verbindungsbereich (55), welcher dazu eingerichtet ist die Antriebskräfte zu diesem Arbeitsbereich (15) zu übertragen, zur Verwendung mit einer Handwerkzeugmaschine (211).

**23.** Werkzeugmaschinensystem mit einer Werkzeugeinrichtung nach einem der Ansprüche 1 bis 22 und mit zumindest einer Handwerkzeugmaschine (211), die zumindest eine Werkzeugaufnahmeeinrichtung (213) umfasst, **dadurch gekennzeichnet, dass** die Werkzeugeinrichtung (11) zumindest ein Werkzeugmontagekodierelement (304, 306, 312, 314) aufweist, das dazu vorgesehen ist, in einem an der Werkzeugaufnahmeeinrichtung (213) angeordneten Zustand der Werkzeugeinrichtung (11) mit zumindest einem Montagekodierelement (300, 302, 308, 310) der Werkzeugaufnahmeeinrichtung (213) zusammenzuwirken, wobei das zumindest eine Montagekodierelement einer Klemmeinrichtung (217) der Werkzeugaufnahmeeinrichtung (213) dazu vorgesehen ist, eine radial wirkende Befestigung der Klemmeinrichtung zu einer Befestigung der Werkzeugeinrichtung an der Werkzeugaufnahmeeinrichtung zu kodieren.

**24.** Werkzeugmaschinensystem nach Anspruch 23, **dadurch gekennzeichnet, dass** das Montagekodierelement der Klemmeinrichtung dazu vorgesehen ist, bei einem Nichtvorhandensein eines korrespondierenden Montagekodierelements an einer Werkzeugeinrichtung eine Befestigung der Werkzeugeinrichtung an der Werkzeugaufnahmeeinrichtung, insbesondere an der Auflagefläche, mittels der Klemmeinrichtung zumindest weitestgehend zu vermeiden oder zu unterbinden.

**25.** Werkzeugmaschinensystem nach einem der Ansprüche 23 bis 24, **dadurch gekennzeichnet, dass** das Montagekodierelement der Klemmeinrichtung an einer Hakenbacke, insbesondere in einer Klemmausnehmung der Hakenbacke, angeordnet ist.

26. Werkzeugmaschinensystem nach einem der Ansprüche 23 bis 25, **dadurch gekennzeichnet, dass** das Montagekodierelement der Klemmeinrichtung an einer Klemmfläche der Klemmeinrichtung angeordnet ist, insbesondere direkt angrenzend an die Klemmfläche, die die Klemmausnehmung zumindest teilweise begrenzt.

**Claims**

1. Tool device, in particular for machining a workpiece, for receiving in a hand-held power tool (211) that is able to rotatably operate the tool device (11) about an output shaft of a tool receptacle device (213), having at least one connector device (13) which is releasably connectable to an output shaft of the hand-held power tool (211),

   wherein the connector device (13) is able to be fastened to the tool receptacle device (213) in such a manner that an output axis (A) of the output shaft and a tool rotation axis (a) of the tool device (11) substantially coincide;
   wherein the connector device (13) has a clearance (17);
   wherein the connector device (13) has at least one clamping wing (19) which in the radial direction of the tool rotation axis (a) at least partially delimits the clearance (17) and which substantially in the radial direction to the tool rotation axis (a) is delimited by a first delimitation edge (21) which lies on a first, in particular minimum, delimitation circle (23) about the tool rotation axis (a);
   wherein the clamping wing (19) extends at least substantially along a plane orthogonal to the tool rotation axis (a), **characterized in that**
   the clamping wing (19) is asymmetrical, in particular not mirror-symmetrical, in relation to each symmetry plane defined by a radial and an axial direction of the tool rotation axis (a);
   wherein the connector device (13) has at least one tool assembly coding element (304, 306, 312, 314) which in a state of the tool device (11) disposed on the tool receptacle device (213) is provided for interacting with at least one assembly coding element (300, 302, 308, 310) of the tool receptacle device (213);
   wherein the at least one tool assembly coding element (304, 306, 312, 314) is disposed on the at least one clamping wing (19) of the connector device (13) and is configured as a clearance which extends completely through a maximum material thickness of the clamping wing (19).

2. Tool device according to one of the preceding claims, **characterized in that** the clamping wing (19) is configured as a spring wing.

3. Tool device according to one of the preceding claims, **characterized in that** the first delimitation circle (23) has at least one fictitious projection edge (22) which lies between two adjacent first delimitation edges (21) and lies on the first delimitation circle (23) and in the circumferential direction about the tool rotation axis (a) runs so as to be concentric with the delimitation circle (23), wherein the extent in the circumferential direction of at least one, in particular each, projection edge (22) is smaller than the extent of a first delimitation edge (21) adjacent to the projection edge (22).

4. Tool device according to one of the preceding claims, **characterized in that** the connector device (13) is formed by an in particular disc-shaped or offset support flange (14).

5. Tool device according to one of the preceding claims, **characterized in that** the clamping wing (19) substantially in the radial direction to the tool rotation axis (a) is delimited by a second delimitation edge (25) which lies on a second, in particular maximum, delimitation circle (27) about the tool rotation axis (a).

6. Tool device according to one of the preceding claims, **characterized in that** the tool device (11) has an operating region (15) which is connected to the support flange (14) and completely surrounds the support flange (14) and is specified for acting on a workpiece or a workpiece assembly.

7. Tool device according to one of the preceding claims, **characterized in that** the operating region (15) is disposed on the support flange (14) in such a manner that the operating region (15) in relation to the support flange (14) in the axial direction of the tool rotation axis (a) projects in a direction oriented towards the tool receptacle device (213) of the hand-held power tool (211).

8. Tool device according to one of the preceding claims, **characterized in that** the tool device (11) in the region of the support flange (14) has at least one first upper support plane (52) and at least one second lower support plane (54), wherein these support planes (52, 54) are disposed so as to be substantially perpendicular to the tool rotation axis (a), wherein these support planes (52, 54) are mutually spaced apart by the spacing T, and wherein these support planes (52, 54) delimit an axial extent of the support flange (14).

9. Tool device according to one of the preceding claims, **characterized in that** the at least one clamping wing (19) has a torque absorption region (40), in particular a driving edge (40a) and/or a driving face (40b) for absorbing a torque in the circumferential direction about the tool rotation axis (a), wherein the torque absorption region (40) at least in portions results from an axial and/or radial extent of the clamping wing (19).

10. Tool device according to Claim 9, **characterized in that** the torque absorption region (40), in particular the driving edge (40a) and/or the driving face (40b), is/are angled counter to a rotation direction of the tool receptacle device (213) during the operation of the hand-held power tool (211).

11. Tool device according to one of preceding Claims 9 or 10, **characterized in that** the torque absorption region (40), in particular the driving edge (40a) and/or the driving face (40b), in relation to a plane defined by an axial direction and a radial direction of the tool rotation axis (a) in the circumferential direction about the tool axis (a) is/are angled in particular by up to 50°, preferably by up to 40°, preferably by up to 30°, particularly preferably by up to 25°.

12. Tool device according to one of the preceding claims, **characterized in that** the connector device (13) has at least two clamping wings (40) each having a torque absorption region (40), in particular one driving edge (40a) and/or one driving face (40b), the latter being disposed so as to be mutually parallel and spaced apart, and in particular **in that** the two torque absorption regions (40) are symmetrical about the tool rotation axis (a) .

13. Tool device according to one of preceding Claims 4 to 8, **characterized in that** the tool device (11) has an operating region (15) which, for machining a workpiece, is connected to the support flange (14), in particular in a materially integral and/or form-fitting manner.

14. Tool device according to one of preceding Claims 4 to 8, or 13, **characterized in that** the support flange (14) delimits the clearance (17) in the radial direction to the tool rotation axis (a).

15. Tool device according to one of the preceding claims, **characterized in that** the clearance (17) is configured as a material cut-out which extends through the entire material thickness of the tool device (11), wherein the material cut-out is provided for completely encompassing the output shaft, in particular the tool receptacle device (213), preferably an entrainment device (215) and a clamping device (217), of the hand-held power tool (211) .

16. Tool device according to Claim 5, **characterized in that** a diameter D1 of the first delimitation circle (23) in relation to a diameter D2 of the second delimitation circle (27) has a ratio in a range from 50 to 95%, in particular in a range from 60 to 90%, preferably in a range from 65 to 85%, preferably in a range from 70 to 80%.

17. Tool device according to one of the preceding claims, **characterized in that** the connector device (13) has an even plurality of clamping wings (19), in particular at least two or four or six clamping wings (19).

18. Tool device according to one of the preceding claims, **characterized in that** the connector device (13) has a plurality of clamping wings (19) which are disposed symmetrically about the tool rotation axis (a).

19. Tool device according to one of the preceding claims, **characterized in that** the support flange (14) has a securing means (63) which is configured in such a manner that the operating region (15) in the event of broken connection between the support flange (14) and the operating region (15) is held by the support flange (14) and the hand-held power tool (211) so as to be between the support flange and the power tool.

20. Tool device according to one of the preceding claims, **characterized in that** the at least one tool assembly coding element (304, 306, 312, 314) along a radial axis (r) has a maximum extent which corresponds at most to a maximum spacing between the first delimitation circle (23) and a second delimitation circle (27) of the connector device (13) .

21. Tool device according to one of the preceding claims, **characterized in that** the at least one tool assembly coding element (304, 306, 312, 314) on the at least one clamping wing (19) of the connector device (13) is disposed in an angular region between a driving edge (40a) and a coding edge (35) of the connector device (13).

**22.** Tool device according to one of the preceding claims, **characterized by** an operating region (15) which is specified for acting on a workpiece or a workpiece assembly, and the connector device (13) which is specified for absorbing driving forces, and a connection region (55) which is specified for transmitting the driving forces to this operating region (15), for use with a hand-held power tool (211).

**23.** Power tool system having a tool device according to one of Claims 1 to 22, and having at least one hand-held power tool (211) which comprises at least one tool receptacle device (213), **characterized in that** the tool device (11) has at least one tool assembly coding element (304, 306, 312, 314) which in a state of the tool device (11) disposed on the tool receptacle device (213) is provided for interacting with at least one assembly coding element (300, 302, 308, 310) of the tool receptacle device (213), wherein the at least one assembly coding element of a clamping device (217) of the tool receptacle device (213) is provided for coding a radially acting fastening of the clamping device for fastening the tool device to the tool receptacle device.

**24.** Power tool system according to Claim 23, **characterized in that** the assembly coding element of the clamping device in the absence of a corresponding assembly coding element is provided for at least largely avoiding or precluding fastening of the tool device to the tool receptacle device, in particular on the contact face, by means of the clamping device.

**25.** Power tool system according to one of Claims 23 to 24, **characterized in that** the assembly coding element of the clamping device is disposed on a hook jaw, in particular in a clamping clearance of the hook jaw.

**26.** Power tool system according to one of Claims 23 to 25, **characterized in that** the assembly coding element of the clamping device is disposed on a clamping face of the clamping device, in particular so as to be directly adjacent to the clamping face that at least partially delimits the clamping clearance.

**Revendications**

**1.** Dispositif outil, en particulier servant à usiner une pièce, destiné à être reçu dans une machine-outil portative (211) faisant fonctionner le dispositif outil (11) de manière rotative autour d'un arbre de sortie d'un dispositif de réception d'outil (213), présentant au moins un dispositif de raccordement (13), lequel peut être relié de manière amovible à un arbre de sortie de la machine-outil portative (211),

le dispositif de raccordement (13) pouvant être fixé au dispositif de réception d'outil (213) de telle sorte qu'un axe de sortie (A) de l'arbre de sortie et un axe de rotation d'outil (a) du dispositif outil (11) coïncident sensiblement, le dispositif de raccordement (13) présentant un évidement (17), le dispositif de raccordement (13) présentant au moins une ailette de serrage (19) limitant au moins partiellement l'évidement (17) dans la direction radiale de l'axe de rotation d'outil (a), laquelle ailette de serrage est limitée sensiblement dans la direction radiale par rapport à l'axe de rotation d'outil (a) par une première arête de limitation (21), laquelle se situe sur un premier cercle de limitation (23), en particulier minimal, autour de l'axe de rotation d'outil (a), l'ailette de serrage (19) s'étendant au moins sensiblement le long d'un plan orthogonal à l'axe de rotation d'outil (a), **caractérisé en ce que** l'ailette de serrage (19) est asymétrique, en particulier ne présente pas de symétrie miroir, par rapport à chaque plan de symétrie défini par une direction radiale et une direction axiale de l'axe de rotation d'outil (a), le dispositif de raccordement (13) présentant au moins un élément de codage de montage d'outil (304, 306, 312, 314) qui est prévu pour coopérer avec au moins un élément de codage de montage (300, 302, 308, 310) du dispositif de réception d'outil (213) dans un état du dispositif outil (11) disposé sur le dispositif de réception d'outil (213), l'au moins un élément de codage de montage d'outil (304, 306, 312, 314) étant disposé sur l'au moins une ailette de serrage (19) du dispositif de raccordement (13) et étant réalisé sous la forme d'un évidement s'étendant complètement à travers une épaisseur de matériau maximale de l'ailette de serrage (19).

**2.** Dispositif outil selon l'une des revendications précédentes, **caractérisé en ce que** l'ailette de serrage (19) est réalisée sous la forme d'une ailette élastique.

**3.** Dispositif outil selon l'une des revendications précédentes, **caractérisé en ce que** le premier cercle de limitation (23) présente au moins une arête de projection fictive (22) située entre deux premières arêtes de limitation adjacentes (21), laquelle arête de projection se situe sur le premier cercle de limitation (23) et s'étend dans la direction circonférentielle autour de l'axe de rotation d'outil (a) de manière concentrique au cercle de limitation (23), l'étendue dans la direction circonférentielle d'au moins une, en particulier de chaque, arête de projection (22) étant inférieure à l'étendue d'une première arête de limitation (21) adjacente à l'arête de projection (22).

4. Dispositif outil selon l'une des revendications précédentes, **caractérisé en ce que** le dispositif de raccordement (13) est formé par une bride de support (14) en particulier en forme de disque ou coudée.

5. Dispositif outil selon l'une des revendications précédentes, **caractérisé en ce que** l'ailette de serrage (19) est limitée sensiblement dans la direction radiale par rapport à l'axe de rotation d'outil (a) par une deuxième arête de limitation (25), laquelle se situe sur un deuxième cercle de limitation (27), en particulier maximal, autour de l'axe de rotation d'outil (a).

6. Dispositif outil selon l'une des revendications précédentes, **caractérisé en ce que** le dispositif outil (11) présente une région de travail (15) reliée à la bride de support (14) et entourant complètement la bride de support (14), laquelle région de travail est conçue pour agir sur une pièce ou un ensemble de pièce.

7. Dispositif outil selon l'une des revendications précédentes, **caractérisé en ce que** la région de travail (15) est disposée sur la bride de support (14) de telle sorte que la région de travail (15) fait saillie par rapport à la bride de support (14) dans la direction axiale de l'axe de rotation d'outil (a) dans une direction orientée vers le dispositif de réception d'outil (213) de la machine-outil portative (211).

8. Dispositif outil selon l'une des revendications précédentes, **caractérisé en ce que** le dispositif outil (11) présente, dans la région de la bride de support (14), au moins un premier plan de support supérieur (52) et au moins un deuxième plan de support inférieur (54), ces plans de support (52, 54) étant disposés sensiblement perpendiculairement à l'axe de rotation d'outil (a), ces plans de support (52, 54) étant espacés l'un de l'autre de la distance T et ces plans de support (52, 54) délimitant une étendue axiale de la bride de support (14).

9. Dispositif outil selon l'une des revendications précédentes, **caractérisé en ce que** l'au moins une ailette de serrage (19) présente une région de réception de couple (40), en particulier une arête d'entraînement (40a) et/ou une surface d'entraînement (40b), pour la réception d'un couple dans la direction circonférentielle autour de l'axe de rotation d'outil (a), la région de réception de couple (40) résultant, au moins dans certaines parties, d'une étendue axiale et/ou radiale de l'ailette de serrage (19).

10. Dispositif outil selon la revendication 9, **caractérisé en ce que** la région de réception de couple (40), en particulier l'arête d'entraînement (40a) et/ou la surface d'entraînement (40b), sont inclinées en sens inverse d'un sens de rotation du dispositif de réception d'outil (213) lors du fonctionnement de la machine-outil portative (211).

11. Dispositif outil selon l'une des revendications précédentes 9 ou 10, **caractérisé en ce que** la région de réception de couple (40), en particulier l'arête d'entraînement (40a) et/ou la surface d'entraînement (40b), sont inclinées en particulier de jusqu'à 50°, de préférence de jusqu'à 40°, préférentiellement de jusqu'à 30°, de manière particulièrement préférée de jusqu'à 25° par rapport à un plan défini par une direction axiale et une direction radiale de l'axe de rotation d'outil (a) dans la direction circonférentielle autour de l'axe de rotation d'outil (a).

12. Dispositif outil selon l'une des revendications précédentes, **caractérisé en ce que** le dispositif de raccordement (13) présente au moins deux ailettes de serrage (40) comportant respectivement une région de réception de couple (40), en particulier une arête d'entraînement (40a) et/ou une surface d'entraînement (40b), lesquelles sont disposées parallèlement l'une à l'autre et de manière espacée l'une de l'autre, et en particulier **en ce que** les deux régions de réception de couple (40) sont disposées symétriquement autour de l'axe de rotation d'outil (a).

13. Dispositif outil selon l'une des revendications précédentes 4 à 8, **caractérisé en ce que** le dispositif outil (11) présente une région de travail (15) reliée, en particulier par liaison de matière et/ou par complémentarité de forme, à la bride de support (14) pour l'usinage d'une pièce.

14. Dispositif outil selon l'une des revendications précédentes 4 à 8 ou 13, **caractérisé en ce que** la bride de support (14) délimite l'évidement (17) dans la direction radiale par rapport à l'axe de rotation d'outil (a).

15. Dispositif outil selon l'une des revendications précédentes, **caractérisé en ce que** l'évidement (17) est réalisé sous la forme d'une ouverture de matériau s'étendant à travers toute l'épaisseur de matériau du dispositif outil (11), l'ouverture de matériau étant prévue pour entourer complètement l'arbre de sortie, en particulier le dispositif de réception d'outil (213), de préférence un dispositif d'entraînement (215) et un dispositif de serrage (217), de la machine-outil portative (211).

16. Dispositif outil selon la revendication 5, **caractérisée en ce qu'**un diamètre D1 du premier cercle de limitation (23) présente par rapport à un diamètre D2 du deuxième cercle de limitation (27) un rapport dans une plage de 50 à 95%, en particulier dans une plage de 60 à 90%, de préférence dans une plage de 65 à 85%, préférentiellement dans une plage de 70 à 80%.

17. Dispositif outil selon l'une des revendications précédentes, **caractérisé en ce que** le dispositif de raccordement (13) présente un nombre pair d'ailettes de serrage (19), en particulier au moins deux ou quatre ou six ailettes de serrage (19).

18. Dispositif outil selon l'une des revendications précédentes, **caractérisé en ce que** le dispositif de raccordement (13) présente plusieurs ailettes de serrage (19) qui sont disposées symétriquement autour de l'axe de rotation d'outil (a).

19. Dispositif outil selon l'une des revendications précédentes, **caractérisé en ce que** la bride de support (14) présente un moyen de fixation (63), lequel est réalisé de telle sorte que la région de travail (15), lors d'une rupture de la liaison entre la bride de support (14) et la région de travail (15), est retenue par le biais de la bride de support (14) et de la machine-outil portative (211) entre la bride de support et la machine-outil.

20. Dispositif outil selon l'une des revendications précédentes, **caractérisé en ce que** l'au moins un élément de codage de montage d'outil (304, 306, 312, 314) présente, le long d'un axe radial (r), une étendue maximale qui correspond au maximum à une distance maximale entre le premier cercle limitation (23) et un deuxième cercle de limitation (27) du dispositif de raccordement (13).

21. Dispositif outil selon l'une des revendications précédentes, **caractérisé en ce que** l'au moins un élément de codage de montage d'outil (304, 306, 312, 314) est disposé sur l'au moins une ailette de serrage (19) du dispositif de raccordement (13) dans une plage angulaire entre une arête d'entraînement (40a) et une arête de codage (35) du dispositif de raccordement (13).

22. Dispositif outil selon l'une des revendications précédentes, **caractérisé par** une région de travail (15), laquelle est conçue pour agir sur une pièce ou un ensemble de pièce, et le dispositif de raccordement (13), lequel est conçu pour la réception de forces d'entraînement, et une région de liaison (55), laquelle est conçue pour transmettre les forces d'entraînement à cette région de travail (15), pour l'utilisation avec une machine-outil portative (211).

23. Système de machine-outil comportant un dispositif outil selon l'une des revendications 1 à 22 et comportant au moins une machine-outil portative (211) qui comprend au moins un dispositif de réception d'outil (213), **caractérisé en ce que** le dispositif outil (11) présente au moins un élément de codage de montage d'outil (304, 306, 312, 314) qui est prévu pour coopérer avec au moins un élément de codage de montage (300, 302, 308, 310) du dispositif de réception d'outil (213) dans un état du dispositif outil (11) disposé sur le dispositif de réception d'outil (213), l'au moins un élément de codage de montage d'un dispositif de serrage (217) du dispositif de réception d'outil (213) étant prévu pour coder une fixation agissant radialement du dispositif de serrage par rapport à une fixation du dispositif outil sur le dispositif de réception d'outil.

24. Système de machine-outil selon la revendication 23, **caractérisé en ce que** l'élément de codage de montage du dispositif de serrage est prévu pour empêcher ou pour supprimer au moins dans une très large mesure une fixation du dispositif outil sur le dispositif de réception d'outil, en particulier sur la surface d'appui, au moyen du dispositif de serrage en cas d'absence d'un élément de codage de montage correspondant sur un dispositif outil.

25. Système de machine-outil selon l'une des revendications 23 et 24, **caractérisé en ce que** l'élément de codage de montage de serrage est disposé sur une mâchoire à crochet, en particulier dans un évidement de serrage de la mâchoire à crochet.

26. Système de machine-outil selon l'une des revendications 23 à 25, **caractérisé en ce que** l'élément de codage de montage du dispositif de serrage est disposé sur une surface de serrage du dispositif de serrage, en particulier de manière directement adjacente à la surface de serrage qui délimite au moins partiellement l'évidement de serrage.

# Fig. 1

# Fig. 2

## Fig. 3a

13  r  α  k  l

40b

40  40a

D1  22

14  D2  17

23

27

## Fig. 3b

312  r  α  k  l

320

326  D1  306

322

314  dw

316  D2  318

14  23

17

316  304  27

# Fig. 4a

# Fig. 4b

## Fig. 5

## Fig. 6

# Fig. 7

## Fig. 8a

51   14        49    45      52      54

15      53   59      50   63    55    47

## Fig. 8b

51   14        49    45      52      54

15      53   59   50      63    55    47

**Fig. 9**

211  A  217

218a
225
231
233
61
235
261a

k

218b
46
45
13
15
11

245,
245b

237

47  14  55  233  229  215  216a  a  213  229  245,
231  245  245a

14

EP 3 500 411 B1

## Fig. 10a

215
219
216a
261
219
225
219
216b
215
239
219 240

## Fig. 10b

216a
217
217b,218b
217a,218a
216b
215

# Fig. 10c

217a,218a

217

216a

216b

215

217b,218b

# Fig. 10d

216a

217

217b,218b

217a,218a

216b

215

**Fig. 11**

215    219    219b    219a

219b

219a

233

231

233

241,241b

231

241,241a

219b

219a    219b    217    217a,218a    219a

EP 3 500 411 B1

# Fig. 12

r   308   217a, 218a

231
219
216b
239
261
240
302
245
219
215
231

A

216a
219
243
215
300

251

219a

219   219b   225   310   217b, 218b

# Fig. 13

# Fig. 14a

## Fig. 14b

## Fig. 14c

## Fig. 14d

## Fig. 14e

# Fig. 15a

# Fig. 15b

## Fig. 16a

## Fig. 16b

**Fig. 17a**

**Fig. 17b**

# Fig. 18a

# Fig. 18b

**IN DER BESCHREIBUNG AUFGEFÜHRTE DOKUMENTE**

**In der Beschreibung aufgeführte Patentdokumente**

- DE 29605728 U1
- EP 1745889 A